Europäisches Patentamt

European Patent Office

Office européen des brevets

(19)

(11) Publication number: 0 397 934
A1

## (12) EUROPEAN PATENT APPLICATION

(21) Application number: 89304877.7

(22) Date of filing: 15.05.89

(51) Int. Cl.5: H04L 1/24, H04L 12/26

(43) Date of publication of application:
22.11.90 Bulletin 90/47

(84) Designated Contracting States:
DE FR GB IT

(71) Applicant: Hewlett-Packard Limited
Nine Mile Ride
Wokingham, Berkshire RG11 3LL(GB)

(72) Inventor: Grieve, David William
9 Pentland Terrace Edinburgh EH10 6EY
Scotland(GB)
Inventor: McElroy, John Joseph
22 West Harbour Road Charlestown
Fife KY11 4ET Scotland(GB)
Inventor: Marton, Virgil Nicolae
14 Woodlands Park Lower Swainswick
Bath BA1 7BQ(GB)

(74) Representative: Squibbs, Robert Francis et al
Hewlett-Packard Limited Nine Mile Ride
Wokingham Berkshire RG11 3LL(GB)

(54) Bit stream machine.

(57) A bit-stream machine is provided for transmitting and/or receiving a bit stream having a hierarchical format structure in which a plurality of single-level formats, each composed of a plurality of fields made up of one or more bits, interdepend in the manner of a tree-structured hierarchy of multiple levels with each lower-level format in that hierarchy specifying the structure of a corresponding field of a higher level format of the hierarchy. The bit-stream machine comprises a bus (11), a plurality of bit-processing devices (40 to 46) operative to source/sink bits to/from the bus (11), and an orchestrator (13) for orchestrating the operation of the bit-processing devices (40 to 46) in accordance with a format program that represents a predetermined hierarchical format to be transmitted or received. The format program includes bit-processing instructions which correspond to respective leaf fields of the hierarchical format. The orchestrator (11) comprises sequencer means (16) for stepping through the bit-processing instructions in the appropriate order and enabling corresponding ones of the bit-processing devices, and bit control means (17) for synchronising the processing of bits by the enabled devices.

FIG 4

## BIT STREAM MACHINE

### FIELD OF THE INVENTION

The present invention relates to a bit-stream machine for transmitting/receiving a bit stream having a hierarchical format structure in which a plurality of single-level formats, each composed of a plurality of fields made up of one or more bits, inter-depend in the manner of a tree-structured hierarchy of multiple levels with each lower-level format in that hierarchy specifying the structure of a corresponding field of a higher-level format of the hierarchy.

### BACKGROUND

Bit streams having cyclically-repeated field structures or formats occur in many situations in the telecommunications and computer fields. Thus, for example, data is transmitted over digital trunk circuits in highly defined frame structures while data passing to and from a storage disc or tape will generally also be formatted in some manner.

Although the present invention has general application to the transmission and/or reception of bit streams, it is envisaged that its most important area of application will be in the test and measurement field. In this field, it is often necessary to simulate structured bit streams in order to carry out tests on operational equipment designed to handle such streams. A typical test would involve the operations of (a) transmitting a bit stream of given structure and content, including generating this stream, (b) passing the bit stream through the equipment, circuit or system under test, and (c) receiving the bit stream including identifying the stream structure and comparing data contained in the received stream with the data known to have been transmitted in order to determine the bit error rate for the item under test.

One example of existing apparatus for transmitting/receiving a bit stream is disclosed in German Patent specification DE-A1-3601605 (Wandel & Goltemann GmbH). This latter specification describes a simulator for a digital video signal for measuring bit errors on digital transmission channels. The simulated bit stream has a cyclically-repeated frame the duration of which corresponds to that of a video frame and whose structure is characterised by 625 time slots corresponding in number to the number of lines in a video frame. Each time slot can hold 4400 bits of data. The first time slot contains a 64-bit synchronisation word while the time slots corresponding to lines 25 to 312 and lines 338 to 625 each contain a 4400 bit portion of a PRBS (pseudo-random binary sequence). In order to generate the required bit stream, a synchronisation-word store and a PRBS generator are activated as needed for which purpose various clock-pulse counters and decoders are provided. In other words, dedicated hardware circuitry is provided that is wired together to produce the required bit stream and that stream only. There is no scope for modifying either the structure or contents of the simulated bit stream. It is therefore necessary to prepare individual hardware designs for each different bit stream required which is both time consuming and expensive.

The structure or format of the bit stream described in the above-referenced German patent specification is relatively simple. In the field of telecommunications, very much more complex formats exist. For example, at the DS2 level of the North American digital multiplex hierarchy, the overall cyclically-repeated structure, known as an M-Frame, is made up of four sub-frames each of which is composed of 6 sets of 49 bits each. Into this structure is inserted the contents of four lower-level DS1 tributary bit streams by a mapping involving interleaving and selected inversion.

The overall structure is thus hierarchical form, and, indeed, each DS1 tributary is itself composed of 24 channels.

The simulation of bit streams having complex hierarchical formats has in the past been approached generally in the same manner as already illustrated above with bit sources, such as PRBS generators, being hardwired together as required to enable the generation of tributary streams. These streams are then combined in a hierarchical manner by further hardwired logic to culminate in the generation of the required top-level bit stream. The hardware bit sources are thus interconnected in a tree-like structure. An example of equipment utilising this approach to the transmission of receipt of bit streams is to the HP 3789B test set available from Hewlett-Packard Company of Palo Alto, California, USA, this test set being arranged to transmit and receive bit streams structured according to the North American DS3 multiplex hierarchy.

With such arrangements there is generally little scope for modifying the structure of the final bit stream although some provision may be made for varying the contents of certain fields of constituent tributary streams.

It is an object of the present invention to provide a bit stream machine for the transmitting and receiving a hierarchically structure bit stream that facilitates the transmission and reception of bit streams of different structure and content.

## SUMMARY OF THE INVENTION

According to the present invention, there is provided a bit-stream machine for transmitting/receiving a bit stream having a hierarchical format structure in which a plurality of single-level formats, each composed of a plurality of fields of one or more bits, inter-depend in the manner of a tree-structured hierarchy of multiple levels with each lower-level format in that hierarchy specifying the structure of a corresponding field of a higher-level format of the hierarchy, the fields of said single-level formats which are not further specified in a dependent format constituting leaf fields of the hierarchical format structure; said machine comprising:
- a bit-stream bus,
- a plurality of bit-processing devices connected to the bit-stream bus, each said device comprising processing means operative when said device is enabled and activated, to process bits in a pre-determined manner to source/sink bits to/from the bus, and
- an orchestrator connected to said devices to orchestrate their operation by controlling the enabling and activation of the devices, said orchestrator and comprising:
- program memory means for storing an overall format program comprising a plurality of instructions each specifying a number of bits to be processed in connection with a said leaf field, said instructions being inter-associated such as to enable them to be stepped through in a sequence corresponding to the sequence, hereinafter the leaf-field step sequence, of said leaf fields, that is determined by said hierarchical format structure when account is taken on accessing the or each said single-level format, other than the top level one, of the bit width of the field further specified by the single-level format,
- sequencer means operative to step through said instructions in correspondence with said leaf field step sequence and to output enable signals to enable selected ones of said devices in dependence on the current leaf-field step sequence position reached by the sequencer means in its sequencing of said instructions, and
- bit control means connected to said sequencer means and operative to output activation signals to activate enabled ones of said devices to process one or more bits as appropriate for the said current sequence position.

During transmission of a bit stream, the orchestrator orchestrates the bit-processing devices in accordance with the stored format program, to source bits to the bit-stream bus in the desired order, only one device at a time being arranged to source bits onto the bus. During reception of a bit stream via the bit-stream bus, the devices are orchestrated to generate a reference bit sequence according to the stored format program, for comparison with the received bit stream.

A bit-stream machine of this form is readily adaptable to transmit and/or receive bit streams of a wide range of hierarchical structure and content, by storing appropriate format programs in the program memory means of the orchestrator and by providing suitable bit processing devices. The general architecture of the bit-stream machine facilitates this adaptability as the provision of appropriate devices for a particular hierarchically-structured format does not require the devices to be physically interconnected to reflect such structuring, but only the connection of the devices to the bus and to the orchestrator.

The overall format program may take the form of a sequence of instructions ordered in correspondence to the leaf-field step sequence. Advantageously, however, the overall format program is made up of a plurality of sub programs each representing a respective one of the single-level formats; an orchestrator for running such a set of single-level format programs forms the subject matter of our co-pending Application of the same date as the present Application.

Preferably, the orchestrator is connected to the devices by a broadcast-type communications arrangement for passing the enable signals and activation signals to all devices; this arrangement further facilitates the addition (or removal) of devices as may be required.

The enable signals can take the form of device identity codes output by the sequencer means to enable particular devices. However, the use of device identity codes in association with a broadcast type communication arrangement means that where several devices are to be enabled in respect of the same leaf-field step sequence position, the corresponding device codes must be output serially which can greatly slow down the operation of the bit-stream machine. Accordingly, the sequencer means is preferably operative to output as said enable signals, a field identifier, such as a field number, uniquely identifying to said devices the leaf field corresponding to the said current sequence position of the sequencer means. This field identifier is pased to all devices, for example via a field bus. Each device is provided with enable means responsive to a predetermined one or ones of said field identifiers to enable that device. The enable means can advantageously be constituted by a look-up table which, for example is held in ROM or RAM memory.

With regard to the activation signals, the control means is preferably operative to output, as the activation signals, clocking signals for clocking the processing of each bit in turn, each device including activation means operative when the device is enabled to initiate processing of a bit by the device at each occurrence of said clocking signals. The clocking signals may comprise a continuous clock signal, and a clock enable signal, the latter being asserted by the bit control means to cause enabled devices to process one or more bits with a timing determined by the clock signal.

To facilitate adaption of the bit-stream machine to differently structured bit streams, the program memory means of the orchestrator and the lock-up table constituting the enable means of each device are preferably made re-programmable. Further flexibility can be achieved by arranging for the processing means of at least one said device to be programmable such as to set characteristics of the processing which said processing means is operative to effect when the device is enabled and activated.

In addition to this programming of the characteristics of the processing effected by a device, for certain applications it may be desirable to provide for several modes of operation of the processing means of a device with the current mode of operation of the device being settable under the control of the orchestrator in dependence on the current leaf-field step sequence position of the sequence means. In a preferred implementation of such an arrangement, the look-up table means with which the device is provided for the purpose of relating the identity of the current field to the state of enablement of the device, is also used to store the identity of the mode in which the device is to operate for the or each field for which the device is enabled, the processing means being responsive to the device being enabled to set itself into the appropriate said mode.

With regard to a bit-stream machine for transmitting a bit stream, the plurality of devices will generally comprise transmit devices the processing means of which are operative to source bits to said bus, the bit-stream machine being operative such that only one said transmit device at a time is enabled to source bits to the bit-stream bus. In a first type of transmit device (data-independent transmit devices), the processing means of the device is operative to generate bits in a predetermined manner independent of the data content of bits previously sourced to said bus by said devices, said data-dependent transmit device being operative both:

- in a first mode to sink bits from the bit-stream bus during sourcing by one or more other transmit devices,

- in a second mode to source bits onto the said bus, these latter bits being generated by the said processing means with reference to the bits received from the bus when the device is operating in its first mode.

With regard to a bit-stream machine for receiving a bit stream, in one arrangement the bit-stream bus includes a receive sub-bus for receiving said bit stream, and the plurality of devices comprise generate-and-compare devices, the processing means of each such device being operative, for the fields of said hierarchical format for which the device is enabled, to:

- generate internally a reference bit sequence in accordance with the corresponding said field of said hierarchical format, and

- sink bits from the receive sub-bus and compare them with said reference sequence.

In an alterantive arrangement of a bit-stream machine for receiving a bit-stream, the bit-stream bus comprises both a receive sub-bus for receiving said bit stream and a reference sub-bus, the plurality of devices comprising:

- generate devices the processing means of which are operative to generate and source to the reference bus a reference bit sequence structured according to said hierarchical format, and

- compare devices the processing means of which are operative to sink and compare bits from the receive and reference sub-buses.

Advantageously, the devices may operate to source/sink bits in parallel to/from the serial bus. To this end, the bit-stream bus advantageously comprises a first number of lines for sinking/sourcing bits from/to said bit-processing devices, and each device is operative when enabled, to source/sink a second number of bits in parallel to/from said lines of the bit-stream bus at each activation by the bit-control means of the orchestrator. The bit control means is operative to set the value of said second number, for enabled ones of the devices, within an upper limit determined by the lower of the value of said first number and the number of bits remaining to be processed for the current sequence position of the sequencer means.

In a variant of the bit-stream machine, each bit specified in a said device instruction is interpreted by the bit-stream machine as representing a multi-bit word, the bit-processing devices being operative to source/sink multi-bit words to/from the bit-stream bus in a number and order corresponding to the number and order of bits determined by the bit-processing instructions.

## BRIEF DESCRIPTION OF THE DRAWINGS

Various forms of a serial stream machine embodying the invention will now be described, by way of non-limiting example, with reference to the accompanying diagrammatic drawings in which:

Figure 1A is a diagram illustrating the field structure of a bit stream structured as a single-level format;

Figure 1B is a diagram illustrating the field structure of a bit stream having a hierarchical format structure composed of three single-level formats;

Figure 2 is a field expansion Table illustrating one possible leaf-field step cycle order for the hierarchical format illustrated in Figure 1B;

Figure 3A is a diagram illustrating possible contents for the fields of the Figure 1A format;

Figure 3B is a diagram illustrating possible contents for the fields of the Figure 1B format;

Figure 4 is an overview diagram of the serial stream machine embodying the invention and illustrates the inter-relationship of an orchestrator, bit-processing devices, and a serial bus of the machine;

Figure 5A is a diagram illustrating use of the bit-processing devices to provide tributary streams for generating the bit stream represented in Figure 3A;

Figure 5B is a diagram illustrating use of the bit-processing devices to provide tributary streams for generating the bit stream represented in Figure 3B;

Figure 6A is a diagram illustrating one method for enabling the bit-processing devices from the orchestrator;

Figure 6B is a diagram illustrating another method for enabling the bit-processing devices from the orchestrator;

Figure 6C is a diagram illustrating one method of activating enabled devices from the orchestrator;

Figure 6D is a diagram illustrating another method of activating enabled devices from the orchestrator;

Figure 7 is a diagram of a preferred embodiment of the serial stream machine in which multiple format engines are used to constitute the orchestrator;

Figure 8 is a diagram illustrating the functional inter-relationship of three format engines required to orchestrate the processing of a format of the Figure 3B form;

Figure 9 is a functional block diagram of a format engine;

Figure 10 is a diagram illustrating the constitution of a step-width delimiter of the Figure 9 format engine;

Figure 11 is a functional block diagram similar to Figure 9 but showing details of a format engine intended only to instruct devices directly;

Figure 12 is a flow chart of a software program for implementing the functionality of a sequence controller of the Figure 11 format engine;

Figure 13 is a flow chart of a sub-routine of the Figure 12 program;

Figure 14 is a functional block diagram similar to Figure 11 but showing details of a format engine intended not only to instruct devices directly, but also to pass sub-requests to subservient format engines;

Figure 15 is a flow chart similar to Figure 12 but relating to a software program for implementing the functionality of the sequence controller of the Figure 14 format engine;

Figure 16 is a functional block diagram similar to Figure 14 but illustrating a formats processor that acts as a plurality of format engines to provide the functionality of the Figure 7 orchestrator;

Figure 17 is a flow chart similar to Figure 15 but relating to a software program for implementing the functionality of a sequence controller of the Figure 16 formats processor;

Figure 18 is a block diagram of a hardware implementation of the sequence controller of the Figure 16 formats processor;

Figure 19 illustrates the inputs and outputs of a state machine used to control the Figure 18 hardware;

Figure 20 is a state transition diagram illustrating the operation of the Figure 19 state machine;

Figure 21A is a block diagram of countdown means of the Figure 18 hardware;

Figure 21B is a state transition diagram illustrating the operation of a state machine of the countdown means shown in Figure 21A;

Figure 22 is a block diagram of calculation means of the Figure 18 hardware;

Figure 23 is a block diagram of a more complex version of a device interface illustrated Figure 16 and forming part of the format processor;

Figure 24 is a state transition diagram illustrating the operation of a state machine of the Figure 23 device interface;

Figure 25 shows the modifications required to the state transition diagram of Figure 20 to coordinate the functioning of the Figure 18 hardware with the Figure 24 device interface;

Figure 26 is a block diagram of a generic form of bit-processing device;

Figure 27 is a diagram showing the details of an initialisation register block and device logic block of Figure 26 in the case where the device is a user-pattern device;

Figure 28 is a diagram similar to Figure 27 but giving details of a PRBS device;

Figure 29 is a diagram similar to Figure 27 but giving details of a CRC device;

Figure 30 is a diagram similar to Figure 27 but giving details of a comparison device;

Figure 31 is a block diagram of a slip device;

Figure 32 is a state transition diagram illustrating the operation of a state machine of the Figure 31 slip device;

Figure 33 is a diagram illustrating a modified form of the Figure 7 serial stream machine in which the bit-processing devices are operative to source/sink up to eight bits in parallel to/from the serial bus;

Figure 34 is a diagram illustrating another modified form of the Figure 7 serial stream machine in which each bit specified in a format program is treated by the device interface of the orchestrator as signifying a multi-bit word; and

Figure 35 is a diagram illustrating a further modified form of the Figure 7 serial stream machine in which the bit-processing devices process a multi-bit word for each bit commanded to be processed by the orchestrator.

## DESCRIPTION OF THE PREFERRED EMBODIMENTS

### Formats and LFS Cycle

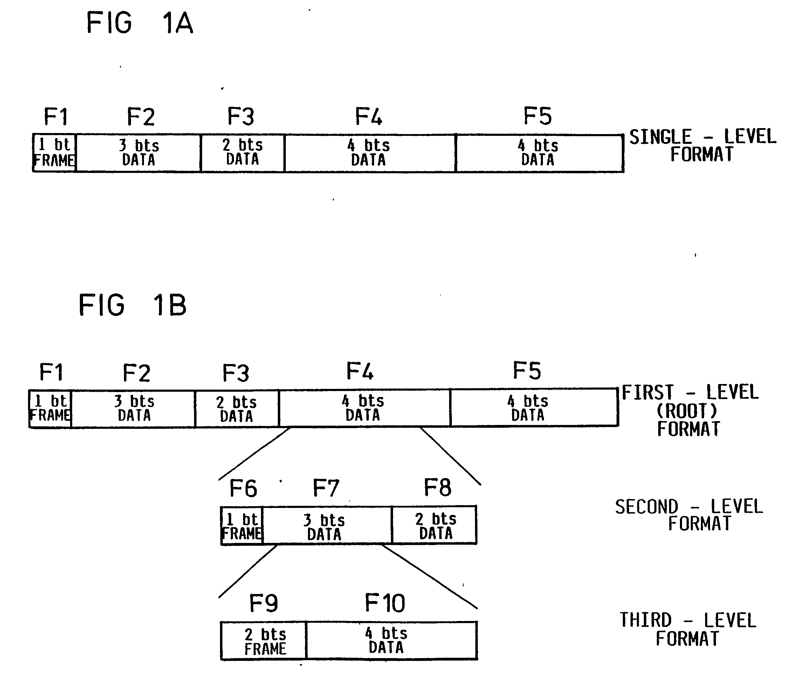

Figure 1A shows, by way of example, a possible field structure or format for a structured serial bit stream; in the example shown the format is made up of five fields F1 to F5. The field format defines the structure of the serial bit stream, regardless of the length of the stream; thus, the format may be run through once only where the stream is of short duration (such as a fixed-length message) or the format may be cyclically repeated on an indefinite basis where the stream is continuous.

By "field" is meant a group of one or more consecutive bits having an identifiable purpose or meaning. Generally, each group of bits is derived from a longer sequence, such as a predetermined bit pattern sequence, a pseudo random binary sequence (PRBS), or another structured serial bit stream, and it is generally helpful to view such streams or sequences as tributaries to the overall serial bit stream.

The first field F1 of the Figure 1A format is a one bit framing field whereas the fields F2, F3, F4 and F5 are data fields respectively three, two, four and four bits in width. By "framing" field is meant a field whose contents enable the position within the format to be identified, not necessarily from one repeat of the field format but usually after a number of format cycles (this process being generally referred to as achieving frame alignment). Data fields are fields containing data other than framing data.

The Figure 1A format has only a single level as it only defines the field structure of the serial bit stream itself and not any field structuring that may be associated with tributary bit streams or sequences contributing bits to the constituent fields F1 to F5 of the overall serial bit stream. The knowledge of position within the Figure 1A format given by the framing field F1 is thus only sufficient to determine the boundaries of the fields F1 to F5 and gives no information regarding any field structuring of tributary bit streams.

Figure 1B shows a hierarchical format structure in which a plurality of single level formats, each composed of a plurality of fields, inter-depend in the manner of a tree structured hierarchy of multiple levels. In this case the first-level or root format of the Figure 1B format structure gives information on the field structuring of the overall serial bit stream represented, while the lower level formats give information on the field structuring of tributary bit streams or sequences used to fill respective fields of the parent format. Where the structure of a field is not further developed in a sub format, this will generally be because either the bit sequence used to fill that field does not have a field structure itself or any such structure is not relevant for the purpose concerned.

In the particular example shown in Figure 1B, the root format has the same structure as the format shown in Figure 1A. However, in this case, field F4 of the root format is represented as being filled by bit groups taken from a tributary bit stream having a format as defined in the second-level format shown in Figure 1B. This second-level format comprises three fields F6, F7 and F8 of which field F6 a one-bit framing field, while fields F7 and F8 are data fields of width three and two bits respectively.

The field F7 of the second-level format is represented as being itself filled by a substream the structure of which is defined by the third-level format shown in Figure 1B. This third-level format comprises only two fields, namely a framing field F9 of two bits in width, and a data field F10 of four bits in width.

On each repeat of the root format of the Figure 1B bit-stream format structure, for each occurrence of field F4 successive groups of four bits are provided from a tributary bit stream structured in accordance with the field structure set out in the second level format. Thus, the first pass of the root format will, for example, result in field F4 being filled by one bit from the field F6 and three bits from the field F7 of the second level format. The second pass through the root format will result in the field F4 being filled by two bits from the field F8 of the second level format followed by one bit from the field F6 and one bit from field F7.

Of course, the bits for the field F7 come from a tributary stream structured in accordance with the third level format. Thus, during the first pass of the root format, the three bits provided from the field F7 will be constituted by two bits from the field F9 and one bit from the field F10 of the third level format. In the second pass through the root format where one bit is provided from the field F7, this will be a bit coming from the field F10 of the third level format.

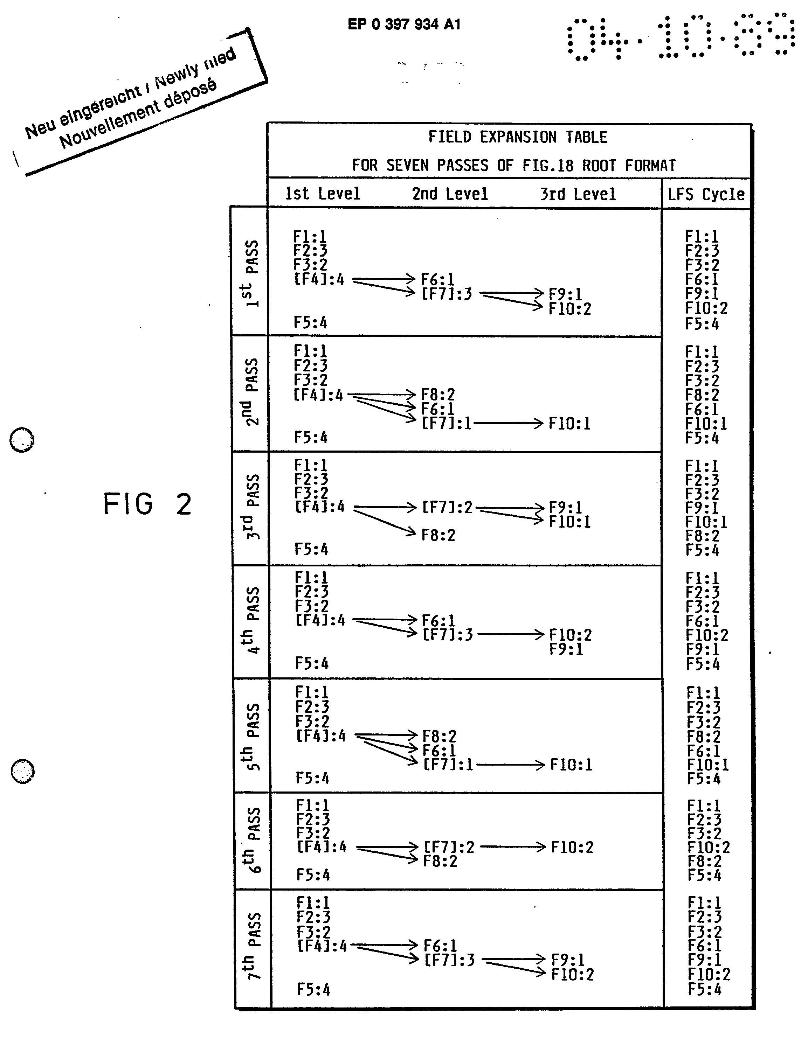

The Table given in Figure 2 gives an expansion of the fields encountered during the running through of the Figure 1B top level format for seven passes. The Table is divided into four columns, the first of which shows the fields called upon from the root format during each pass together with the number of bits required from each field (this number is given after the colon following each field reference number). Where the structure of a field is expanded in a lower level format, then this field is shown in brackets.

The second column of the Table gives an expansion at the second-level format level of any bracketed field in the first column. Again, any field in the second column whose structure is further defined in the third level format of Figure 1B is shown in brackets. The third column of the Table shown in Figure 2 gives the third-level format expansion of any bracketed field shown in the second column.

Finally, the fourth column of the Figure 2 Table is a complete expansion of each pass in terms of those fields of the Figure 1B format which are not further expanded in a sub-format; these fields are the leaf fields of the tree-structured hierarchical format of Figure 1B.

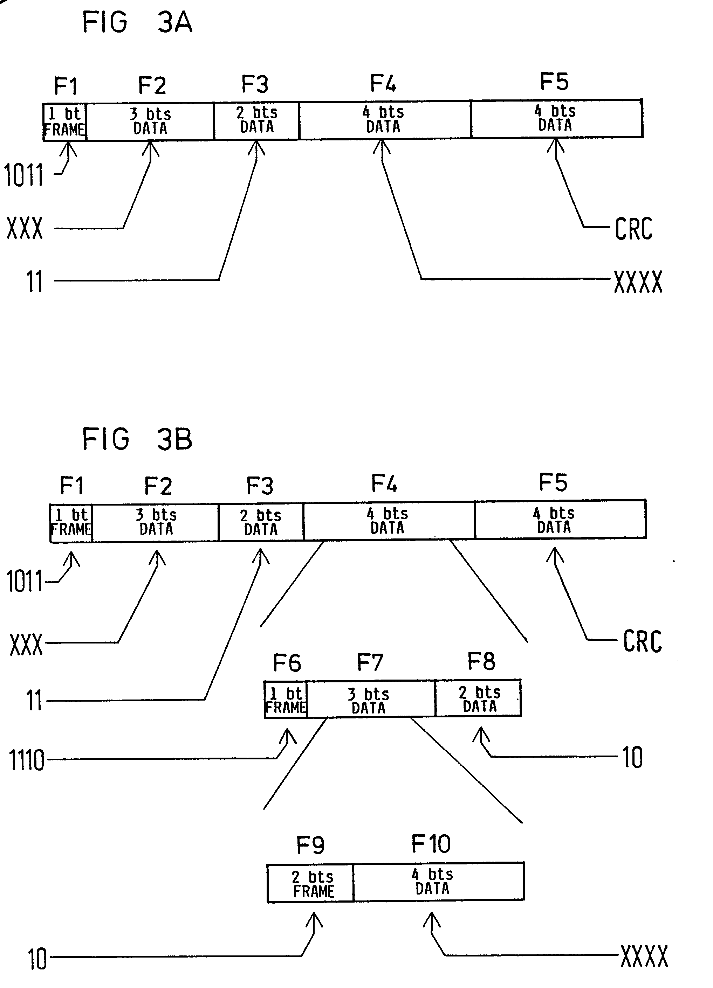

As is apparent from the fourth column of Figure 3, except for leaf fields of the root format, the number of bits to be provided in accordance with a particular leaf field is not determined simply by the bit width of that field. Rather, the number of bits to be provided is determined by a combination of the field width (or remaining width where the field was left part used by an earlier access from a higher format) and the number of bits required by the format above. The overall expansion of the hierarchical format during running can therefore be seen to be made up of a number of steps with each step being associated with a particular field but having width determined by a combination of the width (or remaining width) of that field and the number of bits required to satisfy the parent field. More particularly, the width of each field step corresponds to the lesser of the start values at the beginning of the step of the following two bit quantities, namely:
- the width, or remaining width, of the field concerned ("field bits")
- the number of bits required to satisfy the requirements of a parent field ("bits required")
It will be appreciated that the "bits required" constraint of a parent field may itself be determined by combination of the width of that field and a "bits required" limitation placed by a parent field.

As can be seen from Figure 2, it takes a full six passes through the root format before the field expansion given in the fourth column of the Table starts to repeat. The cycle of field steps and associated bit widths is hereinafter referred to as the "leaf field step" cycle. Note that the field order in this cycle does not correspond to that produced when simply running through the leaf fields of the format tree in order; this is due to the "bits required" constraint placed on running through each sub-format by the parent field with which the format is associated.

The leaf field step cycle (LFS cycle) given in Figure 2 is in fact, only one of a number of such cycles derivable from the format tree of Figure 1B, each such cycle being associated with a particular start position in each sub-format for the first call to the sub-format from the parent format. The Figure 2 LFS cycle is one in which during the first pass of the root format, the second level format is accessed from field F4 at field F6 and in which the first access to the third level format upon calling of field F7 from the second level format, is at the first bit of field F9.

During generation of a serial bit stream in accordance with a hierarchical format such as shown in Figure 1B, the LFS cycle may be predetermined and transmission effected in accordance with that cycle, it being recognised that a particular relationship between the second and third level formats and the first level format is thereby implied. If desired, a different inter-relationship can be chosen giving rise to a different LFS cycle. For reasons to be explained hereinafter, the generation of an hierarchically-structured bit stream is not in fact normally effected by direct reference to a predetermined LFS cycle.

In receiving a serial bit stream having an hierarchical format structure, in order to make any sense of the received stream, it is necessary to identify the field structure within the stream. To do this, frame alignment is first achieved at the root format level by using the framing field contained in that format (field F1 in the Figure 1A format). As is well known in the art, alignment can be achieved by slipping a reference bit sequence structured in accordance with the format, relative to the bit stream being received.

Once alignment has been achieved at the top level, alignment is then sought at the second level by looking for the framing field (F6 in Figure 1B) of the second level format during field F4 of the root format. Again once alignment has been achieved with the second level format, alignment with the third level format is sought by looking for the framing pattern contained in field F9 of the third level format.

It is generally necessary to go through the above sequence of obtaining alignment starting at the top level format and progressing down through the sub-formats because the relationship between the various formats will not be known beforehand - that is, the LFS cycle will generally not be known in advance. Once alignment with a received stream has been achieved at all levels, its LFS cycle could in theory be determined and followed directly.

In cases where the LFS cycle of an incoming bit stream is already known, then in theory frame alignment can be sought simultaneously for all formats using the framing fields of the formats.

In fact where the LFS cycle of a bit stream either being transmitted or received is known, then the format structure of that stream can be viewed as a single-level format corresponding to the LFS cycle. However, a multi-level representation of the format structure will generally be more compact as can be seen from the length of the LFS cycle given in the fourth column of the Figure 2 Table.

The foregoing description has concentrated on the field structure represented by the formats shown in Figures 1A and 1B. As already indicated, the contents of each field is a group of one or more bits generally derived from a longer tributary bit sequence or stream; where the tributary stream itself has a defined field structure, the ultimate field contents will be determined by the nature of the tributary sequences used to fill the leaf fields associated with the structured tributary.

Figure 3A gives one possible example of the field contents for the single level format of Figure 1A. In the example given, the field F1 takes its one bit from a fixed bit pattern sequence of four bits length "1011", this pattern being cyclically accessed as required. The field F2 takes three bits from a stream of tributary data of arbitrary value indicated as XXX in Figure 3A. Field F3 takes two bits from a fixed "all ones" pattern. Field F4 takes four bits from a second tributary stream containing arbitrary data XXXX.. Field F5 contains a four bit cyclic redundancy check (CRC) code.

Figure 3B shows possible field contents for the hierarchical format structure shown in Figure 1A. The contents of the fields F1, F2, F3 and F5 are the same as illustrated in Figure 3A. However, field F4 is no longer filled by arbitrary bits from a data stream but is filled by bits taken from leaf fields F6, F9, F10 and F8. The one bit framing field F6 takes it's bit from a fixed bit pattern "1110". The two-bit framing field F9 is a fixed pattern "10". The field F10 takes four bits of arbitrary value "XXXX" from a tributary data stream. Field F8 contains a fixed pattern "10".

From the examples given in Figure 3, it can be seen that generally the tributaries from which the leaf fields take their contents are relatively simple in format. With respect to data stream tributaries, these tributaries may either be real data streams, or PRBS streams, the latter generally being used when generating a serial bit stream for testing purposes.

## General Form of Serial Stream Machine

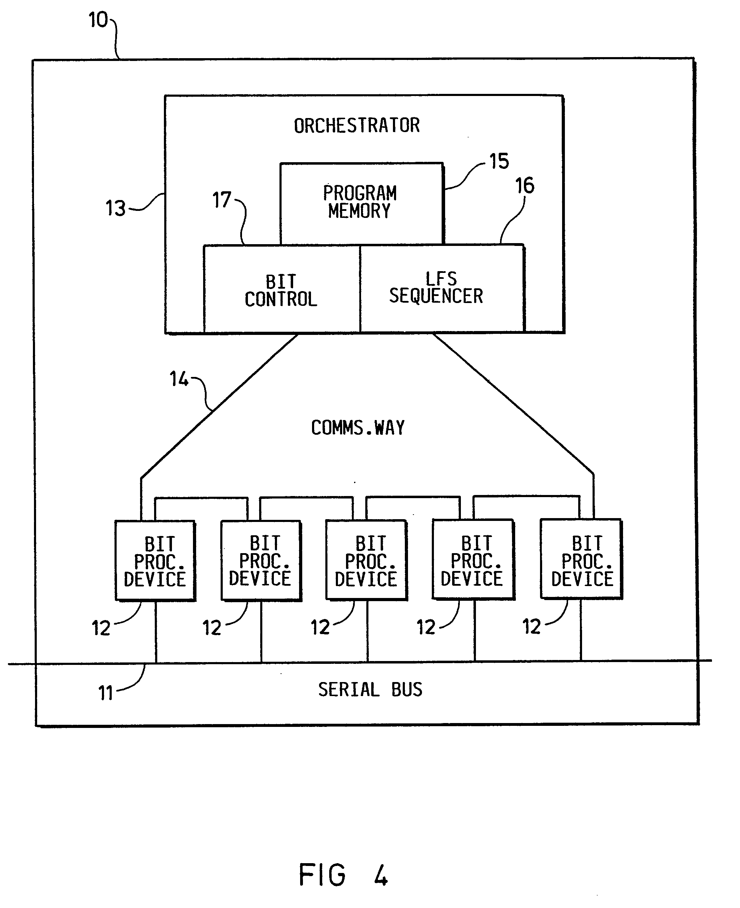

Figure 4 is a block diagram showing the general form of a serial stream machine embodying the invention, for transmitting/receiving a structured serial bit stream. The serial stream machine 10 comprises a serial stream bus 11, a number of bit-processing devices 12 connected to the bus 11 and operative to source/sink bits to/from the bus, and an orchestrator 13 connected via a communications way 14 to the devices 12 and operative to orchestrate the processing of bits by the devices.

The bit-processing devices 12 are associated with respective leaf-field tributaries of a format to be transmitted/received by the serial stream machine. During transmission, each device 12 sources in turn one or more bits onto the serial bus 11, these bits being generated in accordance with the leaf-field tributary associated with the device. During reception of a serial bit stream, the devices 12 generate reference leaf-field bit sequences which are then compared with the bits of the incoming stream being received on the bus 11.

The orchestrator 13 which co-ordinates the operation of the devices 12, includes a format program memory 15 which stores information on the field structure and field widths of the format to be generated/received by the serial stream machine 10. The orchestrator 13 also includes LFS sequencer means 16 operative to utilize the information held in the program memory 15 to sequence through the format in leaf-field step cycle order; for each step, the sequencer means 16 enables, via the communications way 14, the device or devices 12 required to carry out bit-processing (transmission/reception) during execution of the current LFS cycle step. The orchestrator 13 further includes bit control means 17 the function of which is to co-ordinate the processing of bits by the enabled device or devices during each LFS cycle step, this co-ordination being effected by activation signals fed to the devices 12 via the communications way 14.

Where a serial bit stream is to be transmitted on the serial bus 11 in accordance with the format stored in the program memory 15, only one device 12 will be enabled by the sequencer means 16 in a foreground or bit-generating mode for each step of the LFS cycle. This device outputs bits onto the serial bus 11 as instructed by the bit control means 17. In addition to the device 12 enabled in foreground mode, during each step other devices may be enabled in a background mode in which they listen to the serial bus. A typical such device would be a CRC device arranged to generate a CRC code on the basis of bits previously sourced to the serial bus 11. Such a device would generally be enabled in background mode to listen to the bus during LFS cycle steps relating to fields associated with a particular single-level format, and then enabled in foreground mode to output CRC bits onto the serial bus 11 during one or more subsequent LFS cycle steps.

An example of the co-ordination of the devices 12 by the orchestrator 13 during serial stream generation is described below with reference to Figure 4A which shows the devices 12 needed to generate and transmit a serial bit stream having the field structure and content of Figure 3A. As can be seen, five bit-processing devices 12 are provided, namely:
- a first pattern device 20 arranged to cyclically produce the fixed pattern "1011" from which field F1 is filled;
- a first PRBS device 21 for producing arbitrary data from which field F2 is filled;
- a second fixed pattern device 22 for producing a pattern of "all ones" from which the field F3 is filled;
- a second PRBS device 23 for producing arbitrary data from which the field F4 is filled; and
- a CRC device 24 for generating a CRC code from which field F5 is filled.

In generating a serial bit stream in accordance with the format of Figure 3A, the sequencer means 16 of the orchestrator 13 steps through the LFS cycle (which, in this case, is simply the single level format itself ie. F1:1, F2:3, F3:2, F4:4, F5:4). During the first step (field F1 for one bit), the pattern device 20 is enabled in its foreground mode and the CRC device 24 is enabled in its background mode. When instructed by the bit control means 17, the device 20 sources one bit onto the serial bus 11 and the CRC device 24 sinks this bit and uses it in the generation of a CRC code. For the second LFS cycle step (field F2 for three bits), the PRBS device 21 is enabled in its foreground mode and the CRC device 24 is enabled in its background mode; thereafter, the bit control means 17 co-ordinates the processing of three bits by the devices 21 and 24. Enabling of appropriate ones of the devices and co-ordination of bit-processing is similarly effected for the third, fourth and fifth steps of the LFS cycle with the devices 22, 23 and 24 being respectively enabled in their foreground mode and the device 24 being enabled in its background mode for the third and fourth steps.

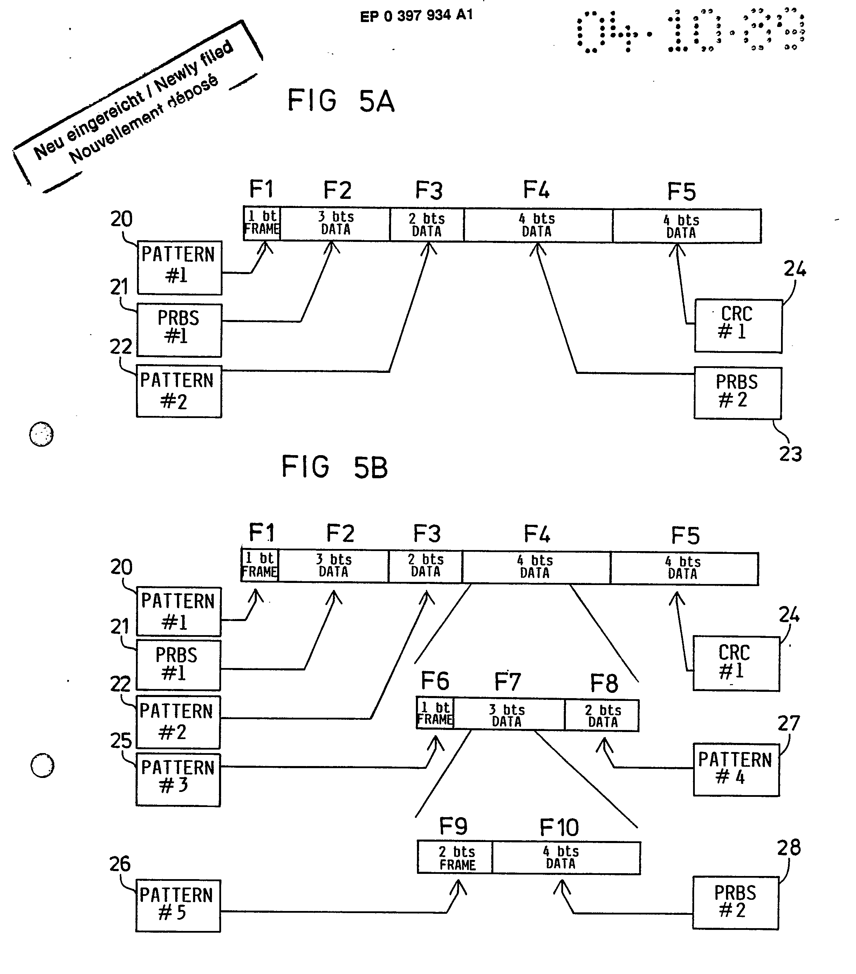

In generating a serial bit stream in accordance with the format shown in Figure 3B, devices 20, 21, 22, 24 to 28 are provided in order to generate leaf-field tributary streams, the association of devices to leaf-fields being as shown in Figure 5B. The devices 20, 21, 22, and 24 are the same as the correspondingly referenced devices in Figure 5A. The device 25 is a fixed pattern device arranged to generate a pattern "1110" from which the field F6 is filled. Device 26 is also a pattern device, this device has been arranged to generate a fixed "10" from which the field F9 is filled. Device 27 is yet a further pattern device also arranged to generate a pattern "10", from which the field F8 is filled. Device 28 is a PRBS device arranged to generate a PRBS from which the field F10 is filled.

In generating the serial bit stream in accordance with the Figure 3B format, the sequencer 16 steps through the LFS cycle shown in the fourth column of Figure 2; the enabling of devices and the co-ordination of bit-processing for each step is substantially the same as described above for the Figure 3A format and these processes will not therefore be described again.

During reception of a serial bit stream nominally structured in accordance with a format stored in the program memory 15, the sequencer means 16 enables one or more devices 12, as appropriate for the current LFS cycle step, to sink bits from the stream received on the serial bus, and compare these bits with a reference sequence generated in accordance with the leaf-field tributary appropriate for the current step. Generation of the reference sequence and comparison of bits of that sequence with bits of the stream being received may be effected within the same device 12. Alternatively, the reference sequence may be generated by one device 12 and then compared in a separate device 12 with the received stream, a line of the bus 11 being used to pass the generated reference sequence between the devices. This latter approach has the advantage that generation of the reference sequences and their output onto a line of the serial bus 11 is essentially the same process as that involved in the transmission of a serial bit stream. Furthermore, not only can the device 12 used to effect the comparison of the reference and received bits be associated with more than one reference-sequence generating device 12, but in addition, a number of comparison devices 12 can be enabled during the same step of the LFS cycle and used to effect different types of comparative measurements on the received stream (such as a count of individual discrepancies between the reference and received streams and a count of bursts of discrepancies of greater than a certain length).

As with transmission, during reception of a serial stream the processing of bits via the devices 12 is co-ordinated during each LFS cycle step by the bit control means 17.

Considering by way of example the receipt of a serial bit stream nominally structured according to the format of Figure 3A, where separate devices 12 are used for generating a reference stream and for comparing that stream with the received stream, the generation of the reference stream can be effected in the manner already described above in relation to the transmission of a stream so structured. However, in addition, comparison devices 12 are provided for comparing the reference stream with the received stream, and appropriate ones of the devices 12 are enabled by the sequences means 16 during each step of the LFS cycle involved. The enabled comparison devices 12 then undertake their comparison tasks under the co-ordinating control of the bit control means 17.

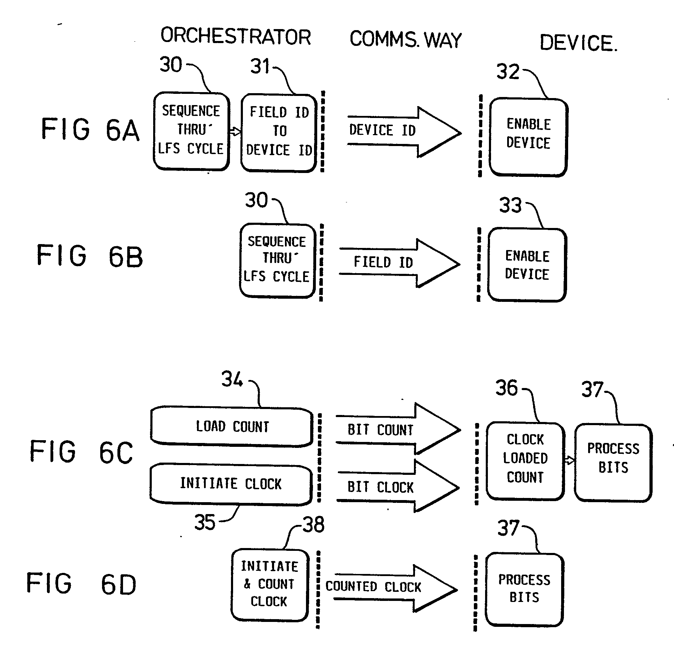

Various methods of instruction of the devices 12 by the sequencer means 16 and the bit control means 17 are illustrated in Figure 6. More particularly, Figure 6A and 6B illustrate two alternative methods by which the sequencer means 17 may enable the appropriate ones of the devices 12 for a particular LFS cycle step, while Figures 6C and 6D illustrate two alternative methods by which the bit control means 17 may activate enabled devices to process one or more bits during a LFS cycle step.

In Figure 6A, boxes 30 and 31 represent respective tasks carried out by the sequencer means 16, these being:
- a first task 30 of utilising the format information stored in the memory 15 to sequence through the LFS cycle of the format, and
- a second task 31 of translating the identity of the leaf-field associated with the current step position within the LFS cycle into device identification specific to the devices to be enabled for that step.

According to the instruction method illustrated in Figure 6A, the orchestrator passes this device identification data over the communications way 14 to the devices 12 thereby causing the identified devices to be enabled (task 32).

In the alternative method of enabling desired devices 12 illustrated in Figure 6B, the sequencer means 16 only effects the task 30 of sequencing through the LFS cycle. The identity of the leaf-field associated with the current cycle position is then passed to the the devices 12 which now undertake the task 33 of recognising whether or not they should be enabled for the current field, this information having been pre-programmed into the devices. In this case, the leaf-field identity is transmitted by the sequencer means 16 over the communication way 14 to all of the devices 12.

The method of Figure 6B is preferred to that of Figure 6A for the following reasons. In order to facilitate adaption of the serial stream machine 10 to the transmission/reception of a stream having any particular format, the devices 12 are preferably connected to the orchestrator 10 by communications way 14 in the form of a bus since this arrangement facilitates the adding or taking away of the devices 12. With a bus arrangement, where it is necessary to enable more than one device for a LFS cycle step, then with the method illustrated in Figure 6A, it will be necessary to broadcast the identity of each device in succession over the bus 10 to the devices 12. In contrast, the method of Figure 6B only requires a single broadcast of leaf-field identity to all devices regardless of the number of the latter to be enabled. The Figure 6B method therefore allows the adoption of a bus for the communications way 14 while only requiring a single broadcast for each step.

According to the method of instruction illustrated in Figure 6C by which the bit control means 17 instructs enabled devices to process bits, the bit control means 17 first downloads to the enabled devices a count corresponding to the number of bits to be processed for the current LFS cycle step (see task 34). Thereafter, the bit control means 17 outputs a clocking initiation signal (task 35) together with a clock signal in order to initiate and co-ordinate bit-processing by the enabled devices. Each enabled device thereafter clocks down its loaded count (task 36) and at each clocking processes a bit (task 37). This process terminates when the counts become zero. With such an arrangement, some means must be provided for the orchestrator to know when the count has reached zero enabling the orchestrator to proceed to the next LFS cycle step. This can be achieved either by providing feedback from the devices or by arranging for the bit control means 17 to clock down the same count as passed to the devices.

Figure 6D illustrates an alternative method for instructing bit-processing by the enabled devices. In this case, the bit control means 17 instructs the enabled devices for each bit to be processed, the actual counting of the number of bits processed being effected by the control means 17 itself until the required number of bits for the current LFS cycle step have been processed (task 38). The enabled devices simply respond to the counted clock signals received from the bit control means 17 to process an appropriate number of bits (task 37). The control means 17 may either output a fixed number of clock pulses corresponding to the number of bits to be processed or, alternatively, may output a continuous clock signal together with an enabling signal that is valid only over a number of clock cycles corresponding to the desired number of bits to be processed.

The instruction method of Figure 6D is preferred to that of Figure 6C since it avoids replication of counting within the devices themselves, this process being carried out centrally within the bit control means 17.

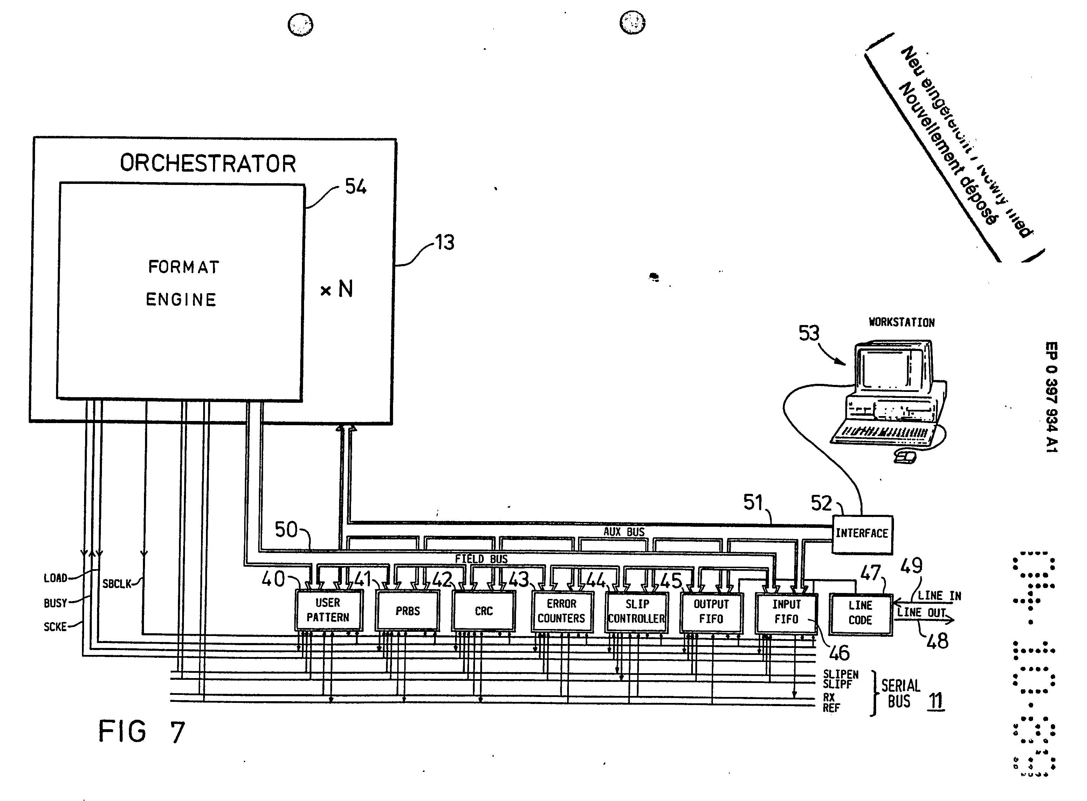

Having given an overview of the operation of the serial stream machine embodying of the present invention, a more detailed description of the preferred embodiment will now be given with reference to Figure 7 and subsequent Figures.

Overview of Preferred Embodiment

In the Figure 7 embodiment, bit-processing devices 40-46 are provided, these devices being:
- enabled as appropriate for the current LFS cycle step by means of the field identification method illustrated in Figure 6B, for which purpose a field bus 50 is provided between the orchestrator 13 and the devices 40-48;
- clocked to process an appropriate number of bits for the current LFS cycle step in accordance with the method illustrated in Figure 6D, for which purpose both a serial bus clock line SBCLK carrying a continuous clock, and a clock enable line SCKE carrying an enabling signal are connected between the orchestrator 13 and all of the devices 40-48.
The field bus 50 and the lines SBCLK and SCKE constitute, together with certain other lines to be described hereinafter, the communications way 14 of Figure 4.

Considering Figure 7 in more detail, the serial bus 11 comprises two main lines, namely a line REF onto which bits are sourced from the devices in order to generate a serial stream in accordance with the format program stored in the orchestrator 13 (whether for transmission or as a reference stream during receipt), and a line RX for receiving an incoming serial bit stream and passing it to appropriate ones of the devices. In addition, the serial bus 11 includes two slip control lines fed from a slip controller device 44 and used to effect alignment between a reference stream and incoming serial stream during reception of the latter. The two slip lines are a slip enable line SLIPEN and a slip force line SLIPF. These lines are connected to all the devices 40-46 and to the orchestrator 13.

Of the seven devices 40-46 illustrated in Figure 7, three can operate in a bit generating or foreground mode,these being a user pattern device 40, a PRBS device 41, and a CRC device 42. These devices 40, 41 and 42 are arranged to source bits onto the line REF of bus 11. In addition, the CRC device 42 is operable in a background mode to sink bits from the receive line RX. Device 43 is a comparison device including error counters the purpose of which is to compare an incoming stream on line RX with a reference stream on line REF and record any errors.

The device 44 is a slip controller device which is connected to both the reference and receive lines REF and RX and is operative to output signals on the slip lines SLIPEN and SLIPF to bring about alignment between the reference and received serial streams during reception of the latter.

Two further special purpose devices are also provided namely an output FIFO device 45 and an input FIFO device 46. The purpose of the output FIFO device 45 is to smooth the output of bits from the reference line RX into the outside world during transmission of a serial bit stream. The output FIFO device 45 is a first-in, first-out buffer of adequate capacity to smooth out any variations in the rate of generation of bits onto the reference line RF by the bit generating devices 40, 41 and 42. As is shown in Figure 7, the output of the output FIFO device 45 may be connected to a line code unit 47 where the output stream undergoes line coding before onward transmission on an output line 48.

The purpose of the input FIFO 46 is to ensure that bits of a serial stream being received are put on the received line RX of bus 11 in synchronism with the operation of the bit processing devices. The input FIFO device 46 may be fed from the line code unit 47 which during receipt of an incoming stream on a line 49, is arranged to decode the line code before passing the stream onto the input FIFO 46.

It will be appreciated that in practise a number of the bit generating devices similar to the devices 40, 41, and 42 will be provided, there generally being one such device for each leaf-field of the format to be transmitted/received. Furthermore during receipt of a serial stream, a number of error counter devices 43 will normally be used depending on how many different measurements are required to be made. In addition the number of slip controller devices 44 provided when a serial stream is to be received, will generally correspond to the number of separate single-level formats present in the overall hierarchical format of the serial stream to be received, one such device being associated with each single-level format.

The types of devices shown in Figure 7 are not exhaustive and other types may be provided as appropriate. For example, a bit-generating device may be provided to generate a structured serial bit stream directly.

As will be more fully described hereinafter, each of the devices 40-46 is provided with a look-up table containing a list of all the field identifiers (generally field numbers) for all the leaf-fields in the format currently to be transmitted/received. Associated with each field number in this look-up table is an indicator as to whether or not the device concerned is to be enabled for that field. In this manner, the transmission of the field number on the field bus 50 can be directly used by each device to determine whether or not it should be enabled. Each device is arranged to read the field number placed on the field bus each time the contents of the field bus 50 are indicated as being valid by signal on a line LOAD running from the orchestrator 13 to all the devices.

Where a device is capable of operating in more than one mode (for example, a foreground mode and a background mode as for the CRC device 42), then the entry associated with each field number in the look-up table of a device can be used to indicate which mode of operation is required for the field concerned.

The look-up table itself is preferably stored in RAM memory to enable it to be reprogrammed for different formats. In the Figure 7 arrangement, an auxiliary bus 51 is shown connected to all the devices 40-46 and via a bus interface 52, to a workstation 53. The provision of the auxiliary bus 51 enables the look-up tables stored in RAM in the devices 40-46 to be reprogrammed from the workstation 53 when required. Furthermore, the auxiliary bus 51 enables the measurement results recorded in the error counters of the error counter device 43 to be read back up to the workstation 53 for further processing and display as required. In addition, as will be more fully described hereinafter, certain functional characteristics of the devices may be presettable and, again, this is achieved from a workstation 33 via the auxiliary bus 51. By way of example, the identity of the user pattern generated by the user pattern device 40 may be preset over the auxiliary bus 51.

As described above, the devices 40-46 are connected to the serial bus 11, the field bus 50, the auxiliary bus 51 and to lines SBCLK, SCKE, and LOAD. In addition, one further line is shown as connected from the devices 40-46 to the orchestrator 13, this line being a BUSY line. The purpose of this line is to cause the orchestrator 13 to temporarily halt the clocking of bit-processing by the devices. The busy line will only be set low (thereby enabling the continuance of clocking) when all the devices are ready to process another bit.

The orchestrator 10 functionally comprises N format engines 54 where N corresponds to the number of single-level formats present in the overall format of the serial bit stream to be transmitted/received by the serial stream machine.

The format engines 54 operate together to provide the functions of the LFS sequencer means 16 and the bit control means 17 of the Figure 4 orchestrator.

Each format engine 54 stores a format program representing a respective one of the single-level formats. The format program may be held in ROM memory but is preferably stored in RAM, the latter being down loaded with the format program from the workstation 53 via the auxiliary bus 51.

For the purpose of instructing the devices 40 to 46, each format engine is connected to the field bus 50, the lines SBCLK, SCKE, LOAD and BUSY, and the serial bus 11.

Format Engine - Overview

Each format engine 54 is operative to service a request to orchestrate the processing of a specified number of bits by running its format program and instructing the devices 40 to 46 accordingly until the specified number of bits have been processed. For fields of the associated single-level format which are not developed in a sub format, the format engine instructs the devices directly; for fields further developed by a sub format, the format engine indirectly instructs the devices by passing a sub request to the format engine associated with that sub format. The format engines 54 thus functionally inter-depend in the same manner as their associated format and the requests passed between the engines specify the number of "bits required" by a higher level format of a lower level one. Each format engine 54 uses the "bits required" information together with the field order and width ("field bits") information contained in its format program to progress instruction of the devices in LFS cycle order.

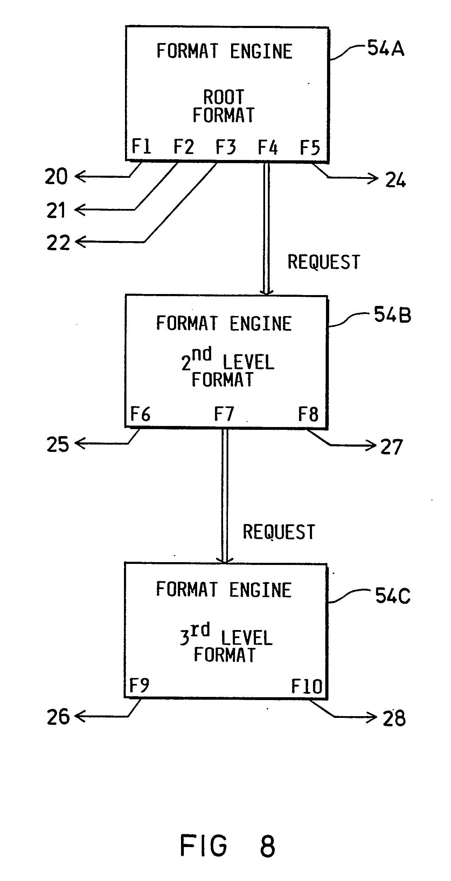

Figure 8 illustrates the functional inter-dependancy of the format engines in the case of a serial stream machine arranged to generate a serial bit stream having the overall format of Figure 3B. This overall format has three single-level formats so three format engines 54A, 54B and 54C are provided, these being respectively associated with the root format, second-level format and third-level format of Figure 3B. It is assumed that the leaf fields are filled by bits generated by the devices 20 to 22 and 24 to 28 shown in Figure 5B (the pattern devices 20, 22, 25, 27 and 27, the PRBS devices 21 and 28, and the CRC device 24 being, for example, respectively connected and arranged as the pattern device 40, the PRBS device 41 and the CRC device 42 of Figure 7.)

As can be seen from Figure 8, for fields F1, F2, F3 and F5 of the root format, the format engine 54A instructs the devices 20, 21, 22 and 24 respectively to process an appropriate number of bits. For field F4, the format engine 54A pass a request for 4 bits to the format engine 54B associated with the second-level format. In providing successive groups of four bits as required to fill field F4, the engine 54B directly instructs the devices 25 and 27 in respect of fields F6 and F8 while for field F7, the engine 54B passes a request for an appropriate number of bits to the format engine 54C associated with the third-level format. This engine 54C provides the required number of bits by directly instructing the devices 26 and 28.

The format engine corresponding to the root format of a multi-level format (for example, the format engine 54A in Figure 8) may be arranged to provide a requested number of bits by a requesting entity, or else can be set to run continuously (conceptually corresponding to a request for an infinite number of bits).

Figure 8 is only intended to illustrate the functional interconnection of the format engines 54 and the devices. The actual physical connection of individual format engines to each other and to the devices where the engines are implemented as discrete entities, may take a variety of forms. Thus with regard to the connection of the format engines to the devices, the format engines may be individually connected to each pertinent device, or each format engine may have its own bus arrangement for connection to the relevant devices, or the format engines may utilise a single bus arrangement common to all devices and format engines (as with the field bus 50 and lines SBCLK, SCKE, BUSY and LOAD of Figure 7). With regard to the interconnection of the format engines themselves, these may be individually connected to each other or each format engine may utilise a bus arrangement interconnecting it with format engines associated with the next lower format level, or all the format engines may be interconnected by a single common bus system. Furthermore, where a respective bus arrangement is used to connect each format engine to all its relevant devices, this same bus arrangement may also serve to connect the engine to any associated lower-level engines. Similarly where a single bus arrangement is used to connect all format engines to all devices, this same bus arrangement can also be utilised as a single common bus interconnecting the format engines.

As already noted above, an overall multi-level format such as that shown in Figure 3B can be linearised into its LFS cycle sequence to produce an overall 'single-level' format which assumes one particular relationship between the tributary streams that correspond to the single-level formats of the original multi-level format. Where it is only required to send or receive a serial bit stream having this particular LFS cycle sequence, then only one format engine is required, this engine being programmed with a format program corresponding to that LFS cycle sequence. Such an arrangement is, however, generally not preferred for a number of reasons including the resultant length of the format program and the fact that in practice it is extremely rare to know in advance the LFS cycle sequence of a serial stream to be received. As will be explained hereinafter, the use of a hierarchy of format engines each corresponding to a particular single-level format of the overall format, enables framing alignment to be achieved independently for each single-level format and avoids the need to consider the overall LFS cycle sequence of a stream being generated or received.

Format Engine - Format Program

Before describing in detail the general form of a format engine a description will first be given of the instructions used to compose a format program. Each format program is made up of a sequence of bit-processing instructions corresponding to respective fields of the single-level format associated with the format program. Each bit-processing instruction includes information as to the bit width of the corresponding field. Two types of bit-processing instruction are provided, namely;

- device instructions used to represent those fields of a format which are leaf-fields in the overall format hierarchy, ie. those fields which are not further developed by sub-formats;
- switch instructions for those fields of the single-level format which are further developed by sub-formats.

A device instruction serves to indicate that one or more corresponding devices are to be directly activated by the format engine to process one or more bits. The device instruction carries the field number of the corresponding field in the single level format; this field number is unique within the overall format hierarchy. A typical device instruction might be:

EXEC : FIELD 15 : 6

This instruction starts with the opcode EXEC indicating that it is a device instruction. The second element of the instruction is the field number, in this case "15". The third element of the instruction is the width of the field in bits, in this case the field is 6 bits wide.

Where the format program represents the nominal format of a serial stream to be received, then for reasons which will become clear hereinafter, a special form of device instruction is provided in respect of framing fields. This special form of instruction involves the use of the opcode EXECF rather than EXEC, the opcode being used to identify to the sequence controller of the format engine that the instruction relates to a framing field.

A switch instruction tells the format engine that the field associated with the instruction is further developed in a sub-format. The switch instruction includes an identifier for the sub-format. A typical switch instruction might be;

SWITCH : FORMAT 6 : 4

The first element of this instruction is the opcode SWITCH indicating the nature of the instruction. The second element identifies the sub-format to which control is to be switched, in this case sub-format number 6. The third element of the instruction is the bit width of the corresponding field, in this case four bits wide.

By way of example, the second level format shown in Figure 1B and constituted by fields F6, F7 and F8 would be represented by the following format programme:

EXECF : FIELD 6 : 1
SWITCH : FORMAT 3 : 3
EXEC : FIELD 8 : 2
LOOP

The "FORMAT 3" identified in the second instruction would be the third level format shown in Figure 1B. Note that the sequence of instructions terminates with an instruction LOOP, the purpose of which is simply to cause the format engine running the program to jump back to the beginning of the program.

## Format Engine - Functionality

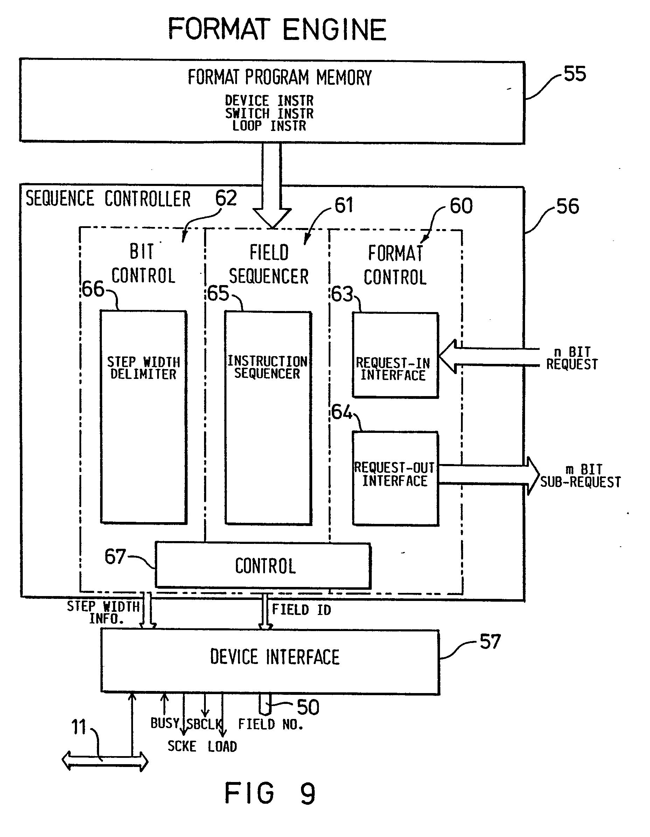

Turning now to a consideration of the general form of the format engine, as shown in Figure 9 each format engine 54 comprises a format program memory 55, a sequence controller 56 and a device interface 57. The format program memory 55 holds a format program of the above-described form for the single-level format associated with the format engine 54 concerned. The sequence controller is connected to receive a n-bit request from a higher-level format and to output an m-bit sub request to a lower-level format. The device interface 57 is connected to the serial bus 11, the field bus 50 and the lines SBCLK, SCKE, LOAD and BUSY.

Upon receipt of an n-bit request, the sequence controller 56 is operative to service this request by stepping through the format program stored in memory 55 and implementing each bit-processing instruction encountered until n bits have been processed. Where a device instruction is encountered, the sequence controller 56 passes field identity information and data on the number of bits to be provided for that field to the device interface 57. It is then the responsibility of the device interface 57 to instruct the devices themselves by passing the field number to the devices over the field bus 50 and synchronizing the processing of the desired number of bits via the serial bus clock signal SBCLK and the clock enable signal SCKE. Where a switch instruction is encountered, the sequence controller 56 passes a sub request for the appropriate number m bits to the format engine dealing with the sub format identified in the switch instruction. Upon n bits being processed, control is returned by the format engine to the requesting entity.

Considering the sequence controller 56 in more detail, this controller is responsible for ensuring that its associated single-level format is stepped through from field to field in a series of steps the widths of which are constrained by the field widths and by the "bits required" limitations placed on the running of the format by the n-bit request being serviced at any one time. The operation of the sequence controller 56 can be divided functionally into three sections as indicated by chain-dashed lines in Figure 9; these sections are a format control section 60, a field sequencer section 61 and a bit control section 62. The format control section 60 includes a request-in interface 63 for receiving the n-bit request to be serviced, and a request-out interface 64 for passing an m-bit sub request to a subservient format engine. The field sequencer section 61 includes an instruction sequencer 65. The bit control sections 62 includes a step width delimiter 66. The operation of the functional blocks 63-66 is controlled by a control block 67 which spans across all three sections 60, 61 and 62 of the sequence controller.

Upon receipt of an n-bit request by the request-in interface 63, the control block 67 causes the instruction sequencer 65 to step through the format program in the memory 55 until an appropriate number of bits have been processed. For each bit-processing instruction that becomes the current instruction during the running of the format program, the control block causes the sequence controller to effect an orchestration step during which the devices are either directly instructed by the device interface 57 of the format engine, or indirectly instructed by the passing of a m-bit sub request from the interface 64 to a subservient format engine. The width of each step is determined by the step width delimiter 66 on the basis of the width, or remaining width of the current instruction and the number of bits required to satisfy the current request; the width of the step is determined by the lesser of these two values. This step width information is passed, in the case where the current instruction is a device instruction, to the device interface 57 along with the field number associated with the current instruction; where the current instruction is a switch instruction the step width information is passed to the request-out interface 64 as the bit value of the sub request.

If the width of a step is determined by the width or remaining width of the current instruction, then at the end of the step the control block 67 causes the instruction sequencer 65 to fetch a new bit-processing instruction and a new orchestration step is then initiated. However, if the width of a step is set by the number of bits still required to satisfy the current request, then at the end of the step the control block 67 causes the request-in interface 63 to indicate to the requesting entity that it's request has been satisfied.

Where the request-out interface 64 has issued a sub request as a result of the current instruction being a device instruction, the control block 67 awaits the return of a request done message via the interface 64 from the subservient format engine before proceeding.

The device interface 57 may operate in synchronism with the sequence controller 56 in that the controller 56 is arranged to await completion of instruction of the devices by the interface 57 before proceeding to it's next step. Alternatively, the sequence controller 56 can be arranged to run ahead of the device interface 57; in this case, the device interface 57 is provided with queuing means for queuing the field number and step width data received from the sequence controller 56. As will become clear from the following description, in respect of framing fields being processed during the receipt of a serial bit stream, it is necessary for the sequence controller 56 and device interface 57 to be in step as the reference stream may be slipped relative to the received stream as a consequence of which the step width delimiter 66 can only determine the width of a step on the basis of what is actually happening on the serial bus 11 rather than on the basis of projected calculations.

With respect to the format engine concept illustrated in Figure 9, the LFS sequencer 16 of Figure 4 is effectively constituted by the sequence controllers 56 of all the format engines of the orchestrator 10 together with those portions of the device interfaces 57 outputting the field number on the field bus 50. The bit control means 17 of the Figure 4 orchestrator is constituted by the corresponding portions of the device interfaces 57 of the format engines of the orchestrator 10.

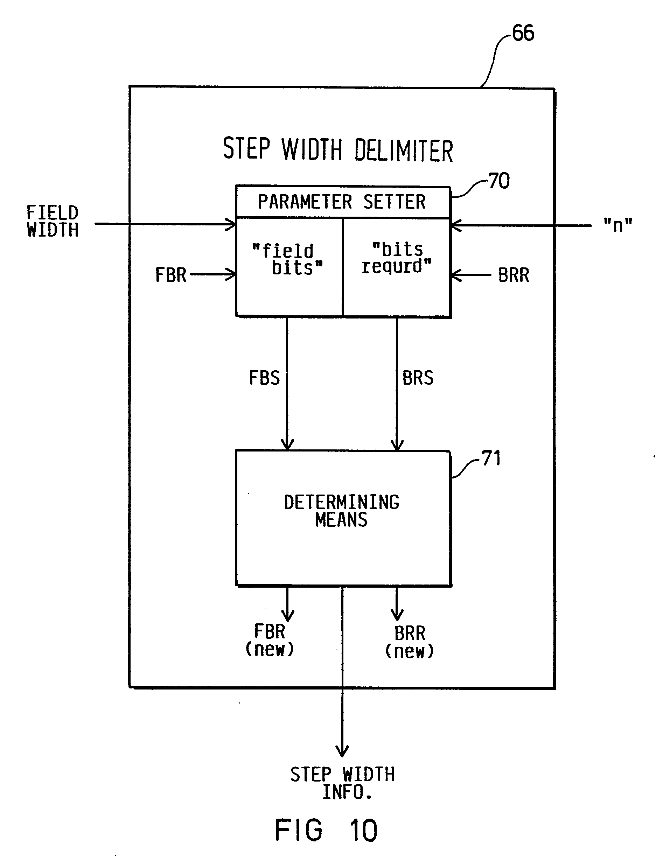

The step width delimiter 66, may take the general functional form illustrated in Figure 10. In this case, the delimiter 66 is made up of a parameter setter 70 and width determining means 71. The purpose of the parameter setter 70 is to determine at the start of each orchestration step, the value of the parameters that will determine the step width, these parameters being:
- the width or remaining of the current instruction, that is, the "field bits" outstanding for the current instruction at the start of the step (this value is designated FBS);
- the number of bits required to satisfy the current request, that is, the "bits required" to satisfy the current request at the start of the step (this value is designated BRS).

Where the current instruction is one that was only executed for part of its width when last accessed, the parameter setter 70 sets FBS to the value FBR of the numbers of bits remaining to be processed for that instruction; however, if the current instruction is a new one, then FBS is set to the field width of the instruction. Similarly, where the current bit request has been partially serviced by earlier orchestration steps, the parameter setter 70 sets BRS to the value BRR of the number of bits remaining to be provided to satisfy the request; where the request is a new one, then BRS is set to the request value N.

The values FBS and BRS are passed to the width determining means 71 which then determines the width of the current orchestration step. The determining means 71 carries out this determination by decreasing the "field bit" and "bits required" values, from their initial values of FBS and BRS respectively, on the basis of the actual or projected processing of bits by the bit-processing devices until at least one of these values has reached zero. The occurrence of this latter indicates that the full step width has been reached. In fact, the step width will correspond to the value of the lesser of FBS and BRS except where a slip is effected during framing, as will be more fully described below. As well as the step width information, the determining means 71 also determines the remaining values of the "field bit" and "bits required" counts, that is, the values of FBR and BRR. Of course, one of these values will be zero at the end of a step; the identity of which value is zero is passed to the control means 67 to enable the fetching of another instruction or completion of servicing of the current request as appropriate. The values FBR and BRR are passed back to the parameter setter 70 for use in determining FBS and BRS for the next step orchestrated by the sequence controller 56.

Format Engine - Software Embodiment

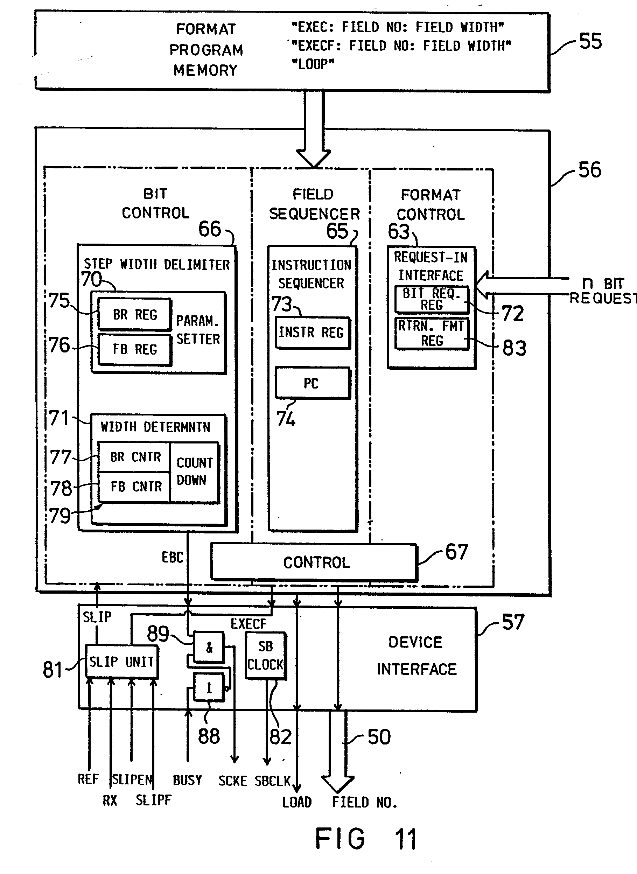

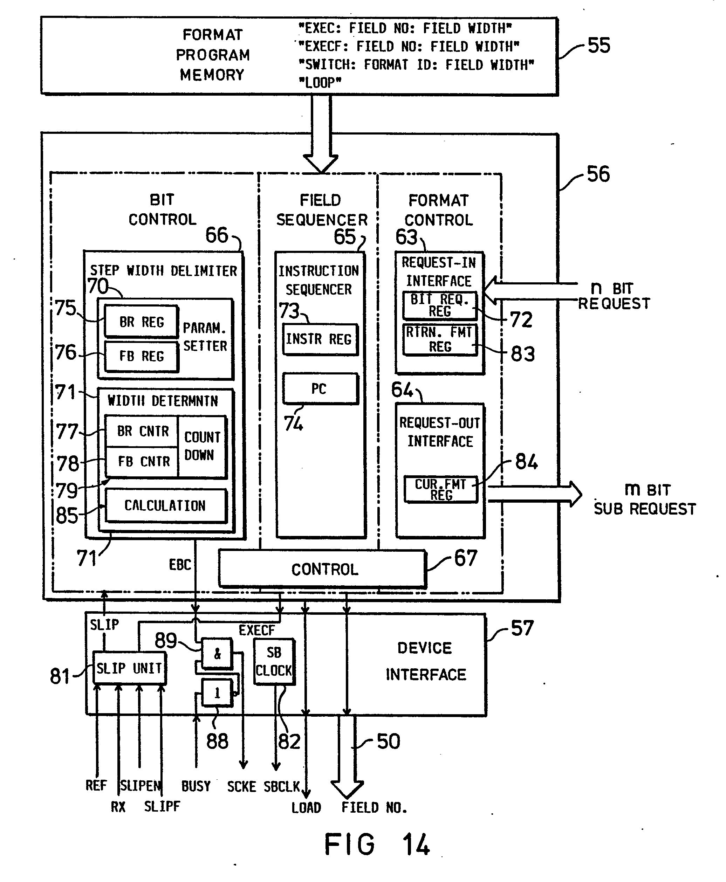

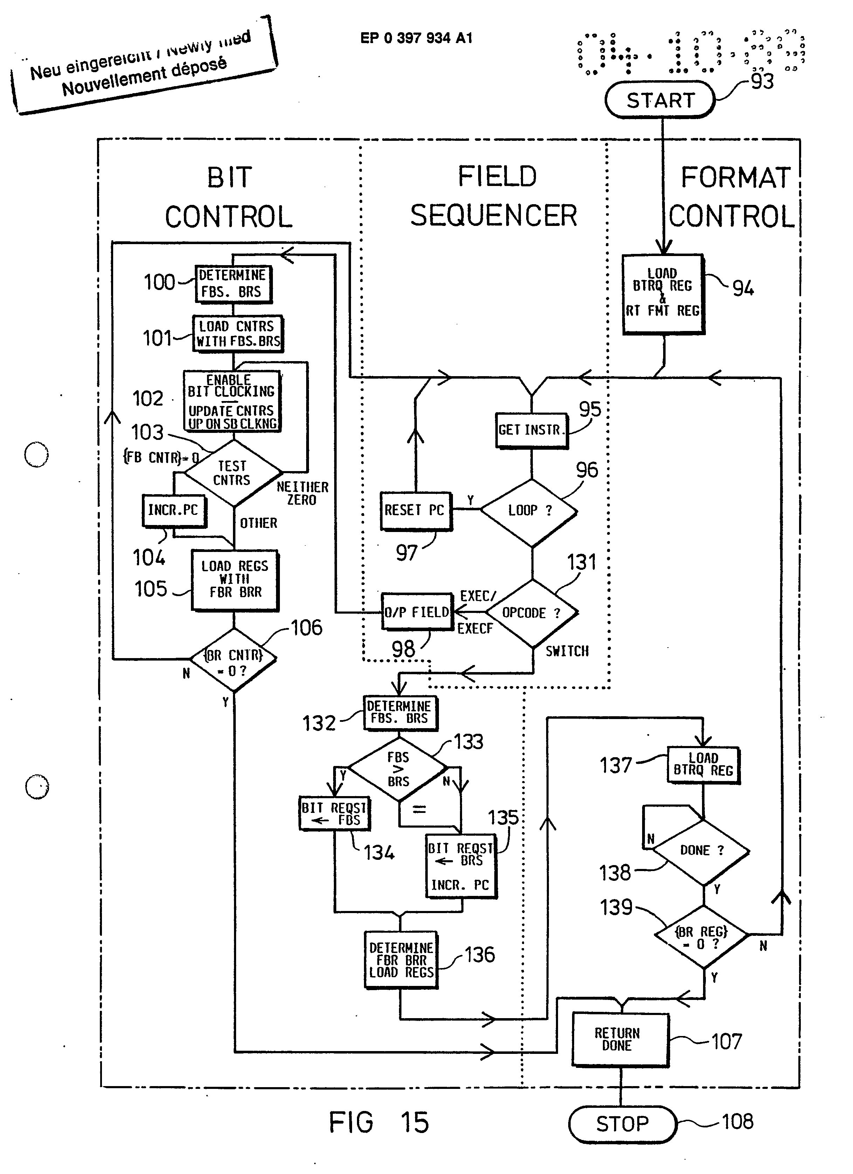

Two versions of a register-based software-implemented embodiment of the Figure 9 format engine will now be described in detail with reference to Figures 11 to 15. The first version, shown in Figures 11 to 13 is intended for a single-level format having no sub-formats and therefore does not include the request-out interface 64 for issuing sub-requests; the second version of the software-implemented format engine, shown in Figures 14 and 15 is similar to the first version but includes a request-out interface 64 and is therefore suitable for formats with dependent sub formats.

Figure 11 is a diagram similar to Figure 9 but showing the registers used in the first software-implemented version of the format engine. Registers 72 to 78 and 83 are provided as follows:

bit request register 72 -

this register functionally forms part of the request-in interface 63 and is used to store the value n of the request received by the format engine;

return format register 83 -

this register forms part of the request-in interface 63 and is used to store the return address of the requesting entity which may be either another format engine or another controlling agent;

instruction register 73 -

this register forms part of the instruction sequencer 65 and is used to hold the current instruction of the format program;

program counter 74 -

this register also forms part of the instruction sequencer 65 and holds the program address of the current instruction;

BR register 75 -

this register forms part of the parameter setter 70 of the step width delimiter 66. The BR register 75 is used to hold the "bits required" remainder BRR;

FB register 76 -

this register forms part of the parameter setter 70 and is used to hold the "field bits" remainder FBR;

BR counter 77 -

this register forms part of a count down unit 79 that constitutes the width determining means 71 of the step width delimiter 66. The BR counter 77 holds the current "bits required" value during the execution of an orchestration step by the sequence controller 56; FB counter 78 -

this register also forms part of the count down unit 79 and holds the current "field bits" value during the execution of an orchestration step.

The count down unit 79 that constitutes the width determining means 71 in the Figure 11 format engine, determines the width of the current orchestration step by decrementing the counters 77 and 78 in correspondence to the actual processing of bits by the bit-processing devices of the serial stream machine.

The device interface 57 of the Figure 11 format engine is a simple hardware device. With respect to enabling devices for the current step, the interface 57 is arranged simply to place on the bus 50 the field identity, relevant to the current step, that is output by the instruction sequencer 65; the interface 57 also acts to pass on the LOAD signal generated by the sequence controller 56 to load the field identity into the bit-processing devices. With respect to device activation for the bits of the current step, the interface 57 includes a serial bus clock 80 operative to output the continuous serial bus clock signal SBCLK, and an inverter 88 and AND gate 89 that combine the signal BUSY and an enable serial-bus signal EBC output by the step width delimiter 66 (as will be described below), such as to generate the serial-bus clock enable signal SCKE when a bit is to be processed by the enabled bit-processing devices and none of the devices is busy. The signal EBC is output by the delimiter 66 while a step is current and an end condition has not been reached; this signal thus carries step width information on the current step, the signal being de-asserted when an end condition is reached. Finally, the device interface 57 includes a slip unit 81 operative to generate a slip signal SLIP which is fed to the step width delimiter 66. The slip signal is set true if there is discrepancy between the bit streams on the receive and reference lines RX and REF while the signal SLIPEN is asserted; the slip signal is also set true if the signal SLIPF is asserted.

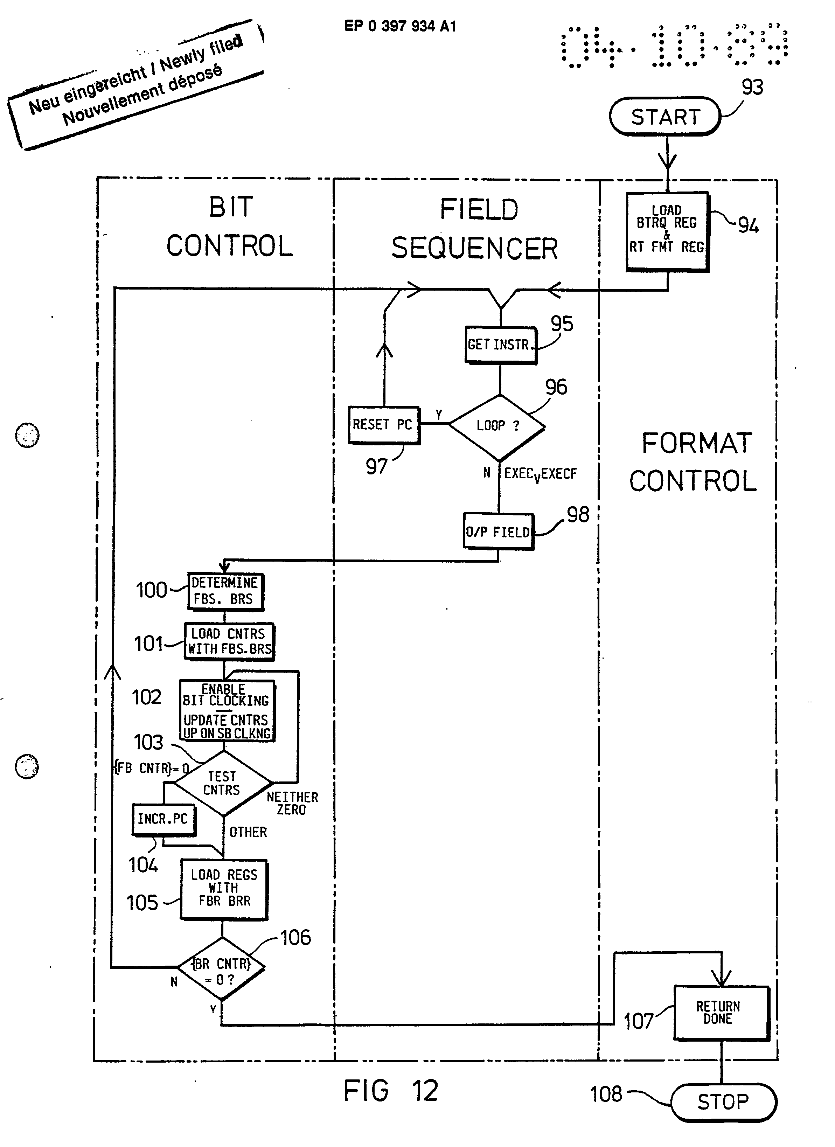

Figure 12 is a flow diagram of a software program for implementing the functionality of the Figure 11 sequence controller 56 utilising the registers shown in Figure 11. Upon a request being passed to the format engine, the program is started (step 93). First the bit request register 72 is loaded with the value n of the request and the return format register 83 is loaded with the return address of the requesting entity (step 94). Next, the current instruction of the format program is fetched (step 95) utilising the program address stored in the program counter 74; the current instruction is stored in the register 73. The current instruction is thereafter decoded (step 96) and if it is a loop instruction the program counter 74 is reset (step 97) and a new instruction is then fetched (step 95). If the current instruction is not a loop instruction, then it must be a device instruction (EXEC or EXECF) and the identity of the relevant field is output on the field bus 50 (step 98) via the device interface 57 (the latter asserting the LOAD signal to indicate to the bit-processing devices that the bus 50 carries a valid field number). In this manner, where the current instruction is a device instruction, the devices relevant to the instruction are enabled.

The steps 95 to 98 together provide the functionality of the instruction sequencer 65 and the related portions of the control block 67 shown in Figure 11.

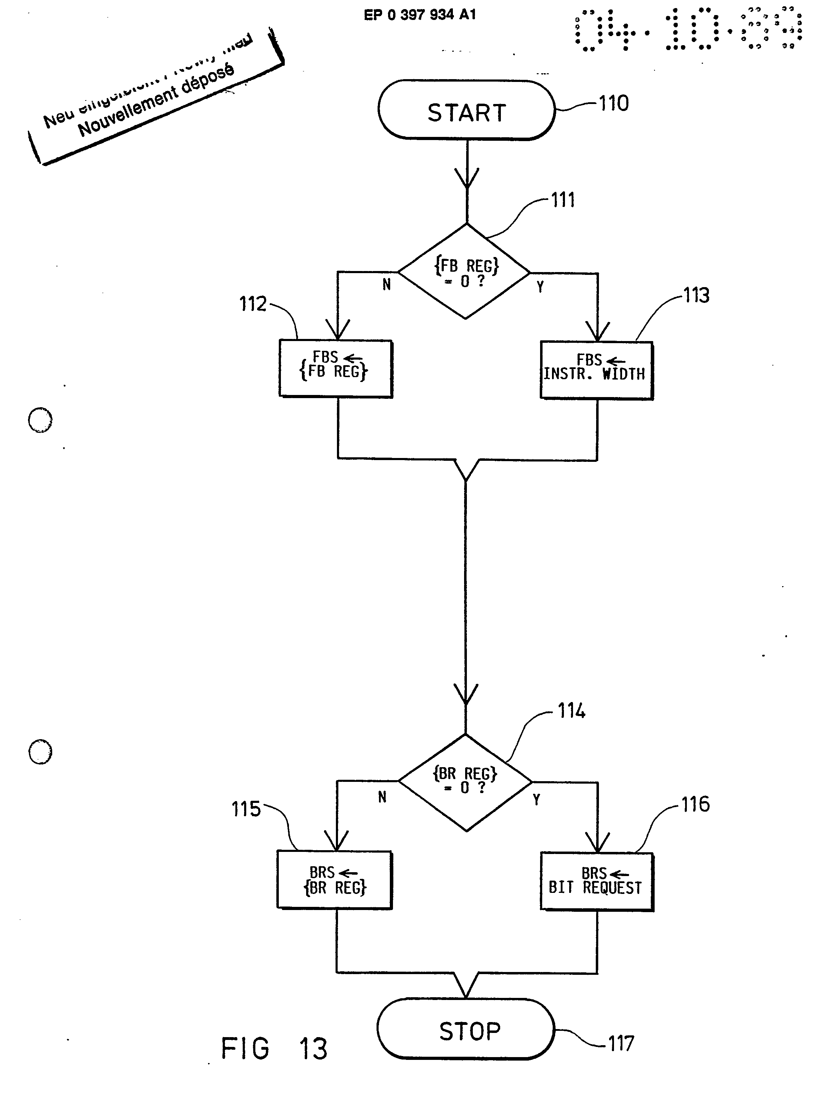

Following the enabling of the selected bit-processing devices, the program represented in Figure 12 proceeds to orchestrate the processing of an appropriate number of bits by the enabled devices. To this end, the values FBS and BRS are first determined (step 100) by the process illustrated in Figure 13. Referring to that Figure, upon start of the process (step 110) the value FBS is first determined by examining the contents of the FB register 76 (step 111). If the contents of this register are zero indicating that the last-executed device instruction had been fully utilised (no "field bits" remaining), the value of FBS is set to the width of the new instruction held in the instruction register 73 (step 113). However, if the contents of the FB register 76 are not zero, then the value FBS is set to the "field bits" remainder value FBR held in the FB register 76. The process illustrated in Figure 13 then goes on to determine the value BRS by examining the contents of the BR register 75 (step 114) if the contents of this register are non zero indicating that the current request has not been fully satisfied, then BRS is set to the value stored in the register 75. However, if the contents of the BR register 75 are zero, the value BRS is set to the value n held in the bit request register 72 (step 116). Thereafter the Figure 13 process terminates (step 117).

Once the values FBS and BRS have been determined, these values are loaded into the FB counter 78 and BR counter 77 respectively (step 101 of Figure 12). Next, a bit clocking enable signal EBC is output to the device interface 57 to cause the latter to activate the enabled bit-processing devices for one bit by asserting the signal SCKE (note if the signal BUSY is asserted, setting of the signal SCKE true will be delayed pending the signal BUSY being de-asserted).

Upon the bit-processing devices being clocked for one bit, the values stored in the counters 77 and 78 are updated (step 102). Except during framing alignment between a serial bit stream being received and a reference sequence being orchestrated by the format engine, this updating simply involves decrementing both counters 77, 78; the updating process carried out during framing alignment will be described hereinafter.

Following updating of the counter 77 and 78, these counters are tested (step 103). If neither counter is zero, then step 102 is repeated to clock another bit on the serial bus. If the contents of either counter is zero, then the processing of bits for the current orchestration step is terminated and the "bits required" and "field bits" remainder values BRR and FBR are loaded into the registers 75 and 76 respectively, these values being the remaining values held in the counters 77 and 78 (step 105). At the same time, if the value of the FB counter 78 is zero, the program counter 74 is incremented since the current instruction has been fully processed (step 104).

If the contents of the BR counter 77 are zero (step 106), this indicates that the current request has been fully satisfied and the Figure 12 program can be terminated after returning a message "done" to the requesting entity using the return address stored in register 83 (steps 107 and 108). However, if the contents of the BR counter are non zero, then a new instruction must be fetched and the relevant devices enabled and activated for the next orchestration step.

It may be noted that it is, in fact, only necessary to have one register for storing a remainder value FBR or BRR and not the two registers 75 and 76 as illustrated Figure 11. The reason for this is that an orchestration step will only terminate when one or other of the "field bits" and "bits required" is zero. Of course, where only one remainder register is provided, it will be necessary to indicate whether the value stored in the register is a field bit value or a bits required value.

The flow of control represented by the Figure 12 program provides the functionality of the control block 67 shown in Figure 11.

The software-implemented embodiment of the format engine shown in Figures 14 and 15 will next be considered, this being similar to that shown in Figures 11 to 13 but including a request-out interface 64 for passing sub requests to a subservient format engine.

Considering the functional block diagram of the format engine showed in Figure 14, this differs from that shown in Figure 11 by the addition of a request-out interface block 64 including a current format register 84, and of calculation means forming part of the width determining means 71. As already outlined, the purpose of the request-out interface 64 is to pass a sub-request to a subservient format engine. The current format register 84 stores an identification code for the format engine, this code being passed to the subservient format engine in a sub-request to enable the subservient engine to reply back to the requesting format engine when the sub-request has been serviced.

The calculation means 85 serves to determine the width of an orchestration step relating to a switch instruction. The need to provide this calculation means rather than relying on the countdown means 78 results from the fact that at the time of generating a sub-request, the step width can only be determined on the basis of the projected processing bits and not on the actual processing bits, the countdown means 78 relying on the latter. The calculation means 85 may take any appropriate form; for example, it may, in fact, effect a countdown process utilising the start values FBS and BRS, the projected step width being the number of counts needed to reduce FBS or BRS to zero. Alternatively, the calculation block 85 may function by determining the lesser of FBS and BRS and then taking this lesser value to be the step width. In this latter case, the values of FBR and BRR are then determined by a simple subtraction process.

Figure 15 is a flow diagram similar to that shown in Figure 12, representing a software program for implementing the functionality of the Figure 14 functional block diagram. Figure 15 differs from Figure 12 by the addition of a program branch constituted by steps 131 to 139 for handling switch instructions. Accordingly, only this branch will be described below.

The Figure 15 program needs to discriminate between two types of instruction, namely a device instruction (EXEC) and a switch instruction (SWITCH). This task is carried out in step 131. In the presence of a device instruction, steps 98 onwards are carried out as in the Figure 12 program; for a switch instruction, steps 132 to 139 are implemented. Considering further the case of a switch instruction, first the "field bit" and "bits required" values FBS and BRS are determined for the start of the orchestration step concerned (step 132). Thereafter these values are compared (step 133). The value m of the sub-request to be made in response to this SWITCH instruction is then set to the lesser of the values FBS and BRS (steps 134, 135). At the same time, if the lesser value is FBS or if FBS is equal to BRS, the program counter 74 is incremented; this is done because once the SWITCH instruction has been carried out for a number of bits equal to FBS, it will be necessary to fetch a new instruction. After the value m of the sub-request has been determined, the "field bit" and "bits required" remainder values FBR and BRR are determined (step 136) and loaded into the registers 76, 75. A sub-request is then transmitted to the subservient format engine identified in the switch instruction (step 137). Thereafter the program is suspended until the subservient format engine transmits a message "done" back to the instructing format engine to indicate that it has serviced the sub-request (step 138). A check is then made to see whether the n-bit request being serviced by the current format engine has now been completed, this check being made by examining the contents of the BR register 75 (step 139). If the contents of the register 75 are zero indicating that the current request has been completed, step 107 is executed to return a message "done" to the requesting entity. However, if the contents of the register 75 are non zero, the program loops back to step 95 and continues as before.

It will be appreciated that steps 133 to 136 constitute the step-width calculation means 85 of Figure 14.

## Alignment with Received Stream

The foregoing description of the operation of the format-engine embodiments illustrated in Figures 11 to 15 has assumed either that the devices are being operated to generate a serial stream or, where a serial stream is being received and compared with a reference sequence, that alignment between the reference and received streams has already been achieved. The present section describes how alignment may be achieved.

Generally the relationship between the tributary streams that notionally make up a hierarchically structured received stream will be initially unknown; indeed, this relationship may vary with time. Accordingly, alignment between the received stream and reference sequence has to be acquired for each single-level format of the overall hierarchical structure; thus, alignment is of concern to each format engine but each engine need only concern itself with alignment in respect of its associated single-level format.

Alignment is achieved using the framing field or fields in a format. The contents of the framing field are predetermined and therefore permit the reference sequence and received several stream to be matched up. Since occasional errors in the received stream can usually be expected, it is generally inefficient to instigate an alignment process immediately a single bit mismatch is noticed between the reference sequence and serial stream. Instead, a test that considers the incidence of errors over a number of framing bits will be used to determine whether framing has been lost. In the present serial stream machine, this test is effected by the slip controller device 44 (Figure 7), one such device being associated with each format engine, that is, with each single-level format. The slip controller device 44, is programmed with the criteria to be used to determined whether framing has been lost and this device is enabled and activated during the framing fields of the associated format to take in and compare the bits on the reference and receive lines REF and RX. Upon framing lose being determined, the line SLIPEN is asserted. Conversely, framing alignment is not judged by the matching of one framing bit in the reference sequence and received stream but by looking at the incidence of errors over a number of framing bits. Again this testing is done by the slip controller 44 and only when frame alignment is present according to this testing will line SLIPEN be de-asserted. Each slip controllers 44 only controls the line SLIPEN during the framing field of the associated format, the line being used by other slip controller 44 at other times.

When line SLIPEN is asserted, operation of an alignment process is enabled in the relevant format engine and the associated bit- processing device generating the framing-field bits. The alignment process may, for example, involve slipping the reference sequence and received stream by one bit relative to each other in the presence of a mismatch between the current bits of the reference sequence and received stream during the processing of a framing field of the format concerned. This alignment process ("bit-slip-on-error") is used in the present embodiment of the serial stream machine.

With regard to the format engine embodiments described above with reference to Figures 11 to 15, the "bit-slip-on-error" alignment process is implemented as follows. As can be seen in Figures 11 and 14, the device interface 57 is provided with a slip unit 81 fed with the reference and receive lines REF and RX, with the line SLIPEN, and with an input EXECF derived from the instruction register 73 and indicative of the presence of a framing-field instruction. This unit 81 is operative to produce a slip signal on line SLIP whenever line SLIPEN is asserted and there is a mismatch between the signals on lines REF and RX during the processing of a framing field. Assertion of the signal on line SLIP indicates that the reference sequence and received stream should be slipped relative to each other by one bit. The signal on line SLIP is fed back to the width determining means 71 of the sequence controller 56 and, more particularly, to the count down means 78 that controls the width of an orchestration step during execution of a framing field instruction. When the signal on line SLIP is asserted, the "field bits" count held in the FB counter 78 is not decremented during step 102 of the sequence program (Figures 12 and 15); the "bits required" count held in the BR counter 77 is, however, decremented as normal during step 102. As a result, progress through the format program, and thus the format associated with the format engine, is halted for one bit, thus slipping the reference sequence orchestrated by the engine relative to the received stream. Alignment at the higher levels in the overall format is not affected because the "bit required" count is still decremented.

Within the bit-processing device generating the bits of the reference sequence for the framing field, the "bit-slip-on-error" alignment process calls for the output of the device to be kept the same for the next bit for which it is enabled and activated. To this end, the device is provided with a slip unit, similar to the slip unit 81, which when the SLIPEN is asserted and there is a mismatch between the signals in lines REF and RX, generates a slip signal. This signal is used internally within the device to suspend for one bit the advance of the process used to generate bits (for example, to suspend clocking of a PRBS generator, or the shifting of a circulating shift register holding a pre-determined pattern).

It should be noted that the width determining means 71 of the step width delimiter 66 must determine the width of a step involving a framing field on the basis of the actual processing of bits by the devices. This is because it is not possible to predict in advance whether a slip operaticn will be required due to mismatch between lines REF and RX, so that the decrementing of the "field bit" count cannot be predicted. Thus, with respect to the format-engine embodiments of Figures 11 to 15, the width determining means 71 must be constituted by the count down means 79 rather than the calculation means 85, for the processing of framing fields during receipt of a serial bit stream.

As shown in Figure 7, the slip controller device 44 also has an output connected to line SLIPF. This line, like the line SLIPEN, is connected to the slip unit 81 of each format engine and the corresponding units of the bit-processing devices. The purpose of the line SLIPF is to enable the slip controller 44 to force a slip regardless of whether or not there is mismatch between the signals on the lines REF and RX. This may be required when implementing alignment processes more involved than a simple "bit-slip-on-error" process; for example, the alignment heuristic may call for a slip of eight consecutive framing bits. When line SLIPF is asserted, the slip unit 81 will produce a slip signal on line SLIP provided the current instruction is a framing-field instruction.

Format Processor - General

Within any hierarchy of format engines required to orchestrate the execution of a multi-level format only one format engine will be activated at any one time. As a result, it is possible to utilise the same hardware and program elements to implement each format engine as it is activated provided separate provision is made for:

a) storing the format program associated with each format engine (the format program memory 65 of the Figure 14 embodiment);

b) storing data indicative of the current position within each format program (the program counter 74 and FB register 76 of the Figure 14 embodiment);

c) storing data indicative of the state of service of any outstanding request (the BR register 75 of the Figure 14 embodiment); and

d) storing the identity of the entity generating any current request being serviced by a format engine (the return format register 83 of the Figure 14 embodiment).

To implement any particular format engine, the instances of items (a), (b), (c) and (d) associated with that engine, are functionally integrated with the common elements by appropriate configuration means supplied with the identity of the format engine to be implemented.

Such an arrangement, herein termed a "formats processor", still functionally comprises a plurality of format engines but now the overhead in providing additional engines to implement further single-level formats is much reduced.

Formats Processor - Software Embodiment

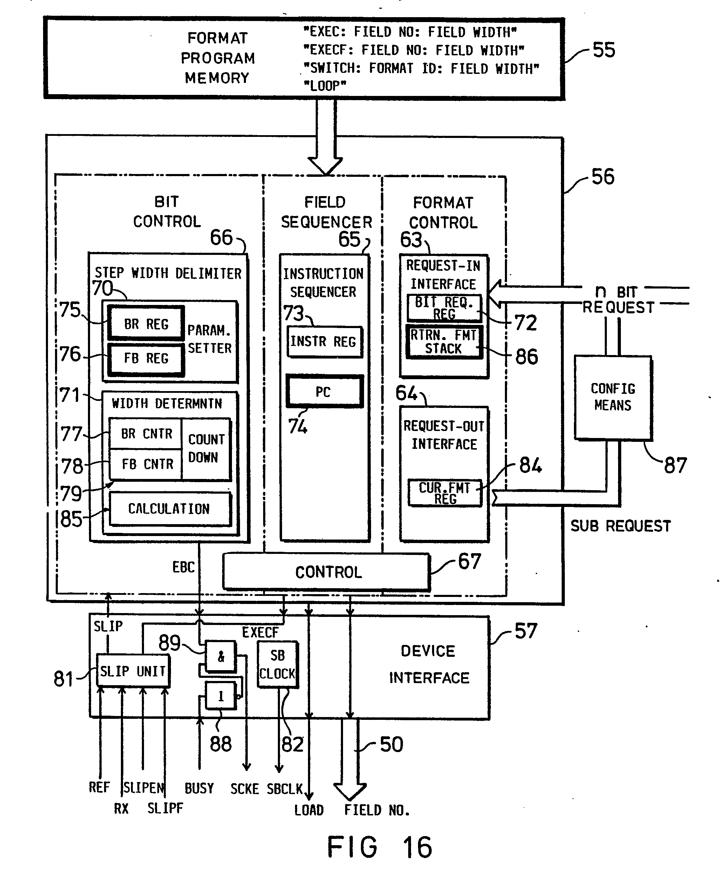

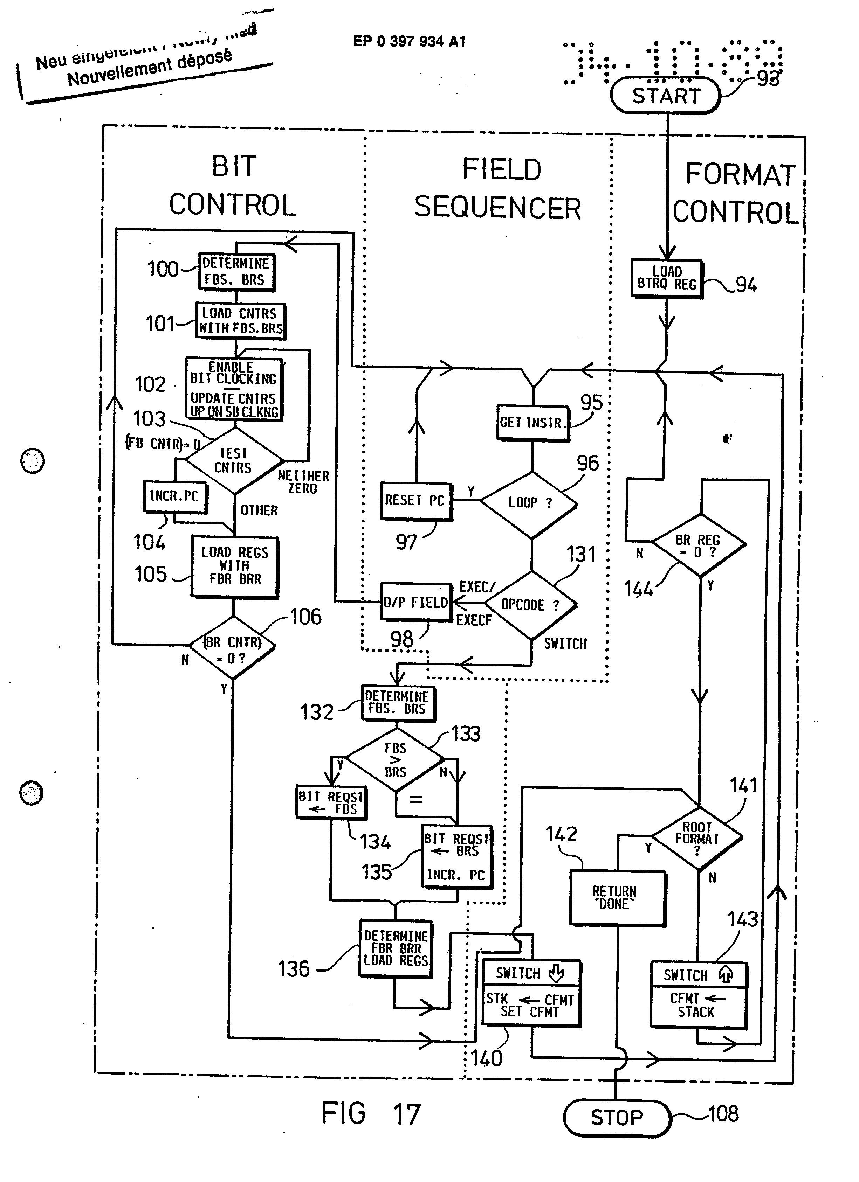

Figures 16 and 17 illustrate a formats processor based on the register structure and control program of the format engine described above with reference to Figures 14 and 15.

As can be seen from the functional block diagram of Figure 16, the basic registers and other elements of the formats processor correspond closely to those of the Figure 14 format engine. However, in the case of the Figure 16 formats processor, a respective program memory 65, program counter 74, BR and FB registers 75 and 76, and return format register is provided for each format engine (single-level format) required; this multiple provision is indicated by the bold outline of these elements in Figure 16. The multiple provision of the return format register takes the form of a return format stack 86.

In addition to the format-engine elements illustrated in Figure 16, the Figure 16 formats processor also functionally comprises configuration means 87 which:

a) when a sub request is generated, implements the called format engine by functionally integrating the appropriate instances of the elements 55, 74, 75, 76 with the common elements, and

b) when a sub-request has been serviced, re-implements the calling format engine by functionally integrating the appropriate instances of elements 55, 74, 75, 76 with the common elements.

The program for implementing the software embodiment of the formats processor is shown in Figure 17. As can be seen, this program is very similar to the format engine program of Figure 15. The differences that are present relate to the steps undertaken to implement a switch instruction after calculation of step width and loading of the remainder registers (that is, after step 136), and the steps undertaken following completion of servicing a request.

More particularly, to implement a switch instruction by switching to a subservient format engine and passing it a sub request, after step 136 is carried out, new step 140 is effected. This step transfers the former current format identity held in register 84 to the top of the stack 86, stores the new format identity in the register 84, loads the sub request value into the bit request register 74, and utilises the new format identity to functionally activate the appropriate instances of elements 55, 74, 75 and 76. Thereafter, the program returns to step 95 to fetch the first instruction from the newly activated format program memory 55 and processing proceeds as in the case of the Figure 15 format-engine program.

Upon the completion of servicing of a request (exit 'Y' from step 106), step 141 is carried out to test whether the current format is the root format (that is, no further format identities held in stack 86). If the current format is the root format, a message 'done' is returned by step 142 to the agent initiating operation of the formats processor. However, if the current format is not the root format, step 143 is carried out to reinstate the format engine that issued the request just completed. Step 143 transfers the format identity on top of the stack 86 to the current format register 84 and utilises this new current format identity to functionally activate the appropriate instances of elements 55, 74, 75, 76. Thereafter the contents of the BR register 75 are examined (step 144) to check whether the request being serviced by the newly implemented format engine is now complete. If this is the case, step 141 is next executed, otherwise an instruction is fetched (step 95) and servicing of the current request continues.

The configuration means 87 of Figure 16 are functionally constituted by steps 140 of 143 of Figure 17.

From the foregoing, it will be appreciated that the embodiment of the formats processor illustrated in Figures 16 and 17 functionally implements each format engine as and when required during orchestration of the bit-processing devices in accordance with the multi-level hierarchical format represented by the single-level format programs stored in the memories 55.

Format Processor - Hardware Embodiment

The software-implemented version of the formats processor described above with reference to Figures 16 and 17 is intended to use a general purpose microprocessor system. As such, the software version of the formats processor suffers from the processing overheads involved with this arrangement, namely the considerable number of fetch-execute microprocessor instruction cycles needed to carry out the steps of the Figure 17 program necessary to execute one instruction of a format program. For this reason, the software version of the formats processor can only generate/receive serial bit streams at a relatively modest rate. Accordingly, it is preferred to use a specialised hardware processor to implement the core of the formats processor, (namely, the sequence controller 56) as this enables higher rate streams to be generated/received.

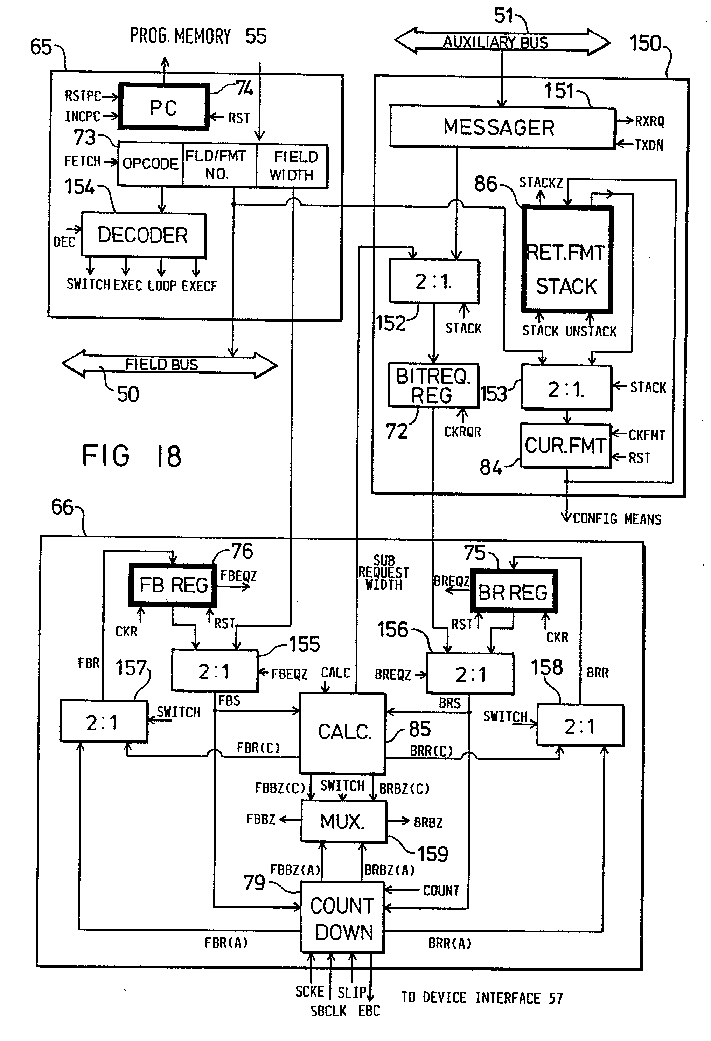

A description of a hardware implementation of the formats processor will now be given with reference to Figures 18 to 22. It may be noted that although no separate description is given of a hardware embodiment of a single format engine, such an embodiment can be readily derived from the hardware version of the formats processor, as will be apparent to persons skilled in the art.

The formats processor of Figures 18 to 22 has the same general functional form as that of Figures 16, 17. More particularly, they both comprise a program memory 55 for each format, a sequence controller 56, and a device interface 57. Indeed, the program memories 55 and device interface 57 are identical for both formats processors and these elements are therefore not described below for the embodiment of Figures 18 to 12. The circuitry of the sequence controller of the hardware formats processor is shown in Figure 18 (note that for reasons of clarity, the inter-connections between units in Figure 18 have been shown as single lines whereas in practice many of these connections will be made up of a number of lines for passing data in parallel form, as will be apparent to the skilled reader). As can be seen, the Figure 18 circuitry includes the same basic registers as shown in Figure 16 for the software formats processor. More particularly, the Figure 18 sequence controller includes a bit-request register 72, a return-format stack 86, a current-format register 84, an instruction register 73, a program counter 74, a BR register 75, and an FB register 76; as with the Figure 16 sequence controller, there are as many instances of the elements 74, 75, and 76 as there are single level formats.

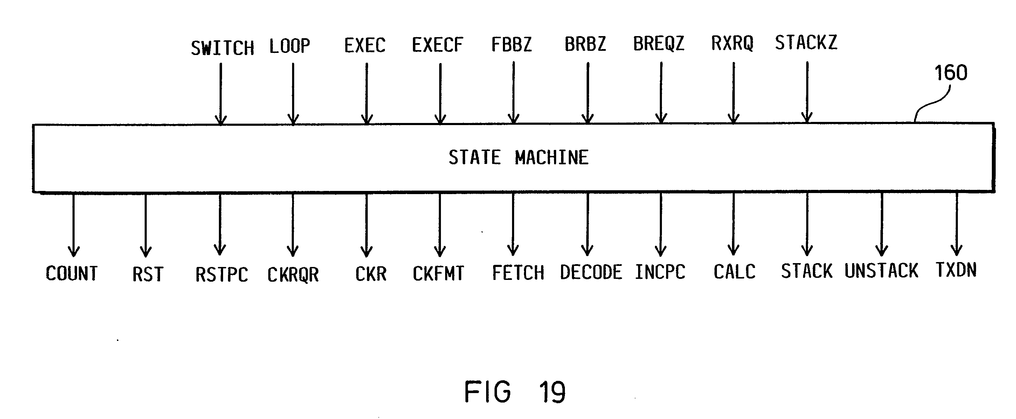

The Figure 18 sequence controller comprises a format-control unit 50 that functionally corresponds to a combination of the request-in and request-out interfaces 63, 64 of Figure 16, an instruction sequencer 65 functionally equivalent to that of Figure 16, and a step-width delimiter also functionally equivalent to that of Figure 16. Overall control of the Figure 18 sequence controller is effected by a control state machine 160 (Figure 19).

Considering the format-control unit 150 in more detail, this unit comprises, in addition to the bit-request register 72 and the return-format stack 86, a messager 151 and two 2:1 multiplexers 152, 153. The messager 151 is connected to the auxiliary bus 51 and is arranged to receive a root-format request from the workstation 53 and to transmit a message "done" back to the workstation upon the request being fully serviced. The messager 151 is connected to the bit request register 72 via the multiplexer 152 to enable the value of the root request to be passed to the register 72. Messager 151 is operative to output a status signal RXRQ upon a request being received and to transmit a "done" message in response to a control signal TXDN.

The multiplexer 152 also receives as an input, a sub-request width signal generated by the step width delimiter 66 in response to a switch instruction. The multiplexer 152 is operative to pass this sub-request width to the bit request register 72 in the presence of a control signal STACK. When STACK is not asserted, the output of the messenger 151 is connected to the register 72.

The bit-request register 72 is loaded upon receipt of a clocking control signal CKRQR.

The current-format register 84 initially contains an address corresponding to the memory address of the memory 55 in which the root format program will have been loaded. In the present embodiment, the root format program is always loaded starting at the same memory address, the register 84 being resettable to this present address by assertion of a control signal RST. An alternative would be to arrange for the starting address for the root format program to be passed to the formats processor together with the initial root format request.

Upon traversing the format hierarchy, the current-format register 84 will be either loaded with the identity of a new sub format as contained in a switch instruction held in the instruction register 73 (this occurs during descent of the format hierarchy), or with the identity of a calling format to which control is being returned, this format identity being taken off the top of the return format stack 86 (this occurs during ascent of the format hierarchy). The multiplexer 153 determines the source of the format identity next loaded into the current-format register 84, assertion of the control signal STACK setting the multiplexer to pass the format identity output by the instruction register 73. The current format register 84 loads the format identity passed to it by the multiplexer 153 upon receiving a clocking control signal CKFMT.

The output of the current-format register 84 feeds the return format stack 86. Stacking and unstacking of the return format stack 86 is controlled by control signals STACK and UNSTACK. The return format stack 86 is operative to output a status signal STACKZ when the stack is empty.

The output of the current-format register 84 is also fed to configuration means equivalent to those illustrated at 87 in Figure 16, the purpose of the configuration means being to select the appropriate instances of the elements 55, 74, 75 and 76.

The instruction sequencer 65 comprises, in addition to the program counter 74 for the current format and the instruction register 73, an instruction decoder unit 154. The program counter 74 feeds the address for the current instruction to the program memory 55 storing the current format program. The program counter 74 is incremented by a control signal INCPC. The current instance of the program counter 74 can be reset to a value corresponding to the start of the format program by a control signal RSTPC. All instances of the program counter 74 can be simultaneously reset by the control signal RST.

The instruction register 73 is operative to load the instruction pointed to by the program counter 74 upon assertion of a control signal FETCH. The "opcode" portion of this instruction is fed to the decoder unit 154 which, upon receipt of a control signal DEC, decodes the opcode and outputs an appropriate status signal SWITCH, EXEC, EXECF and LOOP. The portion of the instruction register 73 containing the field-number'format-identity is connected to feed the field bus 50 or the current format register 84 (via multiplexer 153) as appropriate. The portion of the instruction register 73 holding field width information is connected to feed the step-width delimiter 66.

The step width delimiter of Figure 18 comprises the same functional blocks as that of Figure 16, namely:
- a parameter setter constituted in Figure 18 by the BR register 75, the FB register 76 and multiplexers 155 and 156; and
- step width determination means constituted in Figure 18 by calculation means 85, countdown means 79 and multiplexers 157, 158 and 159.
The identity of the registers 75 and 76 does, of course, depend on the identity of the current format being executed by the formats processor.

The multiplexer 155 is arranged to output the value FBS and is accordingly fed with the output of the FB register 76 and with the output of the field width portion of the instruction register 73. As already described FBS will be set to the value held in the FB register 76 unless this value is zero; this is achieved in the Figure 18 embodiment by means of an output signal FBEQZ generated by the register 76 when its contents are zero, this signal being used to set the multiplexer 155 to pass the field width information from the instruction register 73. The FB register 76 is loaded with the field bit remainder value FBR passed to it by the output of the multiplexer 157 upon the register 76 receiving a clocking control signal CKR.

The BR register 75 and multiplexer 156 are operative to generate the value BRS in a similar manner to that by which the FB register 76 and multiplexer 155 generate the value FBS. Thus, the multiplexer 156 receives the output from the BR register 75 and the output from the bit request register 72. An output signal BREQZ generated by the register 75 when its contents are zero, is used to control the multiplexer 156 to set the value BRS equal to the contents of the register 75 unless these contents are zero in which case the contents of the register 72 determine the value BRS. The BR register 75 is loaded with the remainder value BRR passed to it from the output of the multiplexer 158, upon receipt of the clocking control signal CKR.

All instances of the registers 75, 76 are arranged to be reset to zero upon assertion of the control signal RST.

With respect to the step-width determination means 71, the values FBS and BRS are fed both to the calculation means 84 and to the countdown means 79 to enable the determination of the width of the current step. In the present embodiment, the countdown means 79 is operative to determine the step width for EXEC and EXECF instructions while the calculation means 85 determines step width for SWITCH instructions (this width corresponding to the sub-request width).

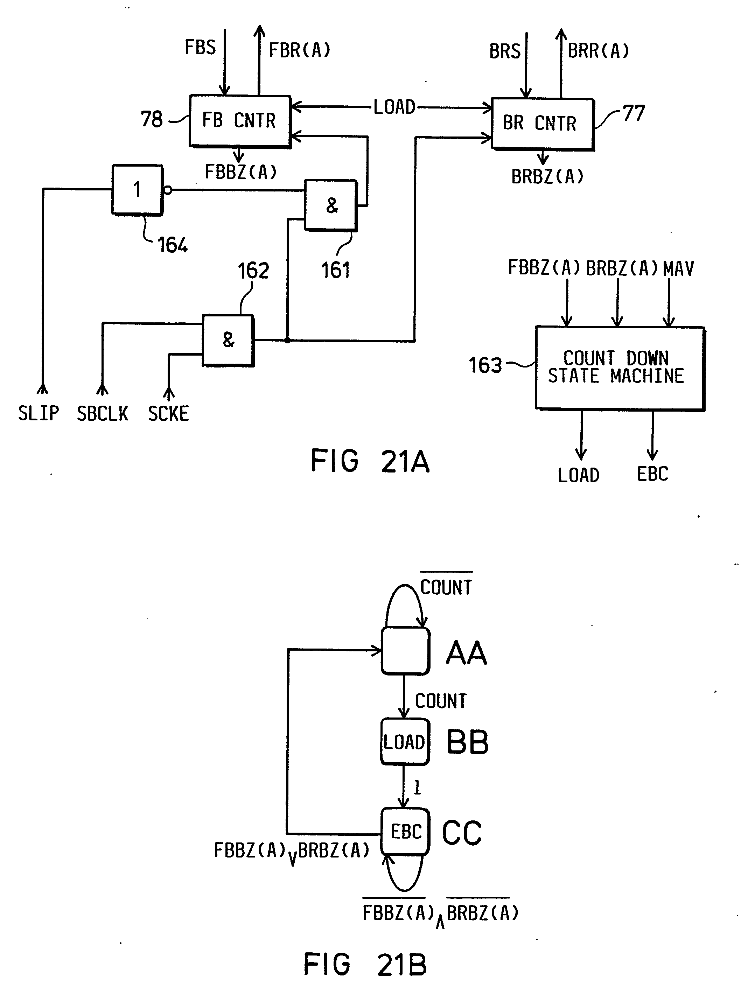

Operation of the countdown means 79 is initiated at the beginning of an orchestration step relating to an EXEC or EXECF instruction by a control signal COUNT. The countdown means 79 will be described more fully hereinafter with reference to Figures 21A and 21B. For the present it is sufficient to note that it exchanges signals SLIP, EBC, SCKE and SBCLK with the device interface 57, and at the end of orchestration step, it outputs a field-bit remainder value FBR(A) a bits-required remainder value BRR(A) and status signals FBBZ-(A) and BRBZ(A). The designation "(A)" indicates that these values and signals refer to actual happenings on the serial bus as opposed to projected or calculated happenings dealt with by the calculation means 85 and indicated by the designation "-(C)". The status signal FBBZ(A) is asserted when at the end of an orchestration step the field bit value has become zero. Similarly, the status signal BRBZ(A) is asserted when at the end of an orchestration step the bits-required value has become zero.

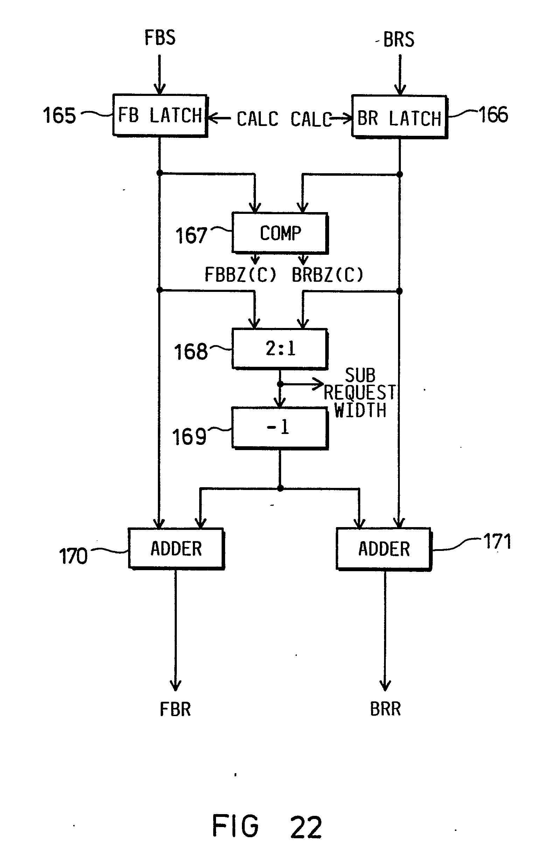

The calculation means 85 will be described in detail hereinafter with reference to Figure 22. For the present it is sufficient to note that operation of the calculation means 85 is initiated by a control signal CALC and that this results in the generation of a sub-request width value that is fed to the multiplexer 152, the output of remainder values FBR(C) and BRR(C), and status signals FBBZ(C) and BRBRZ(C). The meaning of these status signals is the same as the the corresponding signals designated "(A)" for the countdown means 79 rather than "(C)" for the calculation means 85.

The purpose of the multiplexors 157, 158 and 159 is simply to select the outputs from the calculation means 85 or countdown means 79 depending on which means is currently active to determine step width, this in turn depending on the type of program instruction being processed. Thus, multiplexor 157 selects between FBR(A) and FBR-(C), with the multiplexer output being simply the value FBR. Similarly, multiplexer 158 selects between BRR(A) and BRR(C) with its output being BRR. Finally multiplexer 159 selects between FBBZ(A) and FBBZ(C) and between BRBZ(A) and BRBZ(C) with the multiplexer outputs being FBBZ and BRBZ. All three multiplexors are controlled by the single SWITCH which is asserted during processing of a SWITCH instruction and which serves to set these multiplexors to pass the outputs from the calculation means 85 (the latter being active solely for a SWITCH instruction). When the signal SWITCH is not asserted, the multiplexors 157, 158 and 159 pass the outputs from the countdown means 79.

The above-referred to status signals form the input signals of the control state machine 160 while the above-referred to control signals are the output signals of the tape machine. Figure 19 shows all these status and control signals associated with the control status machine 160.

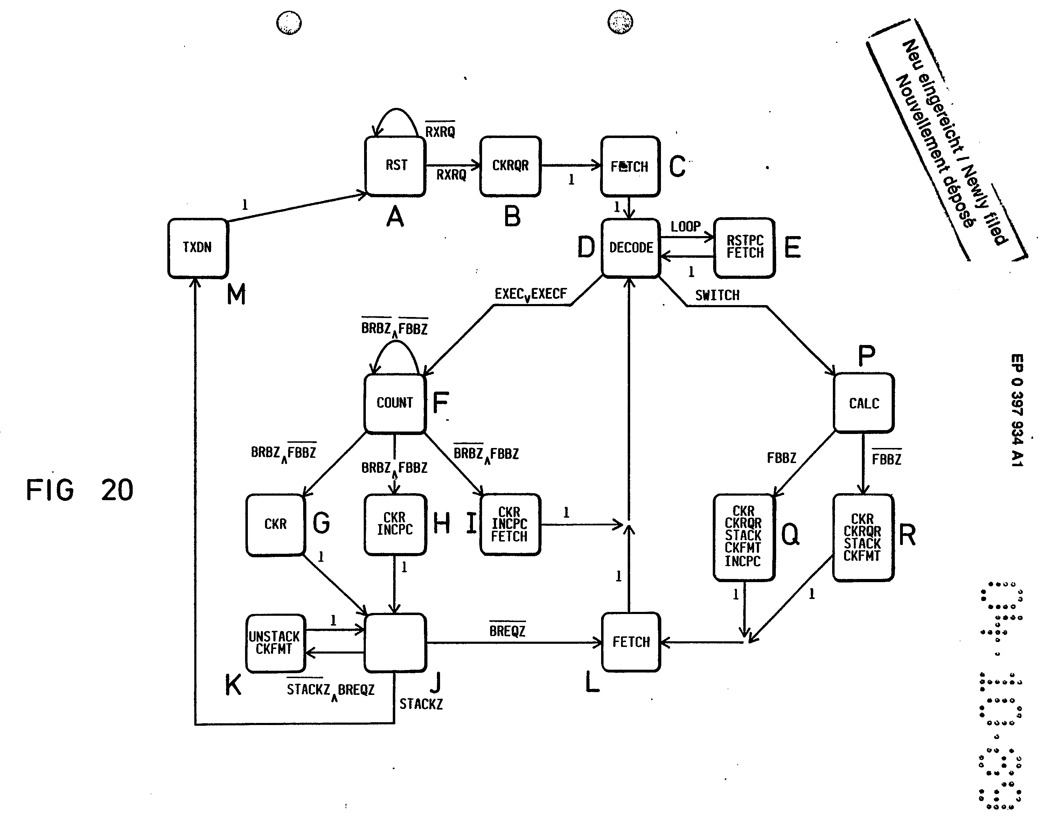

Figure 20 is a state transition diagram for the state machine 160. The convention used in this diagram is that the control signals output in any particular state are shown within the rounded box used to represent that state while the status signal or signals causing transition from one state to another are shown on the arcs connecting the states. The operation of the state machine is regulated by internal clock pulses and transitions between states only occur in correspondence to these pulses. The state machine will thus reside in a state for at least one clock cycle and will then only transit to another state if a condition (in terms of status signals) set on one of the exit arcs from the current state is satisfied. The appearance of a "1" on an arc between two states indicates that transition between the two states will occur automatically upon the next internal clock pulse.

State A is the idle state in which the state machine resides pending the receipt of a root-level request over the auxiliary bus 51. In state A, the reset control signal RST is output to reset all instances of the program counters 74 and remainder registers 75, 76, and also to reset the current-format register 84. As a result, each time the workstation 53 issues a request, the formats processor will start each single-level format constituting the overall format from the beginning. An alternative arrangement would be for the signal RST to be output under user control from the workstation 53 rather than automatically by the state machine 160;

this would permit the workstation user to decide not to issue the RST signal and thereby enable a root-level request to be satisfied by running a current overall format from where processing of the format was last terminated.

The state machine 160 remains in state A while status signal RXRQ is not asserted. As soon as signal RXRQ is asserted to indicate the receipt of a root level request by the messenger 151, the state machine transits tc state B in which the clocking control signal CKRQR is output to clock the value of the request received over the auxiliary bus 51 into the bit request register 72. Since the control signal STACK is not asserted, the multiplexor 152 is set to pass the output of the messenger 151 to the register 72. At the next clock pulse, the state machine transits from the state B to the state C in which the control signal FETCH is issued causing the first program instruction of the root format program to be fetched. At the next internal clock pulse, the state machine 160 transits from state C to an instruction decode state D. In state D, the state machine 160 outputs the control signal DECODE to the decoder 154 causing the latter to decode the opcode portion of the current instruction and to output an appropriate status signal.

If the status signal asserted by the decoder 154 is either EXEC or EXECF, the state machine next transits to state F. However, if the decoder 154 asserts status signal SWITCH, the state machine transits to state P. Finally, if the status signal asserted by the decoder 154 is LOOP (which, of course, will not be the case for the very first instruction fetched - that is, where state D is entered from state C), the state machine transits to state E resulting in resetting of the program counter 74 and the fetching of a new instruction before returning to state D.

Considering the case of the current instruction being a device instruction (that is, the decoder 154 asserts EXEC or EXECF) upon the state machine 160 entering state F, the control signal COUNT is asserted to activate the countdown means 79 of the step width delimiter 66.

The countdown means 79 is provided with the values FBS and BRS from the multiplexors 155 and 156, these multiplexors having been appropriately set in dependence on whether or not the registers 76 and 75 are empty. The countdown means now proceeds to enable the clocking of bits on the serial bus until one (or both together) of the field-bit and bits-required counts becomes zero at which point the orchestration step terminates. Note that since the decoder 154 is not asserting the status signal SWITCH, the multiplexors 157, 158 and 159 are set to pass the FBBZ and BRBZ status signals derived form the countdown means 79 as well as the FBR and BRR remainder values from the latter.

The state machine 160 remains in state F while neither BRBZ or FBBZ is asserted. Upon FBBZ being asserted to indicate that the current instruction has been exhausted, if BRBZ is not simultaneously asserted, the state machine 160 sets about fetching a new instruction by transiting first to state I. In state I, the control signal CKR is output to clock the remainder registers 75 and 76 to load the remainder values BRR and FBR output by the countdown means 79. At the same time, the control signal INPC is asserted to increment the program counter. Thereafter, the control signal FETCH is asserted to load the new instruction pointed to by the program counter into the instruction register 73. From state I, the state machine 160 transits back to the decode state D and proceeds as described above.

Returning to consideration of the exit options for state F, if as well as FBBZ being asserted, BRBZ is also asserted indicating that the current request for the format program presently being executed has been fully serviced, then the state machine 160 transits from state F to state H. In state H, the remainder registers 75 and 76 are again first clocked to load in the remainder values and the program counter 74 is incremented to take account of the fact that the current instruction has been fully utilised. Thereafter, the state machine 160 transits from state F to state J.

The third exit option from state F is where BRBZ is asserted but FBBZ is not asserted; this corresponds to the current request having been fully serviced leaving the current instruction only partly executed. In this case, the state machine transits from state F to state G. In state G the remainder registers 75, 76 are again loaded by the output of the control signal CKR. Thereafter the state machine transits from the state G to state J.

State J is a decision state. If the return format stack 86 is empty as indicated by the status signal STACKZ being asserted, then this indicates that the current format is the root level format; in this case, all that remains to be done is to return an indication to the workstation 53 that the initial request has now been fully serviced. To this end, if STACKZ is asserted, the state machine transits from state J to state M where it outputs the control signal TXDN to the messenger 151 to cause the latter to pass a message "done" back to the workstation over the auxiliary bus 51. Thereafter, the state machine transits from state M back to the idle state A.

If on entering state J, the status signal STACKZ is not asserted, then the current format is not the root format so the appropriate response to the completion of servicing of the request for the current format is to return to the calling format. To this end, the state machine 160 will transit from state J to state K when the status signal STACKZ is not asserted (and, also, the contents of the BR remainder register 75 are zero as indicated by the signal BREQZ). State K oversees the ascent of the format hierarchy by asserting the control signal UNSTACK to transfer the format identity on top of the stack 86 to the current-format register 84 via the multiplexor 153, the latter being in the appropriate state as a consequence of the non-assertion of the control signal STACK. The control signal CKFMT loads the format identity from the top of the stack into the current format register 84. Thereafter, the state machine transits from state K back to state J. Having loaded a new format identity into the current-format register 84 and thereby set up the formats processor for a previously accessed format, then, provided that there is still a request outstanding for this format (that is, BREQZ for the new bit-required remainder register is not asserted), the state machine 160 transits from state J to state L to fetch the current instruction for the new format. Thereafter the state machine 160 transits from state L back to state D and proceeds in the manner already described.

In the event that the request associated with the format is restored as a result of transiting state K has been fully serviced, then, in the manner already described, the state machine 160 will either proceed further back up the format hierarchy where possible, or if the current format is the root format, return a "done" message to the workstation 53.

Having described the operation of the state machine in relation to a device instruction, a description will now be given of the operation of the state machine 160 in the presence of a SWITCH instruction.

If in the instruction-decode state D the decoder 154 outputs the status signal SWITCH, the state machine 160 transits to state P. In state P, the state machine outputs the control signal CALC to enable the calculation means 85. Thereafter, the calculation means 85 determines the width of the sub request occasioned by the switch instruction and calculates the remainder values FBR and BRR that will apply upon completion of the sub request. The calculation means 85 will also provide an indication, via the status signals FBBZ and BRBBZ, as to which, or both, of the field-bits and bits-required values will have become zero at the end of servicing of the sub request. If FBBZ is asserted thereby indicating that the sub request will complete utilisation of the current switch instruction, the state machine 160 transits from state P to state Q. In state Q, the state machine:

- outputs the control signal INCPC to increment the program counter 74 so that a new instruction will be fetched upon the current format being reinstated after servicing of the sub request,
- loads the remainder registers 75 and 76 by outputting the control signal CKR;
- loads the sub request width output by the calculation means 85 into the bit request register 72, the multiplexer 152 being appropriately set by the control signal STACK and the register 72 being loaded by the clocking control signal CKRQR;
- outputs the signal STACK to cause the identity of the current format held in register 84 is put onto the top of the return format stack 86;
- causes the identity of the new format to be switched to, to be loaded into the current-format register 84 from the instruction register 73 via the multiplexer 153, the latter being appropriately set by the signal STACK and the current-format register 84 being loaded under control of the clocking signal CKFMT.

Loading of the new format identity into the register 84 results in the configuration means activating the instances of the elements 55, 74, 75, 76 relevant to the new format and thereby setting up the formats processor to run the corresponding format program.

Thereafter, the state machine 160 transits from the state Q to the fetch state L. In this state, the first instruction of the newly installed sub format is fetched whereupon the state machine transits to the decode state D and processing continues as described above.

Considering state P again, if the calculation means 85 indicates that the field bits value is non-zero at the end of the sub request step, that is, if FBBZ is not asserted, the state machine 160 will transit from state P to state R. State R is similar to state Q in that it controls the loading of the remainder registers 75 and 76, the loading of the bit request register 72, the transfer of the current format identity to the stack 86, and the loading of the new format identity into the register 84; however, in state R the program counter 74 is not incremented since the switch instruction has not been fully used (the current request being serviced by the format being completed first).

Having described the operation of the state machine 160 in connection with the overall functioning of the formats processor illustrated in Figure 18, consideration will now be given to the detailed implementations of the countdown means 79 and the calculation means 85.

Considering first the countdown means 79, its constituent hardware components, including a controlling state machine 163, are shown in Figure 21A, while the state transition diagram for the state machine 163 is shown in Figure 21B. Referring to Figure 21A, the countdown means 79 comprises the BR counter 77, the FB counter 78, inverter 164, AND gates 161 and 162, and the countdown state machine 163. The BR and FB counter 77 and 78 are functionally equivalent to those depicted in Figure 16 for the software embodiment of the formats processor. The BR counter 77 and the FB counter 78 are respectively loaded with the "bits required" start value BRS and the "field bits" start value FBS upon assertion of a control signal LOAD output by the state machine 163 (this signal LOAD also constitutes the signal of the same name which is output via the device interface 57 to load the field number on the field bus 50 into the bit-processing devices -see Figure 16).

After loading, the counters 77 and 78 are arranged to be decremented in response to the clocking of the serial bus for which purpose the serial-bus clock signal SBCLK is passed to the counter 77 and 78 but only when allowed to pass through the AND gate 162 by the clock-enable signal SCKE being asserted. In addition, the enabled clock signal output from the gate 162 will only be passed on to decrement the FB counter 78 when gate 161 is enabled by the inverted signal SLIP; that is, when slip is not asserted; when the signal SLIP is asserted clocking of the FB counter is suspended thereby temporarily halting progress through the current format and causing the reference stream to slip relative to a received stream. The BR counter 77 is arranged to output the status signal BRBZ(A) upon its contents becoming zero. Similarly, the FB counter 78 is arranged to output the status signal FBBZ(A) upon its contents becoming zero. At the end of an orchestration step, the counter 77 and 78 are unloaded, the value unloaded from the BR counter 77 being the remainder value BRR(A) while that unloaded from the counter 78 is the remainder value FBR(A).

The countdown state machine 163 receives three input signals, namely the status signals BRBZ(A) and FBBZ(A), and the control signal COUNT output by the main state machine 160. The countdown state machine 163 outputs two control signals, namely the control signal LOAD used to load the counters 77 and 78, and the signal EBC which is fed to the device interface 57 for the purpose of enabling clocking of the serial bus as has already been described.

As illustrated in Figure 21B, the state machine 163 has only three states, these being labelled AA, BB, and CC. State AA is an idle state in which the state machine 163 resides pending receipt of the control signal COUNT from the state machine 160 to indicate that the countdown means 79 is to determine the step width for the current orchestration step; in the present embodiment, this orchestration step will be one related to a device instruction. Upon receipt of the control signal COUNT, the state machine 163 transits from state AA to state BB. In this latter state, the state machine 163 asserts the signal LOAD to store the values BRS and FBS into the counters 77 and 78 respectively and to load the field number on the field bus 50 into the devices.

From state BB, the countdown state machine 163 transits to state CC in which it outputs the signal EBC to enable clocking of the serial bus. The state machine 163 will remain in state CC until clocking on the serial bus has resulted in the contents of one or both of the counters 77, 78 being decremented to zero. Upon either BRBZ(A) or FBBZ(A) being asserted, the state machine 163 will transit from state CC back to its idle state AA. The assertion by BRBZ(A) or FBBZ(A) will, of course, also affect the main state machine 160 as already described.

The calculation means 85 will next be described with reference to Figure 22. The calculation means 85 includes an FB latch 165 and a BR latch 166 which upon assertion of the control signal CALC by the main state machine 160, are respectively loaded with the start values FBS and BRS. The outputs of the latches 165, 166 are fed to a comparator 167 to determine the lesser of the field-bit and bits-required start values. If the field-bit start value is the smaller, the status signal FBBZ(C) is asserted whereas as if the bits required start value is the smaller, the status signal BRBZ(C) is asserted; if both start values are equal, then both status signals are asserted. The outputs of the latches 165, 166 are also fed to a multiplexer 168 the state of which is controlled by the outputs of the comparator 167 such that only the lesser of the start values (or, if equal, either) is passed through the multiplexer 168. The output of the multiplexer 168 is a value corresponding to the projected width of the current step. In the present embodiment, as the calculation means 85 is only utilised during the processing of switch instructions, the output of the multiplexor 168 equals the width of the sub request resulting from the switch instruction.

The output of the multiplexer 168 is passed to a unit 169 where it is negated before being passed to adders 170 and 171. The adder 170 serves to substract the lesser of the start values from the start value FBS held in latch 165, the output of the adder 170 constituting the field-bits remainder value FBR; of course, if the lesser value is the start value FBS, then the value of FBR will be zero. Similarly, the adder 171 serves to substract the lesser of the start values from the start value BRS held in the latch 166, the output of the adder 171 constituting the remainder value BRR; again, if the lesser start value is BRS, then the value of BRR will be zero.

The calculation means illustrated in Figure 22 is arranged to produce its outputs within one clock cycle of the main state machine 160; as a result, any disparity in the instances where these outputs first appear will not matter.

Various modifications to the hardware embodiment of the formats processor described with reference to Figure 18 to 22 will be apparent to persons skilled in the art. Thus, for example, since slipping is only permitted during framing fields, the determination of step width by the countdown means 79 on the basis of the actual processing of bits on the serial bus need only be carried out for EXECF instructions; for ordinary device instructions, step width can be determined by the calculation means 85 on the basis of the projected processing of bits on the serial bus. As will become clear below, the calculation of step width for EXEC and SWITCH instructions in advance of actual processing of bits on the serial bus can be used to good effect by allowing the sequence controller 50 to run ahead of the device interface 57.

Where the step width of an ordinary device instruction is calculated by the calculation means 85, the step width information is, for example, passed to the device interface 57 in the form of a numeric value. This, of course, differs from the form of step-width information provided by the countdown means 79, that is, embodied in the signal EBC. This latter signal is directly usable by the device interface 57 to control bit-processing on the serial bus via the enable signal SCKE since the signal EBC has already been related to bit clocking on the serial bus by the action of the countdown means 79. In contrast, a numeric step width value must be interpreted by the device interface 57 to generate the serial clock enable signal SCKE as required. To this end, the device interface 57 can be provided with a counter arranged to receive a pre-calculated numeric step width value from the calculation means 85, this value being thereafter decremented to zero by the serial clock signal SCLK and the serial clock enable signal SCKE being output while the counter value is non-zero.

Rather than having the device interface 57 receive step width information in two different forms the interface 57 could be provided with the step width information in the basic form of the values FBS and BRS for both EXEC and EXECF instruction steps. These values can then be interpreted by the device interface 57 using countdown means similar to those illustrated in Figure 21 in order to generate the signal EBC and thus the serial clock enable signal SCKE. The operation of calculating the remainder values FBR and BRR is carried out as before in the sequence controller 56 by either the countdown means 79 (for EXECF instructions) or the calculation means 79 (for EXEC instructions).

With step widths for EXEC and SWITCH instructions being determined by the calculation means 85, then as has already been mentioned, except when executing an EXECF instruction, the sequence controller 56 can be arranged to run ahead of the device interface 57 to sequence instructions and calculate associated step widths in advance of the instruction in respect of which the device interface is currently orchestrating the bit-processing devices. In this case, the step-width and field number information ("device-step data") relevant to each instruction step processed in advance is held in a queue for use by the device interface 57 as and when it finishes controlling the bit-processing devices for the current step. Such an arrangement is advantageous in that it reduces the dead time between bit processing steps on the serial bus, from the time needed to fetch and interpret a new format program instruction, to the time needed to access the head of the queue of device-step datas. The running-ahead approach can be used for both ordinary EXEC instructions and for SWITCH instructions; however, when an EXECF instruction is encountered, the sequence controller 56 must wait for the device interface 57 to catch up as the sequence controller cannot determine step width by calculation, but only on the basis of actual processing on the serial bus since bit slip is permitted when executing an EXECF instruction.

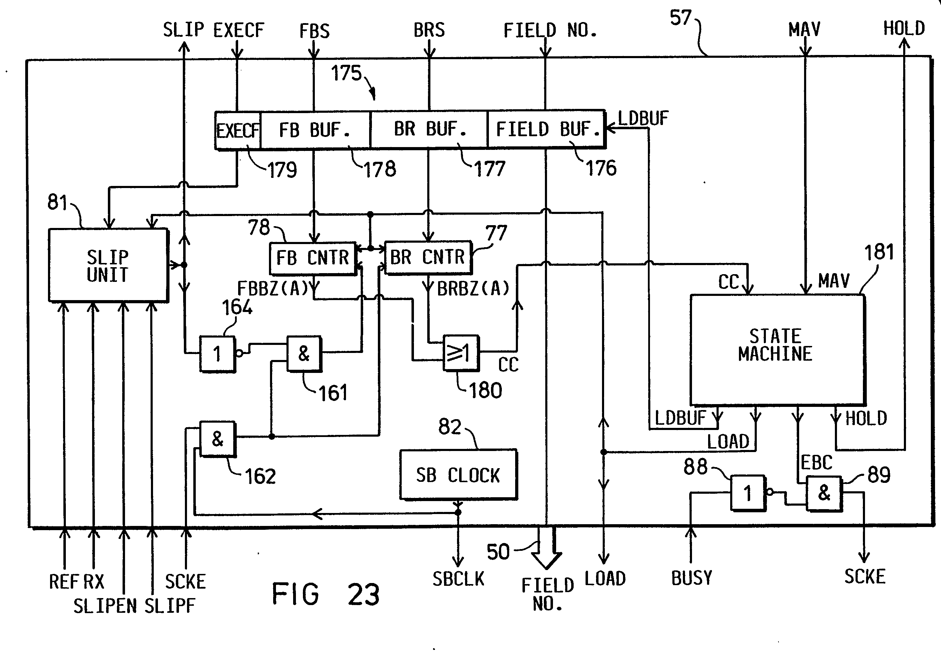

An implementation of the foregoing concept of permitting the sequence controller to run ahead of the device interface will now be described with reference to Figures 23 to 25 in terms of a variant of the above-described hardware formats processor. In this variant, the sequence controller 56 is allowed to run ahead of the device interface to the extent of calculating the FBR and BRR values for the next orchestration step, storing the associated device-step data in a buffer, and then fetching the next-but-one instruction; the controller 56 thereafter waits for the buffer to be unloaded by the device interface before continuing by calculating the FBR and BRR values of the last fetched instruction and so on. The buffer forms a single-level queue for the device-step data and the loading and unloading of this buffer regulations the inter-working of the sequence controller 56 and the device interface; in the present description, the buffer is considered to form part of the device interface 57. The step-width information contained in the device-step data takes the form of the values FBS and BRS appropriate to the start of the corresponding step, the device interface 57 being provided with countdown means, similar to those shown in Figure 21, to generate the serial-bus clock enable signal SCKE from the values FBS and BRS.

Referring now to Figure 23 which shows the device interface 57 in detail, elements having a function and form corresponding to elements already described have been given the same reference as their previously described counterparts. Thus, as for the device interface of Figure 11, the device interface of Figure 23 includes a slip unit 81 for generating the slip signal SLIP, a serial bus clock 82 for generating the serial-bus clock signal SBCLK, and gates 88 and 89 for combining the signals BUSY and EBC to provide the serial-bus clock enable signal SCKE. In this case, the signal EBC is generated by a state machine 181 that serves to control the operation of the device interface, the state machine 181 outputting the signal EBC in dependence on the functioning of countdown means that are provided for interpreting the step-width data contained in the values FBS and BRS passed to the device interface. These countdown means, like the countdown means 79 of Figure 21, comprise a BR counter 77, an FB counter 78, gates 161, 162 and 164 for controlling decrementing of the counter, and a controlling state machine which in this case is subsumed within the state machine 181. In addition, the countdown means of Figure 23 includes an OR gate 180 which combines the zero detection signals BRBZ(A) and FBBZ(A) from the counters 77, 78 into a single count-complete signal CC fed to the state machine 181 in place of the two zero-detection signals. The countdown means of Figure 23 is operative to load values of BRS and FBS into the counters 77, 78 and decrement these values in accordance with bit processing on the serial bus until one or other, or both counts, become zero, the signal SCKE only being output while both counts are non zero. The slip unit 81 provides for slipping of reference and received streams by interrupting clocking of the FB counter while decrementing of the BR counter is continued.

Finally, the device interface 57 includes a buffer 175 for queuing device-step data passed from the sequence controller. The buffer 175 is, in fact, made up of four separate buffers 176 to 179 arranged to be loaded in unison by a signal LDBUF output by the state machine 181. Buffers 176 to 179 are respectively fed with the field number, BRS value, FBS value, and EXECF signal status relevant to a particular step, these values being stored in the buffers upon assertion of the LDBUF signal. The device-step data held in the buffers 176 to 179 relates to the next bit-processing step to be executed on the serial bus.

The contents of the field number buffer 176 are fed via the field bus 50 to the bit-processing devices, the contents of the BR and FB buffers 177, 178 are fed to the BR and FB counters 77, 78, and the contents of the EXECF buffer 179 are fed to the slip unit 81. Upon assertion of a signal LOAD by the state machine 181, the contents of the buffers 176 to 179 will be respectively loaded into the devices, the counter 77 and 78, and the slip unit 81; the device-step data loaded into these latter elements then determine bit-processing on the serial bus for the next processing step.

The coordination of the operation of the device interface 57 is effected by the state machine 181. The state machine receives as input the signal CC and a signal MAV, the latter being asserted by the state machine of the sequence controller when it has a device-step data message available. The state machine 181 outputs four signals, namely the buffer-load signal LDBUF, the main load signal LOAD, the enable-bus-clocking signal EBC, and a signal HOLD that is passed back to the sequence controller 56 to indicate to the latter when the buffer 175 is full. Coordination of the interaction of the sequence controller 56 and the device interface is achieved through the two signals MAV and HOLD as will become clear hereinafter.

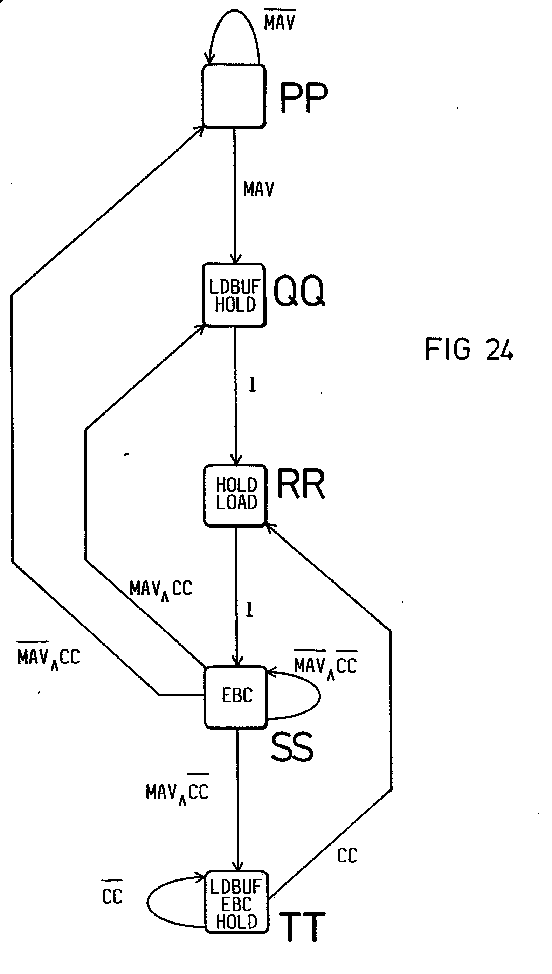

The operation of the device interface 57 under the control of the state machine 181 will next be described with reference to Figure 24 which is a state transition diagram for the state machine 181. The modifications required to the operation of the state machine 160 of the sequence controller 56 to support buffered interaction with the device interface will thereafter be described.

As illustrated in Figure 24, the state machine 181 has five states, namely an idle state PP in which the buffer 175 is empty and no count is currently being decremented in counters 77, 78; a buffer load state QQ relevant to loading the buffer 175 when there is no count currently being decremented; a counter load state RR for loading the BR and FB counters 77, 78; a first run state SS when counts are being decremented but the buffer 175 is empty, and a second run state TT when counts are being decremented and the buffer 175 is full.

Starting with the idle state PP, the state machine 181 will remain in this state pending assertion of the signal MAV by the sequence controller to indicate that it has device-step data available to be passed to the device interface 57. Upon assertion of the signal MAV, the state machine 181 transits to state QQ whereupon it immediately outputs the signal LDBUF to load the device-step data made available by the sequence controller into the buffer 175; this is followed by assertion of the signal HOLD which is fed back to the sequence controller to indicate that the buffer 175 is full. At the next clocking of the state machine 181, it transits from state QQ to state RR in which it maintains assertion of the signal HOLD. In state RR, the state machine 181 also outputs the signal LOAD in order to load the device-step data held in 175 into the elements operative to use the data in controlling bit-processing on the serial bus (in other words, the BRS and FBS values held in the buffer 175 are loaded into the counters 77, 78 and the field number is clocked into the bit-processing devices).

At the next clock transition of the state machine 181, the latter transits from state RR to the first run state SS. In state SS the state machine 181 outputs the enable-bus-clocking signal EBC which, when gated by the signal BUSY constitutes the serial-bus clocking enable signal SCKE. This enables bit-processing to proceed on the serial bus in correspondence to which the counters 77 and 78 are decremented (decrementing of the FB counter 78 being interrupted during the processing of framing fields where a slip is demanded by the slip unit 81). The state machine 181 will remain in state SS while neither the FB nor the BR count is zero as indicated by the signal CC, and the signal MAV is not asserted by the sequence controller to indicate that further device-step data is available. If orchestration of the current step terminates by one or other counts becoming zero before the signal MAV is reasserted, then the state machine 181 will exit from state SS back to the idle state PP. However, if the signal MAV is asserted before the termination of the current bit-processing step, then the state machine will transit from state SS to state TT. If the current bit-processing step terminates at the same time as the signal MAV is asserted, the state machine 181 will exit from state SS to state QQ to load the just available device-step data into the buffer 175.

In the case where the state machine 181 transits from the first run state SS to the second run state TT, upon the state TT being entered the signal LDBUF is output by the state machine 181 to load the device step data presented by the sequence controller into the buffer 175; the signal HOLD is also asserted to indicate to the sequence controller that the buffer is now full. As in the state SS, in state TT the signal EBC is output by the state machine to permit the continuance of bit-processing on the serial bus. The state machine will remain in state TT until the signal CC is asserted to indicate the termination of the current bit-processing step whereupon the state machine will transit from the state TT back to state RR to load the device-step data held in the buffer 175 into the relevant elements for the next bit-processing step.

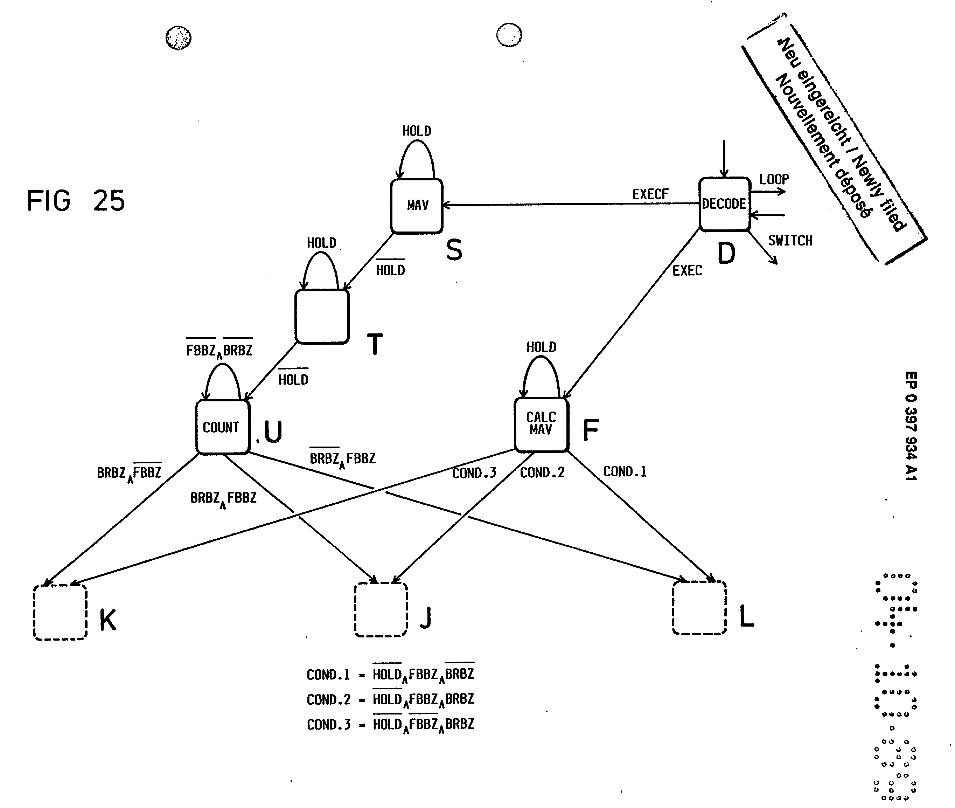

Having described the operation of the state machine 181 that controls the device interface 57, consideration will now be given to Figure 25 which shows the modifications and additions required to the state transition diagram of the state machine 160 of the sequence controller in order to support buffered interaction with the device interface. The actual hardware of the sequence controller is unchanged from that shown in Figure 18 with the exception that the multiplexers 157, 158 and 159 are operative to pass the outputs of the calculation means 85 not only when a SWITCH instruction is present but also when an EXEC instruction is present; in addition, the countdown means 79 no longer outputs the signal EBC, this latter signal being generated by the device interface itself.

Turning now to Figure 25, states D and F are modified over the corresponding states in the Figure 20 state transition diagram and, in addition, new states S, T and U are interposed between state D and states K, J and L. These latter states J, K and L are unmodified and therefore have only been shown in dashed outline in Figure 25.

State D of Figure 25 is substantially the same as state D of Figure 20 with the exception that respective exit arcs are now provided for EXEC and EXECF instruction conditions. The path followed for EXEC instructions is through state F and then onto states J, K and L - in other words, substantially the same as in the Figure 20 state transition diagram; the main difference is that now the values BRR and FBR and the signals BRBZ and FBBZ are generated by the calculation means 85 rather than the countdown means 79 and that dwell in state F is determined not by how long it takes to carry out the associated bit-processing on the signal serial bus but by how long it takes for the buffer 175 in the device interface to become available to receive the device-step data from the sequence controller. Thus, upon entering state F, the signal CALC is asserted to activate the calculation means 85 and at the same time, the signal MAV is asserted to tell the device interface that device-step data is available. The state machine 160 will remain in state F while the device interface asserts the signal HOLD. However, as soon as the signal HOLD is de-asserted indicating that the device-step data has been loaded from the sequence controller into the buffer 179, the state machine 160 will transit from state F into state J, K or L depending on which of the signals BRBZ and FBBZ is asserted. The conditions determining transit from state F to states J, K and L are the same as in Figure 20 apart from the conjunctive inclusion of the extra condition that the signal HOLD should be de-asserted. It will be appreciated that in carrying out orchestration in respect of an EXEC instruction, the sequence controller now proceeds on the basis of calculation and will run ahead of the device interface until such time that it has to wait for the device interface to clear its buffer before the sequence controller can pass it the device-step data.

With regard to the processing of EXECF instructions, here the sequence controller 56 and, in particular, its state machine 160 operate in the same manner as described with reference to Figure 20, namely, the determination of step width is effected by the countdown means 79 on the basis of actual processing of bits on the serial bus. Accordingly, the portion of the state transition diagram shown in Figure 25 includes a state U that corresponds exactly to state F of Figure 20 and links to state J, K and L with the same transit conditions. However, since in determining step-width in relation to an EXECF instruction, the countdown means 79 must be coordinated with the actual processing of bits on the serial bus for that instruction, the operation of the countdown means 79 must be held up until the device interface has caught up with the sequence controller and instructs the bit-processing devices to process bits in accordance with the EXECF instruction. Accordingly between the decode state D and the countdown state U, two intermediate states S and T are provided which effectively serve to ensure that the operation of the sequence controller is held up until the buffer of the device interface has been flushed and the FB and BR counters of the interface contain the FBS and BRS values associated with the EXECF instruction.

More particularly, in the presence of an EXECF instruction the state machine 160 will transit from state D to state S where the signal MAV will be asserted to indicate to the device interface the availability of the device-step data. If the buffer 175 of the device interface is already full, then the signal HOLD will be asserted and the state machine 160 will remain in state S until the buffer becomes empty and the signal HOLD is de-asserted. Where the signal HOLD is not asserted, at its next clocking the state machine 160 will pass to state T. Of course, transition of the state machine 160 into state T is associated with loading of the device-step data into the buffer 175 of the device interface; the consequence of this latter action is that the signal HOLD is reasserted by the state machine 181 of the device interface as this state machine either transits into state QQ from its idle state PP or, where the device interface is currently orchestrating execution of a processing step via its countdown means, as the state machine transits from state SS to state TT.

Where the state machine 181 of the device interface transits into state QQ in correspondence to the state machine 160 of the sequence controller passing into state T, then the latter state machine will only reside in state T for the time it takes the device interface to pass the device-step data of the EXECF instruction from the buffer 175 into the active elements of the device interface, that is, the time for the state machine 181 to pass from state QQ into state SS.

Where the device interface is still orchestrating the execution of an instruction preceding the EXECF instruction (that is, where the device interface has passed to state TT), the state machine 160 of the sequence controller will remain in state T until the device interface completes its orchestration function for the instruction step preceding the EXECF instruction. On completion of the current step, the state machine 181 transits via state RR to state SS and in the process loads the device-step data relating to the EXECF instruction into the active elements of the device interface.

Upon the state machine 181 entering the state SS, it de-asserts the signal HOLD thus permitting the state machine 160 to pass into the state U. At this point, the countdown means 79 of the step width delimiter of the sequence controller and the countdown means of the device interface are both loaded with the BRS and FBS values associated with the EXECF instruction step. Thereafter, the values held by both countdown means are decremented in accordance with actual bit processing on the serial bus; upon bit slip being effected, the FB counters of both countdown means are temporarily frozen. Both countdown means will terminate their operation together for the EXECF instruction step and the BRR and FBR values held by the countdown means 79 are then used for subsequent operation of the sequence controller.

It will be appreciated that the countdown means 79 of the sequence controller and the countdown means of the device interface effectively mimic each other during the execution of an EXECF instruction step. In fact, it is possible to dispense with the countdown means 79 of the step width delimiter by arranging for the countdown means of the device interface of Figure 23 to double up as the countdown means of the step-width delimiter. This can simply be arranged by feeding back from the countdown means of Figure 23 the BRBZ(A) and FBBZ(A) signals to the multiplexer 159 and providing for the final count values held in the FB and BR counters of the Figure 23 device interface to be fed back to the multiplexers 157 and 158 as the FBR(A) and BRR(A) values.

## Bit-Processing Devices

Having described the operation of the orchestrator 13, a description will now be given of the bit-processing devices.

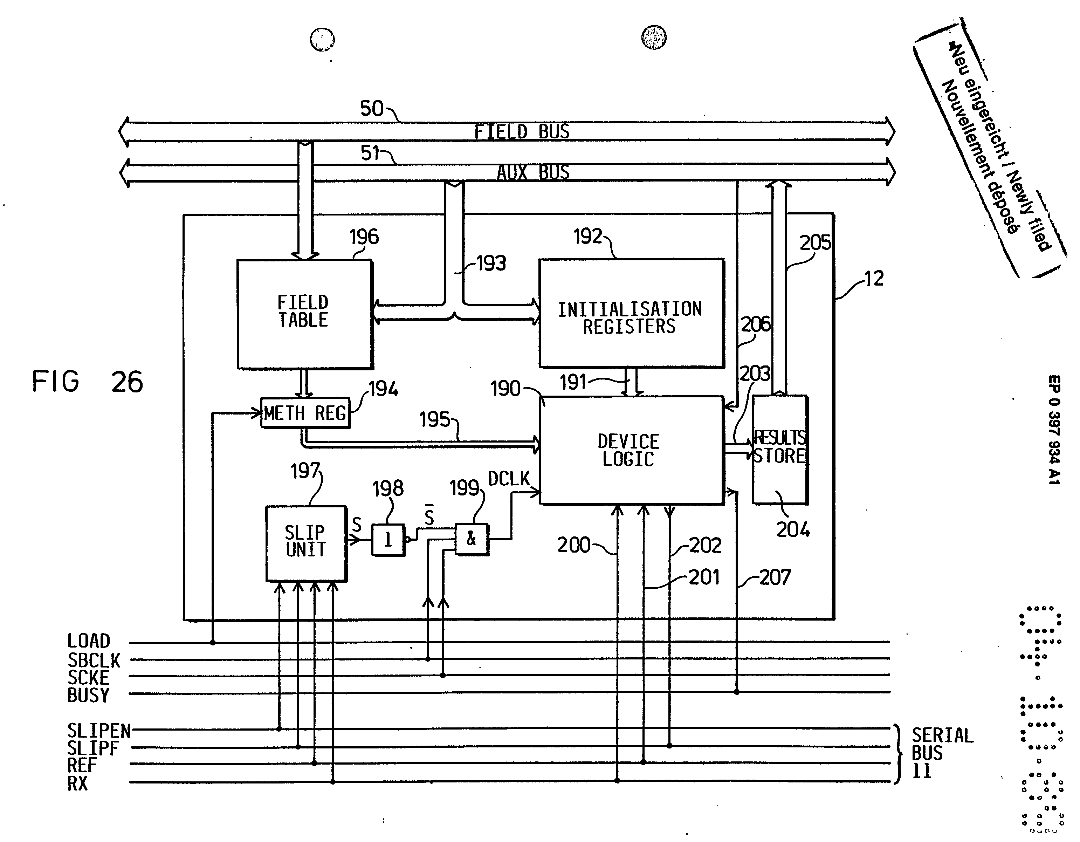

Figure 26 is a functional block diagram of a generic bit-processing device 12 upon which the actual instances of the bit-processing devices 40 to 46 are Figure 7 are modelled. The heart of the device 12 is a device logic block 190 that effects the bit-processing function characteristic of the device; thus, for a PRBS device 41, the device logic block 190 carries out the PRBS generation. Generally, the device logic block 190 performs a characteristic function at least some of the parameters of which are programmable from the workstation 53 (Figure 7) via the auxiliary bus 51; to this end, an initialisation register block 192 is provided for storing particular values of these characterising parameters. These particular parameter values can be downloaded into the device logic block 190 via a bus 191. The parameter values are loaded into the initialisation registers 192 from the auxiliary bus 51 via a bus 193 that includes appropriate control signal lines to effect this loading.

The device logic block 190 is connected to the RX and REF lines of the serial bus 11 via input lines 200 and 201 respectively and via an output line 202 connected to the REF line only. The line 202 is used during the generation of bits by the device logic block 190 to output these bits onto the line REF; the lines 200 and 201 are used during the reception of a serial stream to pass the received stream on line RX and the reference stream on the line REF to the block 190 for comparison.

Operation of the device logic block 190 is enabled by means of signals supplied to the block via a bus 195. Activation of the enabled block 190 to process one or more bits is effected by a device clock signal DCLK. Enabling of the device logic block 190 is effected in response to the orchestrator 13 executing a program instruction relating to a field in respect of which the device has been programmed to operate. More particularly, as has already been mentioned, the device 12 includes a field-number lookup table 196 that indicates for each field of a format to be processed, whether or not the device is to operate during that field; in addition, the field table 196 will generally also contain an indication of the required mode or method of operation of the device where the device is capable of operating in more than one mode. The field table 196 takes the form of RAM memory and is arranged to be programmed from the workstation 53 via the auxiliary bus 51 and the bus 193.

Upon the orchestrator 13 outputting a field number on the field bus 51, this field number is applied to the field table 196 and the resultant indication as to whether the device is to be enabled for that field and, if so, what method is to be applied, is fed to a method register 194; however, this information is not loaded into the method register 194 until the signal LOAD is asserted by the device interface of the orchestrator to indicate that the new processing step is about to begin. The output of the method register 194 is fed over the bus 195 to the device logic block 190 and enables the latter as appropriate including setting the block 190 into its required operational mode.

The device clock signal DCLK used to effect activation of an enabled device 12 is derived from the serial bus clock signal SBCLK by gating this latter signal with the clock enable signal SCKE in an AND gate 191. In fact, an additional signal (NOT S) is also fed to the gate 199, the purpose of this signal being to prevent clocking of the device logic block 190 where it is desired to slip the reference stream relative to a stream being received during the framing field. The signal NOT S supplied to the gate 199 is derived via an inverter 198 from the signal S, the latter being produced by a slip unit 17 fed with the signals on lines SLIPEN, SLIPF, REF and RX. The slip unit 197 operates in the same manner as the slip unit 81 of the device interface 57.

Thus, the device clock signal DCLK serves to clock the operation of the device logic block 190 when the latter has been enabled from the method register 194, the exception to this being when a slip is required in which case the device logic block 190 is not clocked for as long as the slip signal S is asserted. When enabled, the device logic block 190 will source/sink bits onto the serial bus 11 and will advance its operation in response to the device clock signal DCLK in a manner determined by its characteristic function. Any results generated when comparing a received stream with a reference stream will be passed via bus 203 to a store 204 for subsequent down loading, via a bus 205 and the auxiliary bus 51, to the workstation 53.

Two further control lines 206 and 207 and provided to control the operation of the device logic block 190. The line 206 is a reset line carrying the signal RST which, as already described, may either be generated by the control state machine of the sequence controller 56 or by work station 53; in the present embodiment, the signal RST is fed to the devices via a corresponding line of the auxiliary bus 51. Upon assertion of the reset line, the device logic block 190 is reset to a known initial state. The line 207 connects the device logic block 190 to the BUSY line and is arranged to hold this line high until operation of the device logic block 190 has stabilised after each clocking.

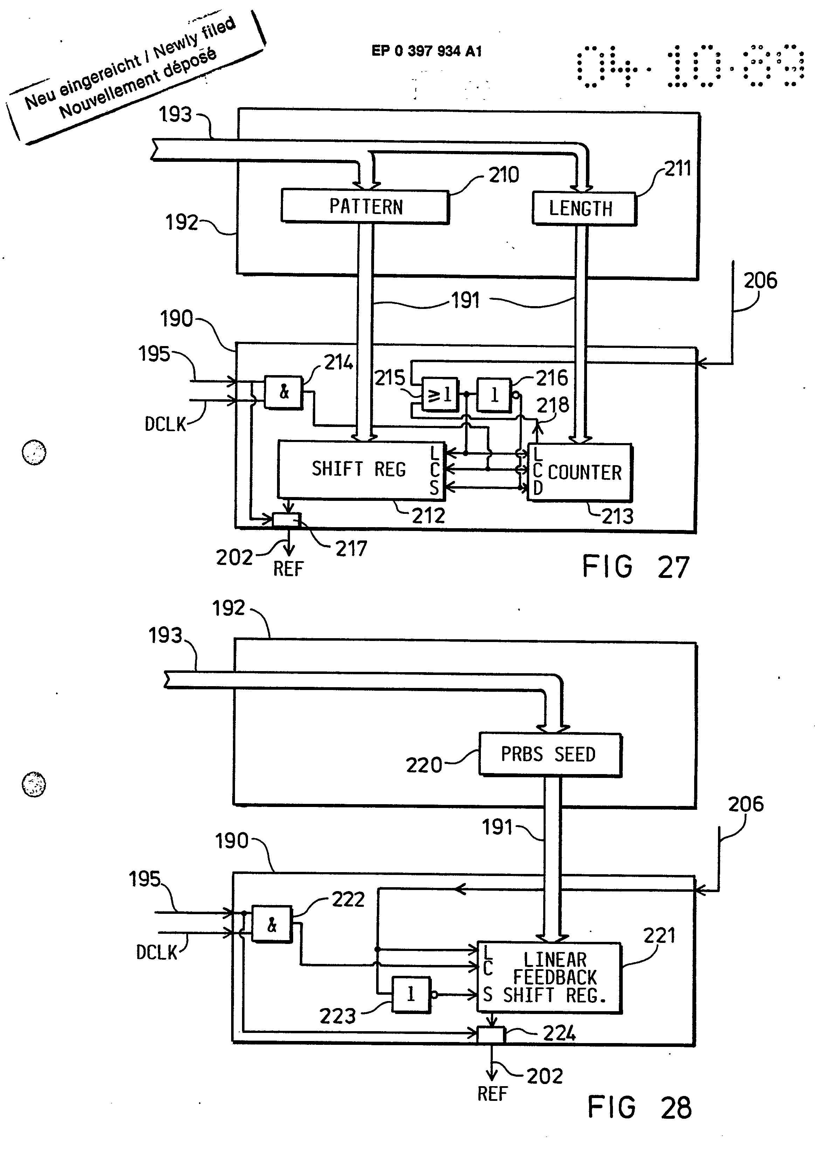

Having described the generic form of bit-processing device 12, examples of specific bit-processing devices will now be given with reference to Figures 27 to 32.

User-pattern Device

The internal details of the device logic block 190 and initialisation register block 192 will now be given with reference to Figure 27 for the user-pattern device 40 (Figure 7), the remaining details of this device being as illustrated in Figure 26 with the exception that the user pattern device does not include the elements 203, 204 and 205 as the device does not effect comparisons between a received and reference stream but merely sinks bits onto the reference line REF.

The initialisation register block 192 includes two registers 210 and 211 arranged to be loaded via the bus 193. The register 210 is used to hold a desired binary pattern while the register 211 is arranged to hold the length of this pattern.

The device logic block 190 comprises a shift register 212 and a decrementable counter 213 as well as an AND gate 214, an OR gate 215, an inverter 216 and a serial bus interface 217. The shift register 212 and the counter 213 are each provided with a clocking input C connected to the output of the gate 214; this gate is arranged to pass the device clock signal DCLK when the signal on line 195 is high indicating that the device logic block is to be enabled (in the present case, the device can only operate in one mode so that the bus 195 can be constituted by a single line). In addition, the shift register 212 and the counter 213 are each provided with a load-enable input L. These inputs L are enabled by the output of the gate 215 which becomes high either in the presence of the reset signal RST applied via the line 206 or when the counter 213 is decremented to zero and a zero-count signal is output on line 218. When the inputs L are enabled, the shift register 212 and the counter 213 will, at the next clock signal applied to the inputs C, be loaded with the values held in the pattern register 210 and the length register 211 respectively. When the inputs L of the shift register 212 and the counter 213 are not enabled, enable signals are applied to a shift-enable input S of the shift register 212 and a decrement-enable input D of the counter 213; in this event, clock signals received at the inputs C will cause a shifting of the shift register 212 and decrementing of the counter 213.

The output of the device logic block is taken from one end of the shift register 212, this output being fed via the interface 217 to the output line 202 connected to the line REF of the serial bus 11. The interface 217 is only enabled in the present of an enable signal on the line 195.

In operation, a user-pattern of any desired content and length is first loaded into the pattern register 210 and its length is loaded into the length register 211. Upon assertion of a reset signal RST, the shift register 212 is loaded with the pattern held in the register 210 and the counter 213 is loaded with the length value held in the register 211. Thereafter, when the device logic block 190 is enabled and clocked, the user pattern will be shifted through the shift register 212 and the pattern bits will be output in turn via the interface 217. This continues until the count in the length counter 213 becomes zero indicating that the end of the user pattern has been reached. The signal output on line 218 then ensures that at the next clocking, the shift register 212 and the counter 213 are loaded again from the pattern register 210 and the length register 211 respectively thereby recharging the device logic block for another cycle of the user pattern. Although not explicitly shown in Figure 217, the device logic block can be arranged to output a busy signal during the loading process to ensure that the orchestrator does not try to process another bit before the loading operation is complete.

When a slip is required, the device clock signal DCLK is temporarily disabled with the result that neither the shift register 212 nor the counter 213 are decremented at the next clocking of the serial bus; as a result, the advance of the device logic block is kept in step with that of the orchestrator.

## PRBS Device

Figure 28 shows the details of the initialisation register block 192 and the device logic block 190 of a simple PRBS device 41 (Figure 7) for sourcing a PRBS sequence onto the line REF of the serial bus 11. The heart of this device is a fixed-configuration linear feedback shift register 221 arranged to be loaded with a predetermined PRBS seed sequence from a register 220 the latter having been previously loaded from the workstation via the auxiliary bus 51 and the bus 193. The shift register 221 is loaded with the PRBS seed when the reset signal RST is applied to a load-enable input L of the register 221 and the register is clocked at clocking input C. When the reset signal is absent, a shift-enable input of the shift register 221 is enabled, this being achieved by inverting the signal on line 206 using an inverter 223. The clocking signal applied to the shift register 221 is derived from the output of an AND gate 222 that is fed with the enable-signal line 195 and with the device clock signal DCLK; an enable signal is only present on line 195 when the device is appropriately enabled from the orchestrator. When the shift-enable input S of the shift register 221 is enabled, the clocking signals received at the input C causes the shift register 221 to cycle through a maximal length PRBS sequence as taken from an output stage of the shift register 221. The output stage of the register 221 feeds line 202 via an interface 224. The interface 224 is only enabled when an enable signal is present on line 195.

It will be appreciated that a more complex PRBS device can be provided by arranging for the feedback taps of the linear feed back shift register 221 to be programmable from the workstation 53 via the initialisation register block 192, such an arrangement being within the competence of persons skilled in the art.

## CRC Device

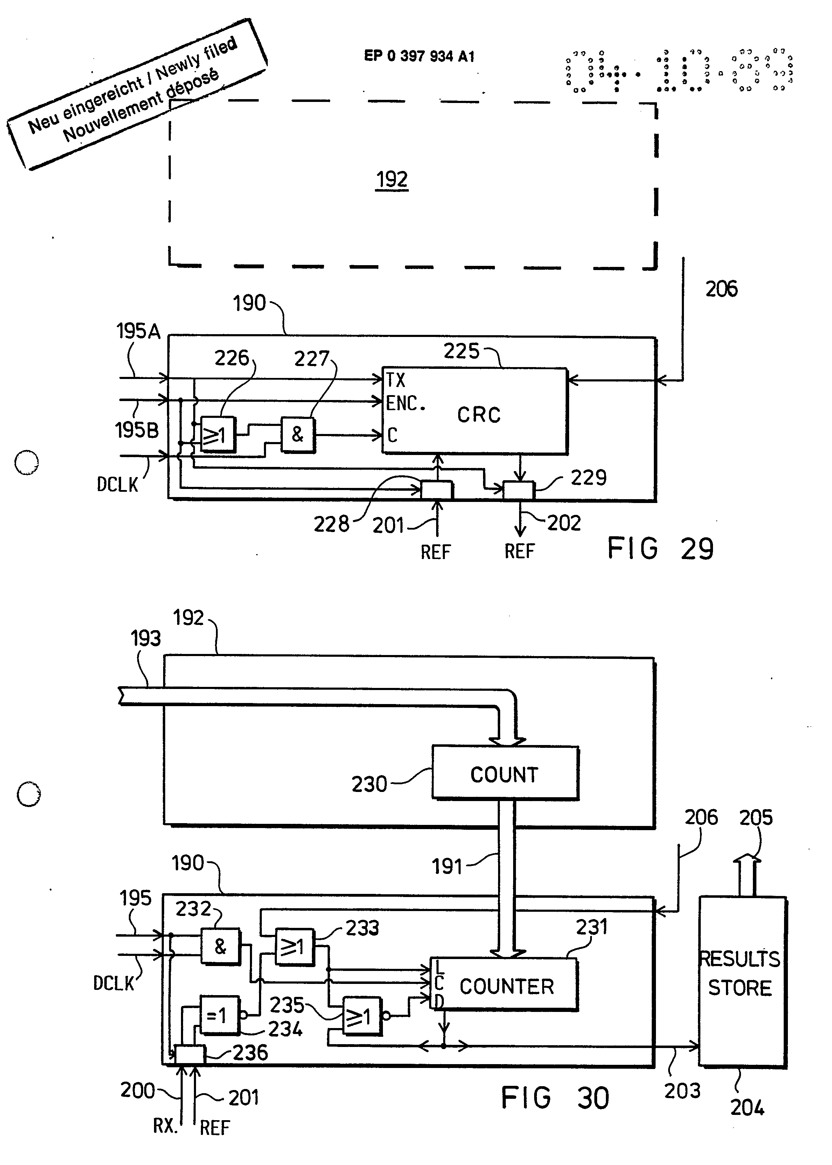

Figure 29 shows the details of the initialisation register block 192 and the device logic block 190 of the CRC device 42 (Figure 7). The device logic block 190 has two modes of operation, these being a bit-sinking or encoding mode in which it listens to the serial bus 11 to generate a CRC code, and a bit-sourcing or transmit mode in which it sources the generated CRC code onto the serial bus 11. More selection is effected by signals appropriately applied to an encode-enable input ENC and a transmit -enable input TX of the unit 225, these signals being provided on lines 195 A and B from the method register 194. When the CRC device is operating in a background or bit-sinking mode, an enable signal is provided on line 195A whereas when the device logic block 190 is to operate in a foreground or bit-sourcing mode, an enable signal is provided on line 195B.

In the present embodiment of the CRC device a fixed CRC generating polynomial is used and no provision is made for programming characteristics of the CRC function. Accordingly, the initialisation register block 192 is, in fact, not required. The device logic block 190 comprises a CRC generating unit 225 of a standard form having a clocking input C. When encoding, the CRC device is arranged to receive the signal on line REF via the line 201 and an interface 228, while during code transmission, the CRC device is arranged to output the generated code via an interface 229 and a line 202 to the line REF of the serial bus. The interfaces 228 and 229 are respectively enabled only when the unit 225 is operating in its corresponding mode, this enabling being effected by the signals carried on the lines 195A and B.

The clocking signal provided to the clock input C of the CRC unit 225 is provided from the output of an AND gate 227 fed with the clock signal DCLK and with the output of an OR gate 226 connected to the lines 195A and 195B. When the device logic block 190 is enabled to operate in either of its modes the clock DCLK will therefore be fed to clock input C of the unit 225.

## Comparison Device

Figure 30 shows the details of the initialisation register block 192 and the device logic block 190 for a comparison device which is arranged to compare a received stream with a generated reference stream and to feed the results of the comparison into the results store 204. More particularly, the present comparison device is an error counter arranged to count error runs made up of consecutive errored bits, having a run length equal to or greater than a programmable count value (for example an error run length equal to or greater than four).

The required minimum error run length is programmed as a count into a register 230 of the initialisation register block 192. At the start of a cycle of operation on the device logic block 190, this count value is downloaded from the register 230 into a counter 231 of the block 190. A cycle of operation of the device logic block is initiated either by the presence of a reset signal RST on the reset line 206, or the matching of the current bits on the receive line RX and the reference REF of the serial bus. To this end, the receive and reference lines of the serial bus are fed via lines 200 and 201 and an interface 236 to an exclusive OR gate 234 with an inverting output, this output being connected to an OR gate 233 also fed with the reset line 206. The output of gate 233 is connected to a load-enable input L of the counter 231. When the load-enable input L is enabled, the counter 231 will be loaded with the count held in register 230 at the next clocking of the counter 231 via its clock input C.

The counter 231 has a decrement-enable input D fed from the inverted output of an exclusive OR gate 235 one input of which is connected to the output of gate 231 and the other input of which is fed from a zero-count output of the counter 231 (this output is asserted when the count in the counter has been decremented to zero). As a result of this arrangement, the counter 231 will only be decremented in response to clocking at its output C, when the load-enable input is not asserted and there is a non-zero count value in counter 231.

The clocking input C of counter 231 is fed from the output of an AND gate 232 fed with the enable signal line 195 and with the device clock signal DCLK. The enable line 195 is also connected to the interface 236 to enable the latter only when the device logic block 190 is enabled.

In operation, for fields for which the comparison device is enabled, while the bit values on the lines RX and REF of the serial bus are the same, each clocking of the serial bus will simply result in the count 231 being reloaded from the register 230. However, if the values on the lines RX and REF differ, the count held in counter 231 will be decremented. Provided that the bit values on the lines RX and REF match before the count in counter 231 has reached zero, then no error measurement is recorded as the comparison device is looking for a predetermined number of consecutive errored bits. In the event that this predetermined number of errored bits is achieved corresponding to decrementing of the count held in counter 231 to zero, the assertion of the zero-count output from the counter 231 is passed via line 203 to the results store 204 where this error run is logged. The zero count signal is also fed back via gate 235 to prevent further decrementing of the counter 231 in the event that the run of errored bits continues. Each run of errored bits that exceeds the threshold count level is treated as one error measurement regardless of its length.

Slip Device

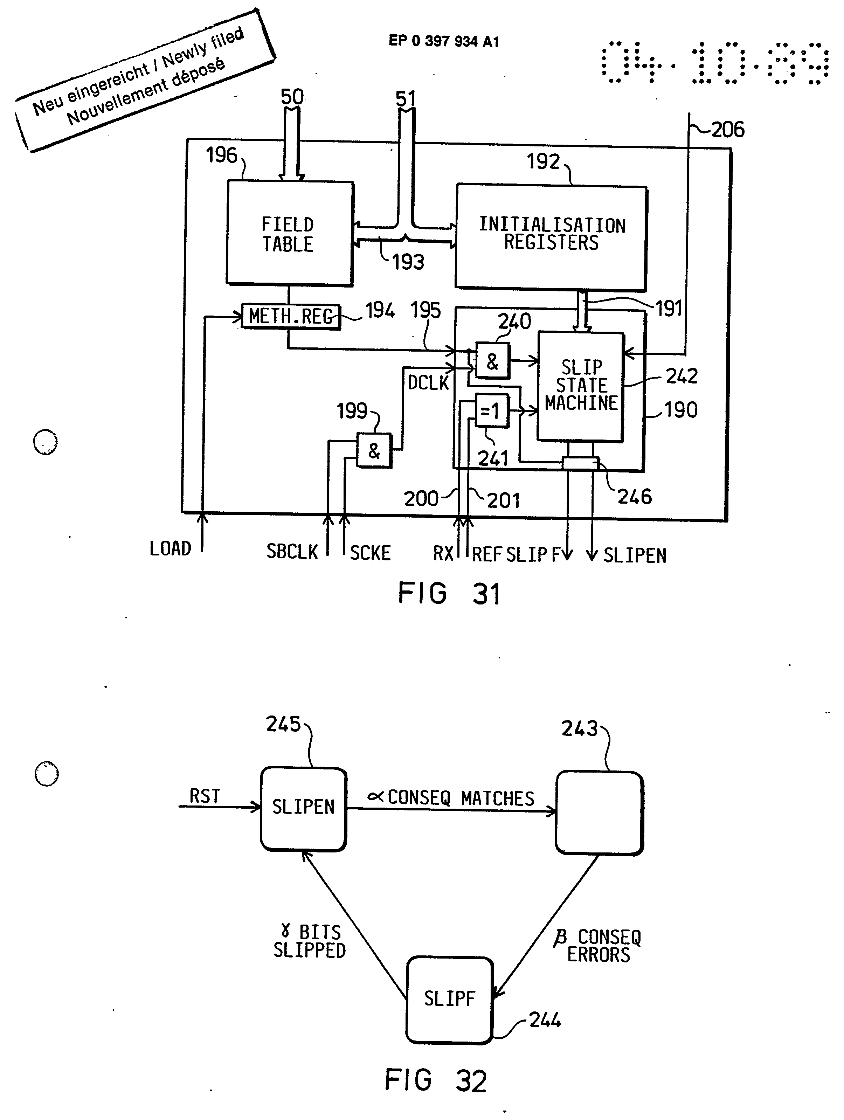

Figure 31 is a diagrammatic representation of the slip device or slip controller 44 of Figure 7. The slip device 44 from the generic device form shown in Figure 26 inasmuch as the slip device is not provided with a slip unit 197 with the result that the gate 199 is fed with only two inputs, namely the serial bus clock signal SBCLK and the clock enable signal SCKE. Furthermore, as the slip device does not produce measurement results, the results store 204 is not present.

The purpose of the slip device is, as already explained, to detect the frame lock (alignment) and out-of-lock (misalignment) conditions between a received serial stream on the line RX and a reference stream generated on the line REF in accordance with the format programs run by the orchestrator 13. The in-lock and out-of-lock conditions are judged on the basis of discrepancies between the received and reference streams during processing of framing fields of the reference stream. When the slip device 44 judges the reference and receive streams to be in lock (frame alignment) then both the signals SLIPEN and SLIPF are de-asserted whereas when a slip device 44 judges there to be misalignment between the received reference streams, one or other of the slip signals SLIPEN and SLIPF will be asserted with a view to bringing about alignment. The general principle of operation of such slip controllers is well known to persons skilled in the art and, accordingly, only a simple example will be given herein to illustrate how the known principles of operation of such a controller are applied in the context of a bit processing device connected to the serial bus 11.

For the example now to be described, the initialisation register block 192 is arranged to hold three programmable values $\alpha$, $\beta$ and $\gamma$. The value $\alpha$ is the number of successive bit matches between received and referenced streams required for frame alignment to be adjudged starting from a condition of misalignment. The value $\beta$ is the number of consecutive bit errors required before a judgement will be made that the reference and serial stream have moved from frame alignment into an out of alignment state. The value $\gamma$ specifies the length of a bit slip to be forced upon frame misalignment being detected, it having been established empirically, for example, that a forced slip of such a magnitude speeds the re-attainment of frame alignment.

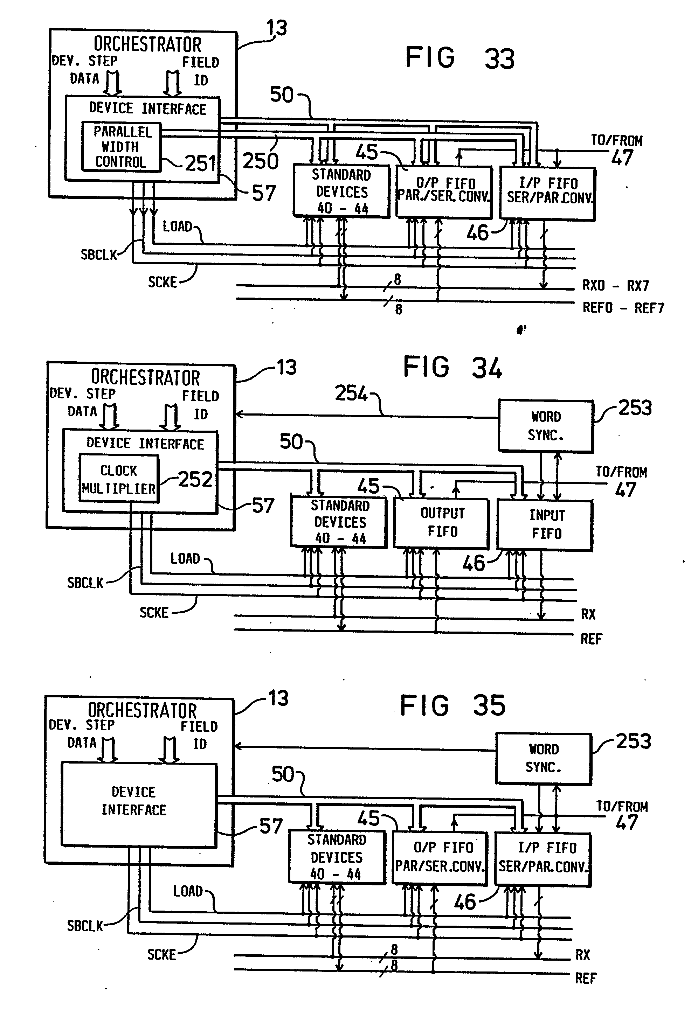

The device logic block 190 of the slip device comprises a slip state machine unit 242, an AND gate 240, and an exclusive OR gate 241. The gate 240 passes the device clock signal DCLK to the slip state machine 242 upon the slip device being enabled (that is, during the reference-stream framing field associated with the device). The gate 241 is fed with the reference and received streams and outputs an error signal upon mismatch between bit values of the streams, this error signal being fed to the unit 242. The slip state machine unit 242, in addition to receiving the outputs of gates 240 and 241, is connected to the bus 191 to permit the values $\alpha$, $\beta$ and $\gamma$ to be downloaded into the unit. The unit 242 has two outputs which are respectively connected to the lines SLIPF and SLIPEN of serial bus 11 via an interface 246 that is only enabled when the device logic block 190 is enabled via the line 195. Finally, the unit 242 is connected to the reset signal line 206. The slip state machine unit 242 includes a number of counters and a three-state state machine the state transition diagram of which is shown in Figure 32. The three possible states of the state machine are an in-lock state 243, an out-of-lock jump state 244, and an out-of-lock search state 245.

Initially upon the serial stream machine 10 being set to receive a serial stream, the state machine of the unit 242 is reset into its out-of-lock search state 245 in which the unit 242 asserts the signal SLIPEN enabling slipping of the reference stream relative to the C stream during the relevant framing field of the reference stream.

Upon the unit 242 detecting the occurrence of $\alpha$ consecutive bit matches between the received and reference streams during a framing field for which the device is enabled, the state machine of the unit 242 transits from the out-of-lock search state 245 to the in-lock state 243; in this latter state neither SLIPEN or SLIPF is asserted so that slipping of the reference stream relative to the receive stream is not permitted. However in state 243, the unit 242 monitors errored bits and upon the occurrence of a run of $\beta$ consecutive errors between the received reference lines, the unit 242 judges that alignment has been lost and transits from state 243 to the out-of-lock jump state 244. In state 244 the unit 242 asserts the signal SLIPF for $\gamma$ bits of the relevant framing field to cause a $\gamma$-bit slip whereby to facilitate realignment. Upon completion of the $\gamma$-bit slip, the unit 242 transits from state 244 back to the out-of-lock search state 245 where alignment is sought in the manner already described.

Modified Forms of Figure 7 Serial Stream Machine

Various modifications are, of course possible, to the form of the serial stream machine shown in Figure 7 and three such modified forms of serial stream machine are described below, by way of example, with reference to Figure 33 to 35.

Figures 33 to 35 are diagrams similar to Figure 7 but simplified to facilitate an understanding of the modified forms of serial stream machine. More particularly, the workstation 53, interface unit 52 and auxiliary bus 51 have been omitted for clarity as have the lines BUSY, SLIPEN and SLIPF and the line code device 47; furthermore, the bit-processing devices have been condensed into three devices, namely a general device representative of devices 40 to 44, the output FIFO device 45 and the input FIFO device 46. With regard to the orchestrator 13, in Figures 33 to 35 only the device interface 57 has been illustrated (this device interface being either the unitary interface of the formats processor implementation of the orchestrator, or a representative one of the multiple device interfaces provided where the orchestrator is implemented as a plurality of discrete format engines).

In the form of serial stream machine shown in Figure 33, the bit-processing devices 40 to 46 are arranged to process several bits at each activation clocking from the orchestrator 13 and to source/sink these bits in parallel onto the serial bus. To this end, in the present example, the serial bus is provided with eight reference lines REF 0 to REF 7 (the reference sub bus) and eight receive lines RX0 to RX7 (the receive sub bus) connected in parallel between the various bit-processing devices. The reference sub-bus lines REF 0-7 feed the output FIFO 45 and the latter is provided with a parallel-to-serial converter, upstream of its FIFO memory, to convert the parallel stream received on the reference lines of the serial bus into a serial stream prior to being passed to the line encoder 47. Similarly, the input FIFO 46 is provided at its side interfacing with the receive sub-bus lines RX0-7 of the serial bus with a serial-to-parallel converter for converting the serial signal coming from the line (de)coder 47 into a parallel stream.

Of course, although the reference and receive sub-buses of the serial bus are both eight bits wide, it will not always be possible for the devices 40 to 46 to process eight bits at each activation clocking since the number of bits to be processed, or remaining to be processed, for a particular step may be less than eight. Accordingly, the devices 40 to 46 are arranged to be instructable to process any number of bits between one and eight and to source/sink these bits to/from particular lines of the reference and receive sub buses; this instruction of the devices is effected, via a width-control bus 250, by a parallel-width control unit 251 of the device interface 57 of the orchestrator 13.

The width control unit 251 determines, prior to each activation clocking of the devices via the signals SBCLK and SCKE, the number of bits to be processed in parallel by the devices. The width number will, in the present example, be eight unless the number of bits still to be processed for the current step is less than this, in which case the width number, is set by this lesser number. Having determined the width number, this number is output over the bus 250 to the devices 40 to 46, the number being clocked into the devices upon assertion of the signal LOAD. The device interface 57 is, of course, arranged to defer assertion of the signal LOAD and activation clocking of the devices until after the width number has been determined.

Upon clocking of the devices, the enabled devices process the number of bits specified by the width number set via the width control bus 250. At the same time, the BR and FB values that control the operation of the device interface (for example, the values held in the counters 77 and 78 of the Figure 23 device interface), are decreased by a number equal to the width number.

During the processing of framing fields (EXECF instructions), the unit 251 sets the width number to one and the serial stream operates in standard manner thereby avoiding complications otherwise introduced by bit slipping during theses fields.

The Figure 33 form of serial stream machine facilitates the generation and reception of higher rate bit streams due to its partly parallel processing of bits.

The modified forms of serial stream machine show in Figures 34 and 35, both relate to arrangements where each bit programmed in a format program is treated at the device level as having a multi-bit significance (for example, each programmed bit is treated as representing an eight-bit word or Octet); in the Figure 34 arrangement, it is the device interface 57 of the orchestrator that assigns multi-bit significance to programmed bits whereas in Figure 35, the devices themselves carry out this interpretation.

Referring to Figure 34, the devices 40 to 46 and the serial bus are of the same form as in Figure 7; however, the device interface 57 of the orchestrator 13 is now provided with a clock multiplier unit 252. The function of the unit 252 is to cause multiple clockings on the serial-bus clock line SBCLK for each internally perceived serial-bus clocking (internally, that is, of the device interface) at least while the signal SCKE is asserted. Thus, for example, the unit 252 may be arranged to cause eight clockings of the devices 40 to 46 of which the rest of the device interface 57 only perceives the eighth one. The effect of this is that for each bit that the rest of the device interface 57 perceives as being processed, the unit 252 causes the devices 40 to 46 to process eight bits.

While such an arrangement is straightforward to implement for transmission of a serial stream, matters are more complex when a serial stream is to be received. More particularly, it must be possible to consider the received stream as being made up of multi-bit words the boundaries of which can be detected without prior decomposition of the stream onto its hierarchical format structure. Assuming this criteria is met, the word boundaries are detected by a word-synchronisation unit 253 fed from the line decoder 47. This unit 253 is operative to inhibit the orchestrator 13 via line 254 until the unit has locked onto the word boundaries and then, when the unit 255 has locked onto the word boundaries, to enable the orchestrator and inform the input FIFO 46 of the word-boundary locations. The input FIFO 46 thereafter ensures that for each multiple clocking on line SBCLK, it sources bits onto the receive line RX starting with the first bit in a received word; as a result, the devices will always process a single, complete word in correspondence to the orchestrator 13 registering the processing of one bit. To ensure that the input FIFO 46 is aware of the start of a multiple clocking sequence corresponding to one programmed bit, the clocking enable signal SCKE can be briefly deasserted between such sequences.

So far as the devices are concerned, framing alignment between reference and received streams during framing fields is carried out on the basis of a word-slip-on-error; however, so far as the orchestrator is concerned, the alignment process is still one of bit-slip-on-error. More particularly, if a slip device is asserting the SLIPEN or SLIPF line, then on the occurrence of a disparity between the bits of a reference word and a received word, the relevant reference-stream sourcing device is set to repeat the word when next enabled and activated, and the FB counter in the orchestrator is not clocked to decrement the programmed field bit count. In order to enable the sourcing devices to repeat their last-output word, the devices are provided with a last-word store in the form of a FIFO, arranged to hold the last-output word. The output of this FIFO is fed to a 2:1 multiplexer, the other input of which is fed from the bit-generating logic of the device; the output of the multiplexer forms the output of the device and is connected to the reference line REF. The multiplexer normally connects the bit-generating logic to the reference line but following the detection of a disparity between a reference word output by the device and a received word, the slip unit of the device is operative to connect the last-word FIFO to the reference line so that when next enabled and activated, the last word output is repeated. Clocking of the bit-generating logic of the device is, of course, suspended during the repeat of a previously output word.

In the form of the serial stream device shown in Figure 35, a programmed-bit to word transformation is effected in the bit-processing devices themselves. The orchestrator 13 operates substantially as described for the Figure 7 orchestrator with the exception that, during reception of a serial stream, the orchestrator is arranged to be inhibited until a word sychronisation 253, similar to that of Figure 34, has locked onto the word boundaries of the received stream. The bit-processing devices are now, however, arranged to process a word upon each clocking activation from the orchestrator. To this end, the serial bus is provided with multiple-line reference and receive sub buses (in the present example, these sub buses have eight lines each) whereby at each clocking, the enabled devices source/sink eight bits in parallel to/from the serial bus. To convert between these parallel streams and the serial streams handled by the line coder 47, the output FIFO 45 is provided with a parallel-to-serial converter and the input FIFO 46 is provided with a serial-to-parallel converter.

During transmission of a serial stream, the enabled bit sourcing device outputs an eight-bit word in parallel onto the reference sub-bus and this word is converted into serial form by the output FIFO 45. During reception of a serial stream, the word synchronisation unit 253 first locks onto the word boundaries; thereafter, the unit 253 enables the orchestrator and informs the input FIFO device 46 the location of the word boundaries. The input FIFO device 46 is then operative to place the bits of each word received on predetermined ones of the lines of the receive sub bus thereby facilitating comparison with the bits of the reference-stream words.

With respect to slipping of the reference stream relative to the received stream to effect alignment between these streams during framing fields of the reference stream, as with the Figure 34 embodiment, upon the detection of a disparity between a reference word and a received word while SLIPEN or SLIPF is asserted, the bit-sourcing device is arranged to repeat the reference word it has just output at its next clocking activation from the orchestrator. This can be achieved with a last-word store arrangement similar to that described above in respect of Figure 34 except that now the store is loaded and unloaded in a parallel manner.

It will be appreciated that although the embodiments described above all relate to serial stream machines for transmitting/receiving a serial bit stream on a single line, it is, of course, possible to provide machines in which bit streams are tranmitted/received in parallel from (for example, on eight parallel lines). The term "bit-stream machine" is appropriate to encompass both forms of machine.

## Claims

1. A bit-stream machine for transmitting and/or receiving a bit stream having a hierarchical format structure in which a plurality of single-level formats, each composed of a plurality of fields of one or more bits, inter-depend in the manner of a tree-structured hierarchy of multiple levels with each lower-level format in that hierarchy specifying the structure of a corresponding field of a higher-level format of the hierarchy, the fields of said single-level formats which are not further specified in a dependent format constituting leaf fields of the hierarchical format structure; characterised in that said machine comprises:
- a bit-stream bus (11),
- a plurality of bit-processing devices (12) connected to the bit-stream bus (11), each said device comprising processing means (190) operative when said device is enabled and activated, to process bits in a predetermined manner to source/sink bits to/from the bus (11), and
- an orchestrator (13) connected to said devices (12) to orchestrate their operation by controlling the enabling and activation of the devices, said orchestrator (13) comprising:
- program memory means (15) for storing an overall format program comprising a plurality of device instructions (EXEC,EXECF) each specifying a number of bits to be processed in connection with a said leaf field, said instructions being inter-associated such as to enable them to be stepped through in a sequence corresponding to the sequence, hereinafter the leaf-field step sequence, of said leaf fields, that is determined by said hierarchical format structure when account is taken on accessing the or each said single-level format, other than the top level one, of the bit width of the field further specified by the single-level format,
- sequencer means (16) operate to step through said instructions in correspondence with said leaf field step sequence and to output enable signals to enable selected ones of said devices (12) in dependence on the current leaf-field step sequence position reached by the reached by sequencer means (16) in its sequencing of said instructions, and
- bit control means (17) connected to said sequencer means (16) and operative for the current leaf-field step sequence position reached by the sequencer means, to output activation signals to activate enabled ones of said devices (12) to process one or more bits as appropriate for the said current sequence position.

2. A bit-stream machine according to claim 1, wherein the orchestrator (13) is connected to said devices (12) by a broadcast-type communications arrangement (14) for passing said enable signals and said activation signals to all said devices (12).

3. A bit-stream machine according to claim 1, wherein said sequencer means (16) is operative to output, as said enable signals, a field identifier uniquely identifying to said devices (12) the leaf field corresponding to the said current sequence position of the sequencer means, said field identifier being passed to all said devices and each said device (12) including enable means (194, 196) responsive to a predetermined one or ones of said field identifiers to enable that device.

4. A bit-stream machine according to claim 3, wherein said enable means comprises a look-up table means (196).

5. A bit-stream machine according to claim 1, wherein said bit control means (17) is operative to output, as said activation signals, clocking signals for clocking the processing of each said bit in turn, each said device (12) including activation means (199, 214) operative when said device is enabled to initiate processing of a bit by said device at each occurrence of said clocking signals.

6. A bit-stream machine according to claim 5, wherein said clocking signals comprise a continuous clock signal, (SBCLK) and a clock enable signal (SCKE), the latter being asserted by said bit control means (17) to cause enabled devices (12) to process one or more bits with a timing determined by said clock signal.

7. A bit-stream machine according to claims 2, 3 and 6 in combination, wherein said communications arrangement (14) comprises a field bus (50) for passing said field identifier to all such devices (12), a clock signal line (SBCLK) for passing said continuous clock signal to all said devices, and a clock enable line (SCKE) for passing said clock enable signal to all said devices.

8. A bit-stream machine according to claim 1, wherein the said processing means (190) of at least one said device (12) is programmable such as to set characteristics of the processing which said processing means is operative to effect when said at least one device is enabled and activated.

9. A bit-stream machine according to claim 1, wherein the said program memory means (15) is re-programmable whereby to permit different format programs to be stored therein and run by said orchestrator (13).

10. A bit-stream machine according to claims 4, 8 and 9 in combination, further comprising control processor means (53) connected to said devices (12) and said orchestrator (13) and by means of which the said look-up table means (196), the said processing means (190) of said at least one device, and said program memory means (15) can be programmed for different hierarchical formats.

11. A bit-stream machine according to claim 1, wherein the said processing means (190) of at least one said device (12) is operable in any one of a plurality of modes, the mode used to process any particular bit being determined by the said current leaf field step sequence position of said sequencer means (16).

12. A bit-stream machine according to claims 4 and 11 in combination, wherein the said look-up table means (196) of said at least one device (12) is used to store the identity of the said mode in which the device is to operate for the or each field for which the device is enabled, said processing means (190) being responsive to the device being enabled to set itself into the appropriate said mode.

13. A bit stream machine according to claim 1 for transmitting a bit stream, wherein said plurality of devices comprises transmit devices (40, 41,42) the said processing means (190) of which are operative to source bits to said bus (11), said machine being operative such that only one said transmit device at a time is enabled to source bits to said bus.

14. A bit-stream machine according to claim 13, wherein at least one said transmit device (40,41) is a data-independent transmit device the processing means (190) of which is operative to generate bits in a predetermined manner independent of the data content of bits previously sourced to said bus (11) by said devices.

15. A bit-stream machine according to claim 13 in combination with claim 11, wherein at least one said transmit device (42) is a data-dependent transmit device the processing means (190) of which is operative to generate bits in a manner dependent on the data contents of bits previously sourced to said bus (11) by said devices, said data-dependent transmit device (42) being operative both:
- in a first said mode to sink bits from said bus (11) during sourcing by one or more other said transmit devices (40,41),
- in a second said mode to source bits onto said bus, these latter bits being generated by said processing means (190) with reference to said bits received from said bus when the device (42) is operating in its first mode.

16. A bit-stream machine according to claim 1 for receiving a bit stream, wherein said bit-stream bus (11) includes a receive sub-bus (RX) for receiving said bit stream, said plurality of devices comprising generate-and-compare devices and the said processing means (190) of each such device being operative, for the fields of said hierarchical format for which the device is enabled, to:
- generate internally a reference bit sequence in accordance with the corresponding said field of said hierarchical format, and
- sink bits from said receive sub-bus and compare them with said reference sequence.

17. A bit stream machine according to claim 1 for receiving a bit-stream, wherein said bit-stream bus (11) comprises a receive sub-bus (RX) for receiving said bit stream and a reference sub-bus (REF), said plurality of devices comprising:
- generate devices (40 to 42) the said processing means (190) of which are operative to generate and source to said reference bus (REF) a reference bit sequence structured according to said hierarchical format, and
- compare devices (43) the said processing means (190) of which are operative to sink and compare bits from said receive and reference sub-buses (RX, REF).

18. A bit-stream machine according to any one of the preceding claims, wherein said bit-stream bus (11) comprises a first number of lines (RX,REF)for sinking/sourcing bits from/to said bit-processing devices (12), each said device being operative when enabled, to source/sink a second number of bits in parallel to/from said lines of the bit-stream bus (11) at each activation by said bit-control means (17) of said orchestrator (13), said bit control means (17) being operative to set the value of said second number, for enabled ones of said devices (12), within an upper limit determined by the lower of the value of said first number and the number of bits remaining to be processed for the said current sequence position of the said sequencer means (16).

19. A bit-stream machine according to any one of claims 1 to 17, wherein each bit specified in a said device instruction (EXEC, EXECF,SWITCH) is interpreted by said bit-stream machine as representing a multi-bit word, said bit-processing devices (12) being operative to source/sink multi-bit words to/from the bit-stream bus (11) in a number and order corresponding to the number and order of bits determined by said device instructions.

20. A bit-stream machine according to claim 1, wherein said overall format program is organised as a plurality of sub programs each corresponding to a respective one of said single-level formats, each sub program that relates to a single level format including a field further specified in a dependent format, having a corresponding switch instruction (SWITCH) that identifies said dependent format.

21. A bit stream machine according to claim 1, wherein said overall format program is organised as a single sequence of device instructions ordered as said leaf-field step sequence.

## FIG 1A

| F1 | F2 | F3 | F4 | F5 |
|---|---|---|---|---|
| 1 bt FRAME | 3 bts DATA | 2 bts DATA | 4 bts DATA | 4 bts DATA |

SINGLE – LEVEL FORMAT

## FIG 1B

| F1 | F2 | F3 | F4 | F5 |
|---|---|---|---|---|
| 1 bt FRAME | 3 bts DATA | 2 bts DATA | 4 bts DATA | 4 bts DATA |

FIRST – LEVEL (ROOT) FORMAT

| F6 | F7 | F8 |
|---|---|---|
| 1 bt FRAME | 3 bts DATA | 2 bts DATA |

SECOND – LEVEL FORMAT

| F9 | F10 |
|---|---|
| 2 bts FRAME | 4 bts DATA |

THIRD – LEVEL FORMAT

Neu eingereicht / Newly filed
Nouvellement déposé

EP 0 397 934 A1

FIG 2

| FIELD EXPANSION TABLE | | | |
|---|---|---|---|
| FOR SEVEN PASSES OF FIG.18 ROOT FORMAT | | | |
| 1st Level | 2nd Level | 3rd Level | LFS Cycle |
| **1st PASS**<br>F1:1<br>F2:3<br>F3:2<br>[F4]:4 → F6:1<br>→ [F7]:3 → F9:1<br>→ F10:2<br>F5:4 | | | F1:1<br>F2:3<br>F3:2<br>F6:1<br>F9:1<br>F10:2<br>F5:4 |
| **2nd PASS**<br>F1:1<br>F2:3<br>F3:2<br>[F4]:4 → F8:2<br>→ F6:1<br>→ [F7]:1 → F10:1<br>F5:4 | | | F1:1<br>F2:3<br>F3:2<br>F8:2<br>F6:1<br>F10:1<br>F5:4 |
| **3rd PASS**<br>F1:1<br>F2:3<br>F3:2<br>[F4]:4 → [F7]:2 → F9:1<br>→ F8:2 → F10:1<br>F5:4 | | | F1:1<br>F2:3<br>F3:2<br>F9:1<br>F10:1<br>F8:2<br>F5:4 |
| **4th PASS**<br>F1:1<br>F2:3<br>F3:2<br>[F4]:4 → F6:1<br>→ [F7]:3 → F10:2<br>F9:1<br>F5:4 | | | F1:1<br>F2:3<br>F3:2<br>F6:1<br>F10:2<br>F9:1<br>F5:4 |
| **5th PASS**<br>F1:1<br>F2:3<br>F3:2<br>[F4]:4 → F8:2<br>→ F6:1<br>→ [F7]:1 → F10:1<br>F5:4 | | | F1:1<br>F2:3<br>F3:2<br>F8:2<br>F6:1<br>F10:1<br>F5:4 |
| **6th PASS**<br>F1:1<br>F2:3<br>F3:2<br>[F4]:4 → [F7]:2 → F10:2<br>→ F8:2<br>F5:4 | | | F1:1<br>F2:3<br>F3:2<br>F10:2<br>F8:2<br>F5:4 |
| **7th PASS**<br>F1:1<br>F2:3<br>F3:2<br>[F4]:4 → F6:1<br>→ [F7]:3 → F9:1<br>→ F10:2<br>F5:4 | | | F1:1<br>F2:3<br>F3:2<br>F6:1<br>F9:1<br>F10:2<br>F5:4 |

04·10·89

## FIG 3A

## FIG 3B

04·10·89

ORCHESTRATOR

PROGRAM MEMORY

BIT CONTROL

LFS SEQUENCER

COMMS.WAY

BIT PROC. DEVICE

BIT PROC. DEVICE

BIT PROC. DEVICE

BIT PROC. DEVICE

BIT PROC. DEVICE

SERIAL BUS

FIG 4

## FIG 5A

| F1 | F2 | F3 | F4 | F5 |
|---|---|---|---|---|
| 1 bt FRAME | 3 bts DATA | 2 bts DATA | 4 bts DATA | 4 bts DATA |

20

**PATTERN #1**

21

**PRBS #1**

22

**PATTERN #2**

24

**CRC #1**

**PRBS #2**

23

## FIG 5B

| F1 | F2 | F3 | F4 | F5 |
|---|---|---|---|---|
| 1 bt FRAME | 3 bts DATA | 2 bts DATA | 4 bts DATA | 4 bts DATA |

20

**PATTERN #1**

21

**PRBS #1**

22

**PATTERN #2**

25

**PATTERN #3**

24

**CRC #1**

| F6 | F7 | F8 |
|---|---|---|
| 1 bt FRAME | 3 bts DATA | 2 bts DATA |

27

**PATTERN #4**

| F9 | F10 |
|---|---|
| 2 bts FRAME | 4 bts DATA |

26

**PATTERN #5**

28

**PRBS #2**

ORCHESTRATOR    COMMS. WAY    DEVICE.

FIG 6A

30    31              32

| SEQUENCE THRU' LFS CYCLE | FIELD ID TO DEVICE ID | → DEVICE ID | ENABLE DEVICE |

FIG 6B

30              33

| SEQUENCE THRU' LFS CYCLE | → FIELD ID | ENABLE DEVICE |

FIG 6C

34          36    37

| LOAD COUNT | → BIT COUNT | CLOCK LOADED COUNT | PROCESS BITS |
| INITIATE CLOCK | → BIT CLOCK | | |

35

FIG 6D

38          37

| INITIATE & COUNT CLOCK | → COUNTED CLOCK | PROCESS BITS |

FIG 7

EP 0 397 934 A1

FIG 8

# FORMAT ENGINE

FORMAT PROGRAM MEMORY — 55
DEVICE INSTR
SWITCH INSTR
LOOP INSTR

SEQUENCE CONTROLLER 62    61    60    56

BIT CONTROL    FIELD SEQUENCER    FORMAT CONTROL

66    65    63

STEP WIDTH DELIMITER    INSTRUCTION SEQUENCER    REQUEST-IN INTERFACE

n BIT REQUEST

64

REQUEST-OUT INTERFACE

m BIT SUB-REQUEST

67    CONTROL

STEP WIDTH INFO.    FIELD ID

DEVICE INTERFACE — 57

50

11    BUSY SBCLK    FIELD NO.
SCKE  LOAD

FIG 9

04·10·89

66

## STEP WIDTH DELIMITER

70

| PARAMETER SETTER | |
|---|---|
| "field bits" | "bits requrd" |

FIELD WIDTH →

FBR →

"n" ←

← BRR

FBS

BRS

71

DETERMINING MEANS

FBR (new)

BRR (new)

STEP WIDTH INFO.

## FIG 10

04·10·89

FORMAT PROGRAM MEMORY — "EXEC: FIELD NO: FIELD WIDTH" "EXECF: FIELD NO: FIELD WIDTH" "LOOP" — 55

56

BIT CONTROL

FIELD SEQUENCER 65

FORMAT CONTROL

STEP WIDTH DELIMITER 66

70

75 — BR REG
76 — FB REG

PARAM. SETTER

INSTRUCTION SEQUENCER

73 — INSTR REG

REQUEST-IN INTERFACE 63

BIT REQ. REG — 72

RTRN. FMT REG — 83

n BIT REQUEST

PC

74

71 — WIDTH DETERMNTN

77 — BR CNTR
78 — FB CNTR
79

COUNT DOWN

EBC

CONTROL — 67

SLIP

SLIP UNIT 81

89

EXECF

& 

1

88

SB CLOCK

82

DEVICE INTERFACE — 57

LOAD    FIELD NO. — 50

REF  SLIPEN  BUSY  SCKE  SBCLK
RX   SLIPF

FIG  11

EP 0 397 934 A1

04·10·89

START 93

BIT CONTROL

FIELD SEQUENCER

FORMAT CONTROL

LOAD BTRQ REG & RT FMT REG 94

GET INSTR. 95

LOOP ? 96

Y → RESET PC 97

N | EXEC$_V$EXECF

O/P FIELD 98

100 — DETERMINE FBS. BRS

101 — LOAD CNTRS WITH FBS.BRS

102 — ENABLE BIT CLOCKING / UPDATE CNTRS UP ON SB CLKNG

103 — TEST CNTRS

{FB CNTR}= 0

INCR.PC

104

OTHER

NEITHER ZERO

105 — LOAD REGS WITH FBR BRR

106 {BR CNTR} = 0 ?

N

Y

107 — RETURN DONE

108 — STOP

FIG 12

START — 110

{FB REG} = 0 ? — 111

N

Y

112 — FBS ←
{FB REG}

113 — FBS ←
INSTR. WIDTH

{BR REG} = 0 ? — 114

N

Y

115 — BRS ←
{BR REG}

116 — BRS ←
BIT REQUEST

STOP — 117

FIG 13

FORMAT PROGRAM MEMORY — "EXEC: FIELD NO: FIELD WIDTH" "EXECF: FIELD NO: FIELD WIDTH" "SWITCH: FORMAT ID: FIELD WIDTH" "LOOP" — 55

56

BIT CONTROL

FIELD SEQUENCER 65

FORMAT CONTROL

STEP WIDTH DELIMITER 66
70
75 BR REG
76 FB REG
PARAM. SETTER

71 WIDTH DETERMNTN
77 BR CNTR
78 FB CNTR
COUNT DOWN
79
85 CALCULATION
71

INSTRUCTION SEQUENCER
73 INSTR REG
PC
74

REQUEST-IN INTERFACE 63
BIT REQ. REG 72
RTRN. FMT REG 83

n BIT REQUEST

REQUEST-OUT INTERFACE 64
CUR. FMT REG 84

m BIT SUB REQUEST

EBC

CONTROL — 67

SLIP
EXECF
89 &
88 1
SB CLOCK
81 SLIP UNIT

DEVICE INTERFACE 57

REF  SLIPEN  BUSY  SCKE  SBCLK
RX  SLIPF
82
50
LOAD  FIELD NO.

FIG 14

04.10.89

93 START

BIT CONTROL | FIELD SEQUENCER | FORMAT CONTROL

LOAD BTRQ REG & RT FMT REG — 94

100 DETERMINE FBS. BRS

101 LOAD CNTRS WITH FBS.BRS

102 ENABLE BIT CLOCKING UPDATE CNTRS UP ON SB CLKNG

103 {FB CNTR}= 0

TEST CNTRS — NEITHER ZERO

INCR.PC — OTHER

104

105 LOAD REGS WITH FBR BRR

95 GET INSTR.

96 LOOP ?

97 RESET PC Y

131 OPCODE ?

98 O/P FIELD — EXEC/EXECF — SWITCH

106 {BR CNTR} = 0 ? N Y

132 DETERMINE FBS. BRS

133 FBS > BRS = Y N

134 BIT REQST ← FBS

135 BIT REQST ← BRS INCR. PC

136 DETERMINE FBR BRR LOAD REGS

137 LOAD BTRQ REG

138 DONE ? N Y

139 {BR REG} = 0 ? N Y

107 RETURN DONE

108 STOP

FIG 15

04·10·89

FORMAT PROGRAM MEMORY — 55

"EXEC: FIELD NO: FIELD WIDTH"
"EXECF: FIELD NO: FIELD WIDTH"
"SWITCH: FORMAT ID: FIELD WIDTH"
"LOOP"

56

BIT CONTROL

FIELD SEQUENCER

FORMAT CONTROL

STEP WIDTH DELIMITER — 66
70
BR REG — 75
FB REG — 76
PARAM. SETTER

WIDTH DETERMNTN — 71
BR CNTR — 77
FB CNTR — 78
COUNT DOWN
79
CALCULATION — 85

INSTRUCTION SEQUENCER — 65
INSTR REG — 73
PC — 74

REQUEST-IN INTERFACE — 63
BIT REQ. REG — 72
RTRN. FMT STACK — 86

REQUEST-OUT INTERFACE — 64
CUR. FMT REG — 84

n BIT REQUEST

CONFIG MEANS — 87

SUB REQUEST

EBC

CONTROL — 67

DEVICE INTERFACE — 57

SLIP
SLIP UNIT — 81
89
&
88
1
EXECF
SB CLOCK — 82
50

REF SLIPEN BUSY SCKE SBCLK LOAD FIELD NO.
RX SLIPF

FIG 16

24.10.89 _93
START

## BIT CONTROL

100 — DETERMINE FBS. BRS

101 — LOAD CNTRS WITH FBS.BRS

102 — ENABLE BIT CLOCKING — UPDATE CNTRS UP ON SB CLKNG

103 (FB CNTR) = 0
TEST CNTRS — NEITHER ZERO

INCR. PC — OTHER

104

105 — LOAD REGS WITH FBR BRR

106 — (BR CNTR) = 0 ?  N ... Y

## FIELD SEQUENCER

GET INSTR. _95

RESET PC ◄ Y — LOOP ? _96

97

131 — OPCODE ? — EXEC/EXECF — O/P FIELD — SWITCH

98

132 — DETERMINE FBS. BRS

133 — FBS > BRS — Y / N / =

BIT REQSI ◄ FBS

134

BIT REQSI ◄ BRS INCR. PC

135

136 — DETERMINE FBR BRR LOAD REGS

140

SWITCH ⇩ STK ◄ CFMT SET CFMT

## FORMAT CONTROL

LOAD BTRQ REG _94

BR REG = 0 ?  N / Y
144

141 — ROOT FORMAT ? — Y / N

142 — RETURN "DONE"

143 — SWITCH ⇧ CFMT ◄ STACK

## FIG 17

STOP _108

EP 0 397 934 A1

FIG 18

SWITCH  LOOP  EXEC  EXECF  FBBZ  BRBZ  BREQZ  RXRQ  STACKZ

160

STATE MACHINE

COUNT  RST  RSTPC  CKRQR  CKR  CKFMT  FETCH  DECODE  INCPC  CALC  STACK  UNSTACK  TXDN

FIG 19

EP 0 397 934 A1

FIG 20

EP 0 397 934 A1

$\overline{\text{RXRQ}}$

RST  A

RXRQ

CKRQR  B

1

FETCH  C

1

TXDN  M

1

D  DECODE

LOOP

RSTPC
FETCH  E

1

$\text{EXEC}_\text{V}\text{EXECF}$

SWITCH

$\overline{\text{BRBZ}}_\text{A}\overline{\text{FBBZ}}$

COUNT  F

P

CALC

$\overline{\text{BRBZ}}_\text{A}\overline{\text{FBBZ}}$

$\text{BRBZ}_\text{A}\overline{\text{FBBZ}}$

$\overline{\text{BRBZ}}_\text{A}\text{FBBZ}$

FBBZ

$\overline{\text{FBBZ}}$

CKR  G

CKR
INCPC  H

I  CKR
INCPC
FETCH

1

CKR
CKRQR
STACK
CKFMT
INCPC  Q

CKR
CKRQR
STACK
CKFMT  R

1

1

1

1

UNSTACK
CKFMT

1

J

$\overline{\text{BREQZ}}$

L  FETCH

K

$\overline{\text{STACKZ}}_\text{A}\overline{\text{BREQZ}}$

STACKZ

04·10·89

FBS   FBR(A)              BRS   BRR(A)

78 ── FB CNTR ◄──── LOAD ────► BR CNTR ──◄ 77

FBBZ(A)                     BRBZ(A)

1
164

&
161

162

&
162

SLIP  SBCLK  SCKE

FBBZ(A) BRBZ(A) MAV

163 ── COUNT DOWN
STATE MACHINE

LOAD    EBC

**FIG 21A**

$\overline{COUNT}$

AA

COUNT

LOAD   BB

1

EBC   CC

FBBZ(A)$_\lor$BRBZ(A)

$\overline{FBBZ(A)}_\land\overline{BRBZ(A)}$

**FIG 21B**

04·10·89

FIG 22

FIG 23

EP 0 397 934 A1

04·10·89

$\overline{MAV}$

PP

MAV

LDBUF
HOLD QQ

FIG 24

1

HOLD
LOAD RR

$MAV \wedge CC$

1

$\overline{MAV} \wedge CC$

$\overline{MAV} \wedge \overline{CC}$

EBC

SS

$MAV \wedge \overline{CC}$

$\overline{CC}$

CC

LDBUF
EBC
HOLD TT

FIG 25

COND.1 = $\overline{HOLD}_A FBBZ_A \overline{BRBZ}$

COND.2 = $\overline{HOLD}_A \overline{FBBZ}_A BRBZ$

COND.3 = $\overline{HOLD}_A \overline{FBBZ}_A BRBZ$

EP 0 397 934 A1

FIG 26

EP 0 397 934 A1

EP 0 397 934 A1

04·10·89

FIG 27

FIG 28

<u>192</u>

206

190

195A

226    227    225

TX
ENC.    CRC
C

195B

≥1    &

DCLK

228  201    229

REF    REF    202

FIG 29

193    192

COUNT

230

206  205

191

190

195    232    233    231

&    ≥1

DCLK

=1    235    COUNTER    RESULTS
STORE
234    ≥1
236

L
C
D

200    201

RX.    REF    FIG 30    203    204

04·10·89

FIG 31

FIG 32

EP 0 397 934 A1

04·10·89

**FIG 33**

ORCHESTRATOR — 13

DEV. STEP DATA    FIELD ID

DEVICE INTERFACE

PARALLEL WIDTH CONTROL — 251

50

250

45

57

STANDARD DEVICES 40 - 44

O/P FIFO PAR./SER.CONV.

I/P FIFO SER/PAR.CONV.

TO/FROM 47

46

LOAD

SBCLK

SCKE

8

8

RX0 - RX7

REF0 - REF7

**FIG 34**

ORCHESTRATOR — 13

DEV. STEP DATA    FIELD ID

254

WORD SYNC. — 253

DEVICE INTERFACE

CLOCK MULTIPLIER — 252

50

57

STANDARD DEVICES 40 - 44

OUTPUT FIFO

INPUT FIFO

TO/FROM 47

45

46

LOAD

SBCLK

SCKE

RX

REF

**FIG 35**

ORCHESTRATOR — 13

DEV. STEP DATA    FIELD ID

WORD SYNC. — 253

DEVICE INTERFACE

50

57

45

STANDARD DEVICES 40 - 44

O/P FIFO PAR/SER.CONV.

I/P FIFO SER/PAR.CONV.

TO/FROM 47

46

LOAD

SBCLK

SCKE

8

8

RX

REF

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | HEWLETT-PACKARD JOURNAL, vol. 36, no. 7, July 1985, pages 12-18, Amstelveen, NL; S.H. WITT et al.: "Simple architecture provides high performance for protocol analysis" * Page 12, right-hand column, paragraph 1; page 15, left-hand column, lines 13-16 * | 1-21 | H 04 L 1/24 H 04 L 12/16 |
| A | "Hewlett packard test and measurement catalog", 1988, Hewlett-Packard, Palo Alto, US * Page 494 * | 1-21 | |
| A | WO-A-8 806 318 (GRUMMAN) * Figure 2; claim 1 * | 1-21 | |
| A | JOURNAL OF PHYSICS E. SCIENTIFIC INSTRUMENTS, vol. 20, no. 1, January 1987, pages 100-101, IOP Publishing Ltd, Woodbury, NY, US; G. MANGAMMA et al.: "A microprocessor-controlled programmable pulse generator" * Figure 1 * | 1-21 | TECHNICAL FIELDS SEARCHED (Int. Cl.5) H 04 L H 04 M H 03 K G 01 R H 04 J G 06 F |

The present search report has been drawn up for all claims

| Place of search | Date of completion of the search | Examiner |
|---|---|---|
| THE HAGUE | 22-01-1990 | GEISLER J.A.R. |